# EUROPÄISCHE PATENTSCHRIFT

(11) **EP 4 659 956 B1**
(45) Veröffentlichungstag und Bekanntmachung des Hinweises auf die Patenterteilung: **02.09.2026**
(21) Anmeldenummer: 25203699.1
(22) Anmeldetag: 13.09.2011
(51) Int. Cl.: B29C 64/176, B29C 64/112, B29C 64/124, B29C 64/205, B29C 64/236, B29C 64/245, B29C 64/393, B33Y 10/00, B33Y 30/00, B33Y 50/02, B33Y 80/00

(54) **VERFAHREN UND VORRICHTUNG ZUR GENERATIVEN HERSTELLUNG DREIDIMENSIONALER BAUTEILE**
DEVICE AND METHOD FOR THE ADDITIVE PRODUCTION OF THREE-DIMENSIONAL COMPONENTS
DISPOSITIF ET PROCÉDÉ DE FABRICATION ADDITIVE DE COMPOSANTS TRIDIMENSIONNELS

(30) Priorität: 02.03.2011 DE 202011003443 U
(43) Veröffentlichungstag der Anmeldung: 10.12.2025
(62) Dokumentnummer(n) der früheren Anmeldung(en) nach Art. 76 EPÜ: 21173236.7 / 3 900 916; 18184378.0 / 3 456 513; 11757848.4 / 2 681 034
(73) Patentinhaber: BEGO Medical GmbH, 28359 Bremen (DE)
(72) Erfinder: Uckelmann, Ingo, 28359 Bremen (DE); Höges, Simon, 28359 Bremen (DE)
(74) Vertreter: Eisenführ Speiser

(56) Entgegenhaltungen:
- WO-A1-2007/083372
- DE-A1- 4 102 260
- JP-A- 2002 018 967

## Beschreibung

Die Erfindung betrifft eine Vorrichtung zur Herstellung von Produkten mit individueller Geometrie, umfassend eine Substratplatte, eine relativ zur Substratplatte verfahrbare Materialauftragsvorrichtung zum Auftragen von Material auf die Substratplatte, vorzugsweise oberhalb der Substratplatte, und eine Steuerungsvorrichtung, welche signaltechnisch mit der Materialauftragsvorrichtung gekoppelt ist. Ein weiterer Aspekt der Erfindung ist ein Verfahren zum Herstellen von Produkten mit individueller Geometrie, insbesondere mittels 3D Printing, Contour Crafting, Fused Deposition Modeling (FDM) oder Mul-ti-Jet Modeling.

### I. Stand der Technik

Generative Fertigungsverfahren, d.h. Fertigungsverfahren, bei denen ein Material in einem additiven Herstellungsprozess zu einem individuellen Produkt geformt wird, finden ihre Anwendung im Bereich der Herstellung von Prototypen und haben inzwischen auch in der Produktherstellung, insbesondere bei der Anfertigung individuell geformter Produkte oder von Kleinstserien, ihre Anwendung gefunden. Als ein generatives oder additives Fertigungsverfahren ist nach dieser Beschreibung und den anhängenden Ansprüchen insbesondere jegliches in ASTM F2792-10 definiertes additives Herstellungsverfahren verstanden werden, beinhaltend jedes Verfahren der Materialverbindung zur Herstellung von Objekten aus 3D Modelldaten, insbesondere 3D-Drucken, Fused Deposition Modeling, selektives Lasersintern oder -schmelzen und Stereolitographie.

Aus EP 1021997B1 ist es beispielsweise bekannt, individuell geformten Zahnersatz oder dentale Hilfsteile mittels eines selektiven Lasersinterprozesses unter bestimmten Parametern herzustellen. Das SLS-oder SLM-Verfahren ist prinzipiell in EP 0734842 A1 beschrieben, dessen Offenbarung diesbezüglich vollständig einbezogen wird.

Neben einem solchen, für Zahnersatz besonders geeigneten selektivem Lasersinter- oder Laserschmelzverfahren (SLS, SLM) für metallische Pulver, können für andere Produkte auch andere generative Fertigungsverfahren geeignet sein. So können beispielsweise Verfahren, bei denen ein Granulat oder anderes festes Material durch einen hochenergetischen Strahl, wie beispielsweise einen Laserstrahl oder Elektronenstrahl gesintert oder geschmolzen und auf diese Weise verbunden und ausgehärtet wird, oder Verfahren, bei denen ein in fester oder flüssiger Form vorliegender Kunststoff durch einen hochenergetischen Strahl, wie beispielsweise einen Elektronenstrahl, einen Laser- oder gebündelten Lichtstrahl durch Photopolymerisation selektiv ausgehärtet wird, eingesetzt werden. Andere, vom Gegenstand der Erfindung umfasste Verfahren bzw. Vorrichtungen arbeiten nach einem Prinzip, bei dem das Material ebenfalls schichtweise aufgetragen wird, hierbei aber keine homogene zusammenhängende Schicht aufgetragen wird, sondern die Schicht bereits selektiv aufgetragen und die aufgetragenen Bereiche ausgehärtet werden. Solche Verfahren sind beispielsweise als Laser Engineered Net Shaping (LENS) oder Laserauftragschweißen bekannt.

Bei einem anderen, von der Erfindung umfassten Prinzip wird das Material ebenfalls schichtweise als homogene Schicht oder als selektiv aufgetragene Bereiche einer Schicht aufgetragen und ausgehärtet, hierbei aber auf die Verwendung eines hochenergetischen Strahls verzichtet. So sind beispielsweise Verfahren bekannt, bei denen ein erstes Material als Schicht aufgetragen wird und hierauf folgend dieses Material selektiv in vorbestimmten Bereichen mit einem zweiten Material gemischt und hierdurch ausgehärtet wird, beispielsweise indem ein flüssiges Bindermaterial in den vorbestimmten Bereichen injiziert wird oder indem das erste und zweite Material eine chemisch reaktionsfähige Harz + Härter Kombination darstellen. In wiederum anderen Verfahren wird das Material nicht als homogene zusammenhängende Schicht aufgetragen, sondern das Material wird nur in vorbestimmten Bereichen einer Schicht selektiv aufgetragen und härtet nachfolgend selbststätig aus. Dies kann beispielsweise erreicht werden, indem das Material als chemisch reaktionsfähige oder reagierende Mischung aufgetragen wird, die nachfolgend selbststätig durch chemische Reaktion aushärtet, indem das Material schmelzflüssig aufgetragen wird und nachfolgend durch Abkühlung aushärtet oder indem das Material als ein mit der Umgebungsatmosphäre, beispielsweise Luft, reaktionsfähiges Material ausgebildet ist und nach dem selektiven Auftrag aushärtet. Solche, von der Erfindung umfasste Verfahren sind beispielsweise als 3D Printing, Contour Crafting, Fused Deposition Modeling (FDM), Laminated Object Modelling (LOM), Polyamidguss, und als Multi-Jet Modeling bekannt.

Diese generativen Fertigungsverfahren arbeiten regelmäßig solcherart, dass auf einer Substratplatte aufeinanderfolgend Schichten des aushärtbaren Materials aufgetragen werden, beispielsweise indem die Substratplatte sukzessive und diskontinuierlich in ein flüssiges Bad des aushärtbaren Materials abgesenkt wird oder indem mittels einer Pulverauftragsvorrichtung sukzessive Schichten auf der Substratplatte übereinander aufgetragen werden. Nach jedem Schichtauftragsvorgang werden bestimmte Teile der Schicht oder - wie im Falle des selektiven Auftrags der Schicht - die gesamte Schicht selektiv ausgehärtet und auf diese Weise das Produkt schichtweise aufgebaut. Nach Fertigstellung des Produkts durch Aushärtung der letzten Schicht können gegebenenfalls vorhandene nicht ausgehärtete Bereiche des Materials entfernt und häufig wiederverwendet werden.

Ein grundsätzliches Problem der generativen Fertigungsverfahren ist die lange Zeitdauer, die zwischen der Erstellung der Fertigungsdaten und der Fertigstellung des Produkts vergeht. Es ist bekannt, auf einer Substratplatte mehrere Produkte gleichzeitig generativ aufzubauen, um auf diese Weise die Anzahl der in einer bestimmten Zeitspanne hergestellten Produkte zu erhöhen. Dieses Vorgehen ist insbesondere bei Produkten mit sehr kleinen Abmessungen in Bezug auf die Abmessungen der Substratplatte sinnvoll und führt zu einer wirksamen Steigerung der Produktivität.

Aus EP 0734842 A1 ist es bekannt, die Stillstandszeit einer Fertigungsvorrichtung zu verringern, indem eine auf einem Träger lösbar befestigte Substratplatte verwendet wird und hierdurch unmittelbar nach Fertigstellung der Produkte auf dieser Substratplatte die Substratplatte entnommen und durch eine neue Substratplatte ersetzt werden kann, um einen neuen Herstellungsprozess zu starten. Während diese Ausgestaltung es ermöglicht, dass die Zeitdauer, die benötigt wird, um die Produkte von der Substratplatte zu entfernen, nicht in die Stillstandszeit der Fertigungsvorrichtung einfließt, weist die Vorrichtung nach wie vor den Nachteil auf, dass erst dann, wenn die Fertigungsdaten aller Produkte vorliegen, die auf einer Substratplatte gefertigt werden sollen, der Fertigungsprozess gestartet werden kann und die Gesamtdauer für die Fertigung eines Produkts hierdurch insbesondere bei einer individuellen Fertigung vieler kleiner Produkte nicht entscheidend herabgesetzt werden kann.

Aus WO 2008/128502 ist eine Vorrichtung bekannt, welche dem gleichen Grundgedanken folgt und eine Fördereinrichtung innerhalb der Fertigungsvorrichtung vorsieht, mit der ein oder mehrere Baubehälter sowie Dosier- oder Vorratsbehälter gefördert werden können, um hierdurch ein einfaches, schnelles und sicheres Pulverhandling innerhalb der Fertigungsvorrichtung zu erzielen. Durch diese Vorrichtung kann in schneller Weise eine Fertigung von Produkten in einem Baubehälter mittels eines Pulvermaterials erfolgen und darauf folgend nach der Fertigstellung dieser Produkte in einem zweiten Baubehälter die Fertigung von Produkten mit einem anderen Pulvermaterial erfolgen. Allerdings benötigt auch bei dieser Fertigungsvorrichtung der Fertigungsprozess mindestens so lange, wie zwischen der Erstellung der Fertigungsdaten aller Produkte auf der Substratplatte und der Fertigstellung der Produkte vergeht, so dass die Fertigung in Bezug auf jedes einzelne einer Mehrzahl von Produkten, die aufgebaut werden, nach wie vor einen verhältnismäßig langen Zeitraum in Anspruch nimmt.

Aus WO 2004/014636 ist ein Verfahren zum schichtweisen generativen Herstellen von dreidimensionalen Objekten bekannt, bei dem in zwei Baubereichen mehrere Objekte simultan hergestellt werden. Hierbei wird in einem Baubereich eine Schicht aufgetragen und in einem anderen Baubereich eine selektive Aushärtung mittels einer Strahlung erzielt. Es sind vier Prozesskammern vorgesehen, die in Form von räumlich voneinander getrennten Einzelkammern oder als Teilbereiche von zwei Doppelkammern oder einer Vierfachkammer vorliegen können. Weiterhin ist vorgesehen, dass ein Laser über eine Umschalteinrichtung mit jeweils einer der Prozesskammern verbindbar ist. Die so beschriebene Vorrichtung und das zur generativen Herstellung von Produkten mit dieser Vorrichtung beschriebene Verfahren weist den Nachteil auf, dass zum Zwecke der simultanen Fertigung mit alternierender Aushärtung und Schichtauftrag in den jeweiligen Prozesskammern eine separate Steuerung des Auftragsvorgangs in jeder der Prozesskammern erforderlich ist. Die Vorrichtung und das Verfahren eignet sich zwar für die aufwendige Spezialanwendung einer Fertigung von mehreren Produkten mit unterschiedlichem Ausgangsmaterial in entsprechend unterschiedlichen Prozesskammern, der Fertigungsprozess und die Vorrichtung ist jedoch sowohl im Aufbau als auch in der Steuerung aufwendig und kann daher hinsichtlich seiner Produktivität der Effizienz zur Fertigung zahlreicher kleiner Produkte und der Zeit, die zwischen der Fertigstellung der Fertigungsdaten eines Produkts und der Fertigstellung des Produkte selbst vergeht, weiter optimiert werden.

Aus EP 0787 067 B1 ist eine Vorrichtung zur Herstellung eines dreidimensionalen Gegenstandes basierend auf gegenstandsdefinierenden Daten vorbekannt. Die Vorrichtung umfasst eine Plattform und eine Baumaterialabfüllvorrichtung, die mittels einer Positioniereinrichtung relativ zu der Plattform bewegt werden kann. Die Größe der herstellbaren Bauteile ist durch die Abmessung der Plattform und die maximale Höhe der Baumaterialabfüllvorrichtung über der Plattform begrenzt. Die Orientierung der Abfüllvorrichtung kann während ihres Betriebs geändert werden. Diese Änderung der Orientierung der Abfüllvorrichtung dient dazu, um ein freitragendes Teil des herzustellenden Gegenstands mit einer generell horizontalen Aufbaurichtung zu fertigen. Diese vorbekannte Vorrichtung erlaubt durch eine Mehrachsbeweglichkeit der Abfüllvorrichtung die Herstellung freitragender Teile des herzustellenden Gegenstandes mit einer schrägen Ausrichtung der Abfüllvorrichtung in einem Winkel, der nicht größer als 45° zur Horizontalen ist. Die Vorrichtung arbeitet für die Herstellung der nicht freitragenden Abschnitte des Gegenstands mit einer vertikalen Ausrichtung der Abfüllvorrichtung und einem horizontalen Schichtauftrag. Zur Herstellung freitragender Abschnitte des herzustellenden Gegenstandes wird mit einer schrägen Ausrichtung der Abfüllvorrichtung und einem schrägen Schichtauftrag gearbeitet. Es werden daher in den schrägen Schichten in einer Schichtebene nicht die aufzutragenden Bereiche anhand einer vollständigen Querschnittsgeometrie des Produkts in der jeweiligen Schicht vorbestimmt. Die Steuerungsvorrichtung, mit welcher der Auftrag gesteuert wird, ist ausgebildet, dass die Abschnitte des Gegenstands in Abhängigkeit davon, ob sie freitragend sind oder nicht, mit der entsprechenden Ausrichtung hergestellt werden und die Querschnittsgeometriedaten werden dementsprechend aufbereitet und verarbeitet. Dies ist für bestimmte Produktgestaltungen nachteilhaft, weil hierdurch eine geometrische Ungenauigkeit im Übergangsbereich zwischen einem freitragenden und einem nicht freitragenden Abschnitt entstehen kann.

Aus dem nachveröffentlichten Dokument EP 2 289 462 A1 ist ein Verfahren zum Herstellen von Produkten, bei dem ein aushärtbares Material in aufeinanderfolgenden aufgetragen wird und die aufeinanderfolgenden Schichten in Schichtebenen aufgetragen werden, die schräg zu der Oberfläche der Substratplatte ausgerichtet sind. Bei diesem Verfahren wird eine homogene Schicht aufgetragen und hiernach durch selektives Aushärten mittels einer energiereichen Strahlung ausgehärtet und es erfolgt kein selektiver Auftrag der Schicht.

Aus DE 10 2008 027 315 A1 ist ein weiteres Verfahren zum schichtweisen Herstellen individueller Produkte vorbekannt. Bei diesem Verfahren kann die Substratplatte geneigt werden und der Schichtauftrag erfolgt in Schichten, die parallel zur Oberfläche der Substratplatte angeordnet sind. Aus US 6,505,089B1 ist eine Vorrichtung bekannt, die in ähnlicher Weise eine solche Neigung der Auftragsdüse erlaubt, auch hier werden die Schichten mit der geneigten Düse parallel zur Oberfläche der Substratplatte aufgetragen.

US 2009/0025638 A1 beschreibt ein Herstellungsverfahren, bei dem ein Produkt auf einer Werkzeugform aufgebaut wird, indem auf diese Werkzeugform Material aufgetragen und ausgehärtet wird. Der Materialauftrag erfolgt nicht schichtweise und die Schichten werden hierbei nicht in Schichtebenen und selektiv aufgetragen.

US 5,121,329 beschreibt ein Herstellungsverfahren, bei dem dreidimensionale Produkte durch sequentielles Ablegen von mehreren Schichten auf einem Basiselement hergestellt werden. Das Basiselement und ein Auftragskopf werden hierzu relativ zueinander in x, y- und z- Richtung bewegt. Die Schichten werden nicht in Schichtebenen aufgetragen, sondern der Auftrag jeder Schicht erfolgt in gekrümmten Schichten, deren Winkel zur Substratplatte sich entlang des Schichtauftrags in der jeweiligen Schicht ändert, wodurch eine aufwendige dreidimensionale Steuerung der Bewegung des Auftragskopfes erforderlich ist.

DE 41 02 260 A1 beschreibt eine Vorrichtung zur Herstellung beliebig geformter Teile, bestehend aus einer durch energiereiche Strahlung aushärtbaren Flüssigkeit, eine in vertikaler Richtung verschieblichen Halterung für einen herzustellenden Körper und einer Quelle für die energiereiche Strahlung dessen Strahl auf die Flüssigkeitsoberfläche gerichtet und derart auslenkbar ist, dass in der flüssigen Phase im Bereich der Oberfläche Konturen aushärtbar sind, die schichtweise das Volumen des so zu erzeugenden Körpers bilden. Die Halterung taucht in im wesentlichen der Aushärtungstiefe entsprechenden Schritten zunehmend tiefer in die Flüssigkeit ein. Eine für die energiereiche Strahlung durchlässige Wandung schließt sich unmittelbar an die aushärtbare Flüssigkeit an, so dass die der aushärtbaren Flüssigkeit zugewandte Fläche eine Flüssigkeitsbegrenzung in Richtung auf die Strahlungsquelle bildet.

### II. Aufgabe der Erfindung

Während mit den bekannten Fertigungsverfahren und -vorrichtungen nur individuelle Produkte, deren Größe etwa die Substratplatte einnehmen, in einer sowohl produktiven Fertigungsweise als auch mit einer für jedes Einzelprodukt vertretbaren Gesamtfertigungsdauer hergestellt werden können, ist es für Produkte, deren Abmessungen weitaus kleiner sind als die Substratplatte, nur möglich, die Produktivität durch gemeinsame Fertigung mehrerer Produkte auf einer Substratplatte zu sichern, die Fertigungszeit für ein einzelnes Produkt kann jedoch in diesem Fall nicht auf eine wünschenswert kleine Zeitspanne gebracht werden, sondern wird durch die Erstellung von Fertigungsdaten aller auf der Substratplatte herzustellenden Produkte und die hierauf folgende gleichzeitige Fertigung aller Produkte erhöht.

Ein weiteres Problem bei der generativen Fertigung von kleinen Produkten, wobei hierunter Produkte verstanden werden sollen, deren Grundfläche kleiner, insbesondere um mindestens eine Größenordnung kleiner ist als die Oberfläche der Substratplatte, besteht darin, dass in vielen Anwendungsbereichen mit individuellen Produktgeometrien die generative Fertigung als Auftragsfertigung erfolgt, wie beispielsweise bei der Herstellung von Zahnersatz in zahntechnischen Laboren. In diesem Fall kommen die einzelnen Aufträge typischerweise nicht gleichzeitig, sondern zeitversetzt beim Benutzer der Fertigungsvorrichtung an. Um in diesem Fall eine hohe Produktivität und Auslastung der Anlage zu erzielen, muss der Benutzer mehrere Aufträge bündeln, um die in den gebündelten Aufträgen enthaltenen Produkte gleichzeitig auf einer Substratplatte zu fertigen. Dies erzeugt jedoch, insbesondere für den zuerst eingegangenen Auftrag, eine erhebliche Verzögerung zwischen Auftragseingang und Fertigstellung des Produkts. Will der Benutzer hingegen jeden Auftrag in der kürzest möglichen Zeit bedienen und das entsprechende individuelle Produkt fertigen, so ist er gezwungen, den Fertigungsprozess auf einer Substratplatte mit lediglich einem oder einigen wenigen Produkten durchzuführen, was zu einer insgesamt geringen Auslastung der Fertigungsvorrichtung und niedriger Produktivität führt.

Ein weiteres Problem der bekannten Fertigungsverfahren und -vorrichtungen liegt darin, dass die maximale Abmessung der Produkte, die hergestellt werden können, begrenzt ist. Dies liegt in erster Linie daran, dass die Produkte auf einer Substratplatte hergestellt werden und daher die Abmessungen der Substratplatte einerseits und den apparativ vorgegebenen Bauraum oberhalb der Substratplatte andererseits nicht überschreiten können. Es besteht ein Bedarf für eine Vorrichtung und ein Verfahren, welche(s) dazu ausgebildet ist um auch Produkte mit großen Abmessungen, insbesondere Produkte, die sich in einer oder zwei Raumrichtung(en) besonders weit im Verhältnis zu den zwei anderen bzw. der anderen Raumrichtung(en) erstrecken, in effizienter Weise generativ zu fertigen.

Ein weiteres Problem bekannter Vorrichtungen zur generativen Fertigung besteht darin, dass diese Anlagen in der Regel sowohl hinsichtlich ihres konstruktiven Aufbaus als auch hinsichtlich ihrer Prozessablaufsteuerung aufwendig ausgebildet sind und daher nicht für eine kostengünstige Anschaffung und Nutzung geeignet sind. Es besteht ein Bedarf für eine Vorrichtung zur generativen Fertigung, welche einfach und kompakt ausgeführt werden kann und idealerweise sowohl die Anschaffungs- als auch die Betriebskosten reduziert.

Es besteht weiterhin ein weiterer Bedarf für eine generative Fertigungsvorrichtung, welche dem Nutzer eine höhere Effizienz in der Anlagennutzung und eine schnellere und wirtschaftlichere Herstellung von individuellen Produkten in einer funktionalen, anspruchsvollen ästhetischen Gestaltung ermöglicht.

Schließlich ist eine Aufgabe der Erfindung, die bekannten Fertigungsverfahren dahingehend weiterzuentwickeln, dass auch bei Produkten, deren Abmessungen im Verhältnis zur Substratplattenabmessung klein sind, sowohl eine hohe Produktivität als auch eine geringe Fertigungsdauer für jedes einzelne Produkt zu erreichen. Es ist ein weiteres Ziel der Erfindung, ein Fertigungsverfahren und eine Fertigungsvorrichtung bereitzustellen, welche den Zeitraum zwischen Auftragseingang für ein individuell zu fertigendes, kleines Produkt und Fertigstellung des Produkts zu verkürzen, ohne hierbei die Produktivität des Fertigungsverfahrens bzw. der Fertigungsvorrichtung nachteilig zu beeinflussen.

### III. Gegenstand der Erfindung

Allgemein ist in dieser Beschreibung und den anhängenden Ansprüchen zu verstehen, dass die für die Fertigung benötigten Daten, also Fertigungsparameter und geometrische Daten der Geometrie der einzelnen Schichten / der Produktgeometrie, aus einer externen Steuerungseinheit, beispielsweise einem an die Fertigungseinrichtung angeschlossenen Computer, an die Fertigungseinrichtung gesendet werden können oder in einer Steuerungseinheit in der Fertigungseinrichtung selbst erstellt und/oder gespeichert sein können. Ebenso ist es möglich, dass ein Fertigungsvorgang extern im Wege eines Cloud-Computing aus mehreren miteinander kommunizierenden Rechnern angesteuert und ausgeführt wird.

### III. 1 Erste Ausführungsform: Vorrichtung und Verfahren zur Ausführung eines additiven Herstellungsverfahrens mit schrägem Schichtauftrag

Diese Aufgaben werden gemäß eines ersten Aspekts der Erfindung mit einer Vorrichtung der eingangs genannten Art gelöst, bei der die Steuerungsvorrichtung ausgebildet ist, um die Materialauftragsvorrichtung solcherart anzusteuern, dass sie das Material selektiv auf vorbestimmte Bereiche abgibt, welche dem Querschnitt eines Produkts in der jeweiligen Schicht entsprechen, und die Materialauftragsvorrichtung ausgebildet ist, um das Material in einer Ebene aufzutragen, die schräg zu der Oberfläche der Substratplatte ausgerichtet ist, auf welche das Material aufgetragen wird.

Mit der erfindungsgemäßen Vorrichtung wird eine generative Fertigungsvorrichtung vorgeschlagen, die in schneller Weise bei hoher Produktivität kleine Produkte generativ herstellen kann. Die erfindungsgemäße Vorrichtung zeichnet sich dadurch aus, dass die Materialauftragsvorrichtung, mit der die Materialschichten auf die Substratplatte aufgetragen werden, solcherart ausgebildet ist, dass dieser Schichtauftrag schräg zur Oberfläche der Substratplatte ausgeführt werden kann.

Dabei ist unter einem schrägen Auftrag zu verstehen, dass zwischen der Auftragsebene und der Fläche der Substratplatte ein spitzer Winkel einstellbar ist, der vorzugsweise kleiner 90° und/oder größer 0° ist und insbesondere eine Untergrenze von 5°, 10° oder 30° und/oder eine Obergrenze von 60°, 80° oder 85° aufweisen kann.

Ein wesentliches Element des mit der erfindungsgemäßen Vorrichtung ausgeführten Verfahrens ist das aushärtbare Material, welches aufgetragen und nachfolgend ausgehärtet wird. Das Material muss sich dazu eignen, um in einem Schichtauftrag schräg zur Oberfläche der Substratplatte eingesetzt zu werden, zugleich aber eine ausreichende geometrische Auflösung der Produktdetails erzielen. Als Materialien können hierfür spezifisch angepasste Pulver, Pulvermischungen, legierte Pulver, Flüssigkeiten mit bestimmter Viskosität oder pastöse Materialien oder Granulate zum Einsatz kommen. Im Sinne dieser Beschreibung wird unter einem aushärtbaren Material ein Material verstanden, welches sich in einem Verarbeitungszustand dazu eignet, um in einer dünnen Schicht homogen oder selektiv aufgetragen zu werden und welches aushärtbar ist. Das aushärtbare Material muss sich weiterhin dazu eignen, mit einer zuvor bereits aufgetragenen Schicht und gegebenfalls benachbarten Schichtanteilen der aktuell aufgetragenen Schicht eine mechanisch belastbare Verbindung auszubilden. Diese mechanische Verbindung wird oftmals im Zuge des Aushärtungsprozesses eingegangen. Das aushärtbare Material übernimmt dabei definitionsgemäß eine mechanisch-strukturelle Funktion des Bauteils. Das aushärtbare Material kann dabei transparent oder eingefärbt sein. Das aushärtbare Material wird erfindungsgemäß alleine, als Mischung aus zwei oder mehr Materialien gleichzeitig oder zeitversetzt nacheinander mittels einer Materialauftragsvorrichtung aufgetragen.

Diese Materialauftragsvorrichtung ist entsprechend dazu ausgebildet, um aus einer Materialquelle das Material zu beziehen und eine geeignete Abgabeform für das Material zu erzeugen und dann ein oder mehrere Materialien gleichzeitig oder zeitversetzt in Form eines Strahls, Pulvers, in Form von Kugeln, Tropfen, Streifen, Raupen oder dergleichen abzugeben. In einer vereinfachten Ausgestaltung kann die Materialauftragsvorrichtung an einem Rahmengestell angeordnet sein und dieses Rahmengestell kann solcherart auf einer Oberfläche angeordnet sein, dass eine Bewegung des Rahmengestells in einer, zwei, drei oder mehr Achsen relativ zur Oberfläche ausgeführt wird. Dabei kann die Oberfläche beispielsweise eine Tischoberfläche sein, auf der das Rahmengestell rollbar aufliegt. Die Oberfläche stellt dann die Substratplatte dar. Die Bewegung zwischen Materialauftragsvorrichtung und Oberfläche kann insbesondere auch durch eine Kombination einer Bewegung der Materialauftragsvorrichtung relativ zum Rahmengestell in einer oder mehr Achsen und eine Bewegung des Rahmengestells zur Oberfläche um hierzu ergänzende eine oder mehrere Achsen ausgeführt sein.

Unter einer Aushärtung kann hierbei eine Aufschmelzung und nachfolgende Erstarrung eines in Draht-, Partikel- oder Pulverform vorliegenden Materials verstanden werden, ebenso ein schmelzflüssiger Auftrag eines Materials mit nachfolgender Erstarrung. Die Aushärtung kann auch durch chemische Reaktion eines Materials mit der Umgebung, chemische Reaktion von zwei oder mehr gleichzeitig oder zeitversetzt aufgetragenen Materialkomponenten miteinander oder chemische oder physikalische Reaktion eines Materials infolge einer Strahlungseinwirkung, beispielsweise als Photopolymerisation erfolgen.

Gemäß einer ersten bevorzugten Ausführungsform umfasst die erfindungsgemäße Vorrichtung eine Strahlungsquelle für einen hochenergetischen Strahl und Strahlführungsmittel zum Führen des Strahls auf vorbestimmte Bereiche einer auf die Substratplatte aufgetragenen Materialschicht. Mit dieser Ausführungsform können insbesondere generative Fertigungsverfahren wie SLS, SLM, Auftragsschweißen, LENS oder stereolitographische Verfahren ausgeführt werden.

Die erfindungsgemäße Vorrichtung kann weiter fortgebildet werden, indem die Substratplatte in mehrere Substratplattensegmente unterteilt ist und die Materialauftragsvorrichtung zum simultanen Auftragen einer Materialschicht auf eine Anzahl der mehreren Substratplattensegmente ausgebildet ist.

Noch weiter kann die erfindungsgemäße Vorrichtung fortgebildet werden, indem die Substratplattensegmente lösbar miteinander oder lösbar mit einem Grundträger verbunden sind.

Weiterhin ist bevorzugt vorgesehen, dass die Substratplattensegmente an einem EndlosFörderband angeordnet sind, welches teilweise oder vollständig in einer Bearbeitungskammer verläuft, die gegen die Umgebung soweit abgedichtet ist, dass darin eine kontrollierte, insbesondere inerte Atmosphäre eingestellt werden kann und dass vorzugsweise die Materialauftragsvorrichtung so ausgebildet ist, dass das Material in der ersten Richtung aufgetragen wird, vorzugsweise in einem solchen Winkel zur Oberfläche des jeweiligen Substratplattensegments, dass die Fließrichtung des Materials der Auftragsrichtung entgegengesetzt ist.

Die erfindungsgemäße Vorrichtung kann weiter fortgebildet werden durch eine Steuerung zur Ansteuerung der Strahlführungsmittel des hochenergetischen Strahls und/oder der Materialauftragsvorrichtung, welche ausgebildet ist, um die Strahlführungsmittel und/oder die Materialauftragsvorrichtung so anzusteuern, dass eine Trennwand während des Herstellungsvorgangs des Produkts durch Aushärten des aufgetragenen Materials bzw. selektives Auftragen des Materials hergestellt wird.

Eine weitere bevorzugte Ausführungsform sieht vor, dass die Substratplattensegmente und die Materialauftragsvorrichtung solcherart relativ zueinander bewegbar sind, dass der maximale Abstand zwischen einem ersten Substratplattensegment und einer zur Herstellung des ersten Produkts oberhalb dieses Substratplattensegments aufgetragenen Materialschicht sich von dem maximalen Abstand zwischen einem weiteren Substratplattensegment und einer zur Herstellung eines weiteren Produkts oberhalb dieses weiteren Substratplattensegments aufgetragenen Materialschicht unterscheidet.

Eine weitere bevorzugte Ausgestaltung zeichnet sich durch eine Materialentfernungsvorrichtung aus, insbesondere eine Materialabsaugeinrichtung, wobei die Materialentfernungsvorrichtung ausgebildet ist, um nicht ausgehärtetes Material aus einem ein gefertigtes Produkt umgebenden Bereich zu entfernen, und so angeordnet ist, dass sie das Material um ein fertig gestelltes Produkt auf einem ersten Substratplattensegment entfernt und hierbei das Material um ein Produkt auf einem weiteren, hierzu benachbarten Substratplattensegment belässt.

Noch weiter ist es bevorzugt, wenn die erfindungsgemäße Vorrichtung eine Steuerung aufweist zur Ansteuerung der Führungsvorrichtung des hochenergetischen Strahls und/oder der Materialauftragsvorrichtung, welche ausgebildet ist, um die Führungsvorrichtung und/oder der Materialauftragsvorrichtung so anzusteuern, dass in einer ersten Phase des Herstellungsvorgangs nur Schichtbereiche einer Schicht selektiv ausgehärtet werden, welche zur Herstellung eines ersten Produktes auf einem ersten Substratplattensegment dienen, in einer letzten Phase des Herstellungsvorgangs nur Schichtbereiche einer Schicht selektiv ausgehärtet werden, welche zur Herstellung eines weiteren Produktes auf einem weiteren Substratplattensegment dienen und in einer zwischen der ersten und der letzten Phase liegenden mittleren Phase des Herstellungsvorgangs Schichtbereiche einer Schicht selektiv ausgehärtet werden, welche zur Herstellung des ersten und des weiteren Produktes dienen.

Gemäß einer weiteren bevorzugten Ausführungsform weist die erfindungsgemäße Vorrichtung eine zwischen den Substratplattensegmenten angeordnete Trennwand auf, welchen den oberhalb jedes Substratplattensegments bestehenden Bauraum von dem oberhalb eines benachbarten Substratplattensegments bestehenden Bauraum abtrennt.

Dabei ist es insbesondere bevorzugt, wenn die Trennwand zwischen zwei Substratplattensegmenten mit zumindest einem der beiden Substratplattensegmenten verbunden oder gegen dieses Substratplattensegment solcherart abgedichtet ist, dass kein Material zwischen Trennwand und Substratplattensegment hindurchtreten kann.

Besonders bevorzugt weist die erfindungsgemäße Vorrichtung eine einzige Strahlungsquelle auf, die insbesondere mittels eines einzigen Strahlengangs zur Aushärtung aller Produkte, insbesondere der auf allen Substratplattensegmenten hergestellten Produkte genutzt wird.

Noch weiter ist es bevorzugt, eine Steuerung vorzusehen zur Ansteuerung der Führungsvorrichtung des hochenergetischen Strahls und/oder der Materialauftragsvorrichtung, welche ausgebildet ist, um die energiereiche Strahlung und/oder die Materialauftragsvorrichtung über die n-te Materialschicht nach Führungsdaten zu führen, welche aus den geometrischen Daten einer x-ten Querschnittsfläche eines ersten Produkts ermittelt wurden, um Teile der n-ten Materialschicht mittels Einwirken einer energiereichen Strahlung bzw. selektivem Auftrag auszuhärten, die energiereiche Strahlung und/oder die Materialauftragsvorrichtung über eine n+1-te Materialschicht nach Führungsdaten zu führen, welche aus den geometrischen Daten einer x+1-ten Querschnittsfläche des ersten Produkts ermittelt wurden, um Teile der n+1-ten. Materialschicht mittels Einwirken der energiereichen Strahlung bzw. selektivem Auftrag auszuhärten, die energiereiche Strahlung und/oder der Materialauftragsvorrichtung über die n-te Materialschicht nach Führungsdaten zu führen, welche aus den geometrischen Daten einer y-ten Querschnittsfläche eines zweiten Produkts ermittelt wurden, um Teile der n-ten Materialschicht mittels Einwirken der energiereichen Strahlung bzw. selektivem Auftrag auszuhärten und die energiereiche Strahlung und/oder der Materialauftragsvorrichtung über die n+1-te Materialschicht nach Führungsdaten zu führen, welche aus den geometrischen Daten einer y+1-ten Querschnittsfläche des zweiten Produkts ermittelt wurden, um Teile der n+1-ten Materialschicht mittels Einwirken der energiereichen Strahlung bzw. selektivem Auftrag auszuhärten wobei x ungleich y ist.

Gemäß einer weiteren Fortbildung ist vorgesehen, dass die Relativbewegung zwischen Substratplatte und Materialauftragsvorrichtung mittels einer Fördereinrichtung teilweise oder vollständig erzielt wird, die entlang zumindest einer Achse und gegebenenfalls entlang zwei oder drei Achsen eine Förderbewegung ausführt und weiterhin um eine, zwei oder drei Achsen verschwenkbar ausgeführt sein könnte. Die Fördereinrichtung kann insbesondere ein oder mehrere Förderbänder umfassen, die simultan und unabhängig voneinander angesteuert werden können, um darauf Produkte herzustellen. Die Fördereinrichtung kann eine Aufnahmeeinrichtung zur Aufnahme von Substratplatten umfassen oder eine Oberfläche aufweisen, die unmittelbar als Substratplattenoberfläche dient, beispielsweise eine Förderbandoberfläche. Die mehreren Förderbänder können nebeneinander in einer Ebene verlaufen oder können so angeordnet sein, dass sie einen Bauraum nach unten, seitlich und/oder oben begrenzen, um hierdurch eine gleichmäßige Förderung des Materials zu erzielen.

Weiterhin kann die Substratplatte und/oder ein mit der Substratplatte zusammenwirkender Aktuator ausgebildet sein, um bei jedem Aufbau einer neuen Schicht in einer horizontalen Richtung vorgeschoben zu werden. Diese Vorschubweise erreicht in Verbindung mit dem schrägen Verlauf der Schicht bei horizontal liegender Substratplatte den für den Auftrag einer neuen Schicht erforderlichen Hub, der wiederum entsprechend multipliziert mit dem Sinus des Auftragswinkels die Schichtdicke bestimmt.

Es ist weiterhin bevorzugt, dass die Materialauftragsvorrichtung solcherart geführt ist, dass sie in einer Ebene verschieblich gelagert ist, die schräg zu der Oberfläche der Substratplatte verläuft.

Die erfindungsgemäße Vorrichtung kann fortgebildet werden durch eine zweite Materialauftragsvorrichtung, welche ausgebildet und beweglich ist, um ein zweites Material als homogene Schicht aufzutragen bevor ein selektiver Materialauftrag erfolgt.

Es ist weiterhin bevorzugt, dass die Materialauftragsvorrichtung ausgebildet ist, um eine Materialmischung aus zwei unterschiedlichen Materialien selektiv aufzutragen, wobei die zwei unterschiedlichen Materialien ausgebildet sind, um nach dem selektiven Auftrag durch chemische Reaktion miteinander auszuhärten, oder ein Material selektiv aufzutragen, wobei das Material ausgebildet sind, um nach dem selektiven Auftrag durch chemische Reaktion mit einem Umgebungsgas auszuhärten, oder ein schmelzflüssiges Material selektiv aufzutragen, wobei das schmelzflüssige Material ausgebildet sind, um nach dem selektiven Auftrag durch Abkühlen auszuhärten.

Es ist weiterhin bevorzugt, dass die Materialauftragsvorrichtung(en) solcherart in Bezug auf die Substratplatte und die Schwerkraftrichtung bei Betriebsstellung der Vorrichtung angeordnet und ausgebildet ist/sind, dass das daraus abgegebene Material in Schwerkraftrichtung als Schicht auf die Substratplatte oder darauf angeordnete Schichten bzw. auf vorbestimmte Bereiche der Substratplatte oder darauf angeordneten Schichten zugeführt werden kann.

Schließlich kann die erfindungsgemäße Vorrichtung fortgebildet werden, indem an der Materialauftragsvorrichtung eine Bearbeitungsvorrichtung zum Abtragen, eines Teils der ausgehärteten Materialbereiche, vorzugsweise zum oberflächlichen Beschleifen der ausgehärteten Materialbereiche einer zuvor aufgetragenen Materialschicht angeordnet ist.

Ein weiterer Aspekt dieser Ausführungsform der Erfindung ist ein Verfahren zum Herstellen von Produkten mit individueller Geometrie, insbesondere Zahnersatz oder dentalen Hilfsteilen, mit den Schritten: Herstellen von zumindest einem Produkt an oder auf der Oberfläche einer Substratplatte mittels selektiven Aushärtens, insbesondere mittels selektiven Sinterns oder Schmelzens, Auftragen eines aushärtbaren Materials in aufeinanderfolgenden Schichten, selektives Aushärten eines oder mehrerer vorbestimmter Bereiche nach jedem Schichtauftrag und hierbei Verbinden dieser Bereiche mit einem oder mehreren Bereichen der darunterliegenden Schicht, wobei der/die vorbestimmte(n) Bereich(e) anhand einer Querschnittsgeometrie des Produkts in der jeweiligen Schicht vorbestimmt wird/werden und das Material selektiv in die vorbestimmten Bereiche der Schicht aufgetragen wird und die aufeinanderfolgenden Schichten in Schichtebenen aufgetragen werden, die schräg zu der Oberfläche der Substratplatte ausgerichtet sind.

Die erfindungsgemäße Vorrichtung arbeitet weiter vorzugsweise nach einem Verfahren zum Herstellen von Produkten mit individueller Geometrie, insbesondere Zahnersatz oder dentalen Hilfsteilen, mit den Schritten Herstellen mehrerer Produkte auf der Oberfläche einer Substratplatte mittels selektiven Aushärtens, insbesondere mittels selektiven Sinterns oder Schmelzens, bei dem das Material in aufeinanderfolgenden Schichten aufgetragen wird, nach jedem Schichtauftrag ein oder mehrere vorbestimmte Bereiche der aufgetragenen Schicht vorzugsweise mittels einer energiereichen Strahlung selektiv ausgehärtet und mit einem oder mehreren Bereichen der darunter liegenden Schicht verbunden werden, wobei die vorbestimmten Bereiche anhand einer Querschnittsgeometrie des Produkts in der jeweiligen Schicht vorbestimmt werden, bei dem die aufeinanderfolgenden Schichten in Schichtebenen aufgetragen werden, die schräg zu der Oberfläche der Substratplatte ausgerichtet sind.

Auch bei diesen Verfahren werden ein oder mehrere Produkte gleichzeitig auf der Oberfläche einer Substratplatte durch einen selektiven Aushärtungsvorgang schichtweise hergestellt. Dabei ist zu verstehen, dass bei dem erfindungsgemäßen Verfahren nicht notwendigerweise eine Substratplatte in klassischer Bauweise zum Einsatz kommen muss, also eine kreisrunde oder quadratische oder rechteckige einstückige Substratplatte. Stattdessen kann die erfindungsgemäße Substratplatte beispielsweise als Substratförderband bereitgestellt sein oder als eine aus mehreren Segmenten zusammengesetzte Substratplatte, bei der sich diese Substratplattensegmente beispielsweise entlang einer Richtung aneinanderreihen.

Das Verfahren zeichnet sich dadurch aus, dass die Schichten des aushärtbaren Materials nicht solcherart aufgetragen werden, dass die Schichtebene parallel zu der Oberfläche der Substratplatte ausgerichtet ist, sondern stattdessen so aufgetragen werden, dass die Schichtebene schräg, d.h. unter einem Winkel zwischen 0° und 90° zu der Oberfläche der Substratplatte ausgerichtet ist. Durch diesen schrägen Schichtauftrag auf der Substratplatte wird erreicht, dass die insgesamt deshalb eines Ortes der Substratplatte angeordnete Materialbettdicke nicht an jeder Stelle gleich ist, sondern unterschiedlich. Insbesondere vergrößert sich die Dicke des aufgetragenen Materialbettes ausgehend von einem Bereich, in dem genau eine Schichtdicke auf der Substratplatte aufliegt, kontinuierlich bis in einen Bereich, in dem die maximal auftragbaren Schichten oberhalb der Substratplatte aufgelegt sein können. Dabei ist zu verstehen, dass eine Materialschicht stets über einen Bereich der Substratplatte aufgetragen wird, der zwar nicht notwendigerweise die gesamte Substratplatte überstreichen muss, aber in der Regel einen Bereich überstreicht, in dem mehrere der Produkte, die auf der Substratplatte aufgebaut werden, angeordnet sind.

Durch den schrägen Auftrag der Materialschichten können auf der Substratplatte mit dem erfindungsgemäßen Verfahren mehrere kleine Produkte gleichzeitig aufgebaut werden, die aber in unterschiedlichen Fertigungsstadien sind. So kann in einem Bereich, in dem durch den schrägen Auftrag der Schicht erst eine einzige Schicht auf der Substratplatte aufliegt, ein neues Produkt begonnen werden, wohingegen in einem Bereich, in dem die schräg aufgetragene Schicht auf bereits mehrere zuvor aufgetragene Schichten aufgetragen wird, ein Produkt fertig gestellt werden. Zwischen diesen beiden Endpunkten können ein oder mehrere Produkte in einem Fertigungsstadium zwischen Beginn und Ende, d.h. mit beispielsweise 50 oder 100 bereits aufgetragenen und selektiv ausgehärteten Schichten angeordnet sein.

Dieses Fertigungsverfahren ermöglicht es hierdurch, unmittelbar nach Fertigstellung der Fertigungsdaten für ein Produkt dessen Fertigung zu beginnen und dieses Produkt dann nach Fertigstellung aus dem Fertigungsprozess zu entnehmen, ohne hierbei darauf warten zu müssen, dass Fertigungsdaten von anderen Produkten fertig gestellt worden sind oder gar andere Produkte fertig gestellt worden sind. Dabei ist zu verstehen, dass in gleicher Weise wie ein quasi kontinuierlicher Fertigungsbeginn aufeinanderfolgender individueller Produkte beim erfindungsgemäßen Verfahren realisiert wird, eine quasi kontinuierliche Entnahme von einzelnen fertig gestellten Produkten bewirkt werden kann, um die Fertigungszeit für jedes einzelne Produkt zu minimieren. Mit dem erfindungsgemäßen Verfahren wird es somit möglich, auch Produkte kleiner Abmessungen in einer solchen Fertigungszeit herzustellen, die nur durch die für die einzelnen Schichtaufträge und deren Aushärten benötigten Prozessschritte erforderlich ist und trotzdem eine hohe Produktivität durch eine parallele Fertigung von mehreren Produkten zu erhalten, indem durch einen schrägen Material- bzw. Pulverauftrag in Bezug auf die Substratplatte es ermöglicht wird, Produkte in unterschiedlichen Fertigungsstadien auf einer Substratplatte und mit einem gemeinsamen Schichtauftrag herzustellen. Der Material- bzw. Pulverauftrag erfolgt vorzugsweise entlang einer Richtung, die der Schwerkraft bedingten Fließrichtung des Pulvers in der Schicht entgegengesetzt ist, wenn die Schicht schräg zu Horizontalen verläuft.

Gemäß einer ersten bevorzugten Ausführungsform ist vorgesehen, dass die aufeinanderfolgenden Schichten parallel zueinander aufgetragen werden. Das parallele Auftragen der Schichten ermöglicht eine gleichbleibende Schichtdicke entlang des gesamten Auftragsvorgangs und eine somit einfache Prozesssteuerung. Dabei ist zu verstehen, dass nicht notwendigerweise jede der Schichten die gleiche Dicke erhalten muss, insbesondere kann die Schichtdicke in Abhängigkeit der Produktgeometrie größer oder kleiner gewählt werden, um die durch die Schichtdicke vorgegebene geometrische Auflösung der Produktgeometrie anzupassen.

Weiterhin ist es bevorzugt, dass mehrere Produkte auf der Oberfläche der Substratplatte mittels selektiven Aushärtens, insbesondere mittels selektiven Sinterns, Schmelzens oder Auftragens, hergestellt werden, und dass vorzugsweise der eine oder die mehreren vorbestimmten Bereiche mittels einer energiereichen Strahlung ausgehärtet oder selektiv aufgetragen werden und hierbei mit einem oder mehreren Bereichen der darunterliegenden Schicht verbunden werden.

Sofern flüssige Materialien als aushärtbares Material zum Einsatz kommen, kann die Benetzbarkeit der Oberfläche positiv beeinflusst werden durch eine chemische, optische oder mechanische Oberflächenbehandlung, wie beispielsweise Laserstrahlaufrauhen.

Dabei ist es für das erfindungsgemäße Verfahren und die erfindungsgemäße Vorrichtung insbesondere vorteilhaft, wenn das Material solcher Art aufbereitet wird, dass eine gute Verbindung, Verklammerung oder dergleichen der Materialpartikel untereinander und eine entsprechend schlechte Gleitfähigkeit der Partikel aneinander hergestellt wird, das heißt die Partikel sollten insbesondere eine von der Kugelform abweichende äußere Gestalt haben, zugleich eine hohe Oberflächenrauhigkeit aufweisen und insbesondere vorzugsweise weiterhin von insgesamt unregelmäßiger Gestalt sein. Die Gleitfähigkeit des Materials beeinflusst gleichzeitig dessen Eignung, in dünnen Schichten aufgetragen zu werden und eine dichte Packung mit geringen Hohlraumanteilen einzunehmen. Andererseits muss das Material in der dem Prozess angepassten Schichtdicken auftragbar sein und eine möglichst hohe Packungsdichte erzielen, da diese in direktem Zusammenhang mit der erzielten Dichte des hergestellten Produkts steht. Typische Schichtdicken liegen zwischen 5 µm und 200 µm.

Gemäß einer weiteren bevorzugten Ausführungsform ist vorgesehen, dass die Substratplatte zwischen zwei aufeinanderfolgenden Schichtauftragsvorgängen mit einer Richtungskomponente senkrecht zur Ebene, in der die Schicht aufgetragen wird, verfahren wird. Unter einer Richtungskomponente ist in diesem Zusammenhang ein Bewegungsanteil zu verstehen, der gemeinsam mit anderen, in anderen Richtungen stattfindenden Bewegungsanteilen die Gesamtbewegung ausmacht. Durch einen Bewegungsanteil senkrecht zur Ebene des Schichtauftrags kann ein Vorschub erzeugt werden, welcher einen nachfolgenden Schichtauftrag ermöglicht, ohne dass hierfür die Schichtauftragsvorrichtung in anderer Weise als parallel zur Ebene des Schichtauftrags bewegt werden muss. Insbesondere kann diese Richtungskomponente bewirkt werden, indem die Substratplatte in einer Richtung parallel zur Oberfläche der Substratplatte bewegt wird. Eine solche Bewegung enthält aufgrund des Winkels zwischen dieser Oberfläche und der Ebene des Schichtauftrags die für den beim nacheinander folgenden Schichtauftrag erforderlichen Vorschub erforderliche Richtungskomponente.

Es ist insbesondere weiter bevorzugt, dass die Oberfläche der Substratplatte in dem Bereich, in dem die Schichten aufgetragen werden, horizontal in Bezug auf die Schwerkraftrichtung verläuft. In diesem Fall wird die Schicht in einer Ebene aufgetragen, die schräg zur Horizontalen verläuft und die Schichtauftragsvorrichtung muss für einen solchen, schräg zur Horizontalen verlaufenden Schichtauftrag ausgebildet sein.

Bei einer hierzu alternativen, bevorzugten Ausführungsform ist vorgesehen, dass die Oberfläche der Substratplatte in dem Bereich, in dem die Schichten aufgetragen werden, schräg zu Horizontalen in Bezug auf die Schwerkraftrichtung verläuft. Indem die Oberfläche der Substratplatte im Schichtauftragsbereich schräg zur Horizontalen verläuft, wird es ermöglicht, dass die Schicht in einer horizontalen Ebene aufgetragen wird. Die Schichtauftragsvorrichtung kann entsprechend für eine Bewegung in einer horizontalen Ebene ausgebildet sein. Dabei ist zu verstehen, dass auch dann, wenn die Substratplatte schräg zur Horizontalen verläuft, ein auch schräg zur Horizontalen verlaufender Materialauftrag vorgenommen werden kann und die Materialauftragsvorrichtung entsprechend ausgebildet sein kann.

Bei den beiden vorgenannten Ausführungsformen ist es weiterhin vorzugsweise vorgesehen, dass die aufgetragenen Schichten in einen benachbart zu einem Fertigungsabschnitt, in dem die Schichten aufgetragen werden, liegenden, als Haltebereich ausgebildeten, benachbarten Fertigungsabschnitt verfahren werden, in dem eine durch die aufgetragenen Schichten gebildeten oberen Fläche des aufgetragenen Materials durch eine parallel zur Oberfläche der Substratplatte verlaufende untere Fläche einer Deckplatte bedeckt und gestützt wird. Bei dieser Ausgestaltung erfolgt in einem bestimmten Fertigungsabschnitt, in dem die Höhe des Materials oberhalb der Substratplatte eine bestimmte Höhe erreicht hat, eine Stützung des Materials durch einerseits die Substratplatte und andererseits eine Deckplatte. Der Abstand zwischen Substratplatte und Deckplatte entspricht dabei der maximalen Höhe des Schichtbettes, also der Anzahl der Schichten multipliziert mit der Schichtdicke. Durch das Bereitstellen einer solchen Deckplatte kann das Material in einer günstigen Weise auf der Substratplatte stabilisiert werden und hierdurch der schräge Schichtauftrag in geometrisch präziser und reproduzierbarer Weise bewerkstelligt werden. Die Deckplatte kommt hierbei jeweils mit den von der Substratplatte wegweisenden Endbereichen der Materialschichten in Kontakt und stützt diese ab. Dabei ist zu verstehen, dass die Deckplatte auch in Form eines Endlosförderbandes oder einer sich mitbewegenden Platte ausgeführt sein kann, die sich synchron zur Bewegung der Substratplatte bewegt. Auf diese Weise wird eine Relativbewegung zwischen dem aufgetragenen Material und der Deckplatte vermieden, welche andernfalls eine Störung der Gleichmäßigkeit des Schichtauftrags im Randbereich zur Deckplatte zur Folge haben könnte.

Gemäß einer weiteren bevorzugten Ausführungsform ist die Oberfläche der Substratplatte in eine erste Oberfläche eines ersten Substratplattensegments und zumindest eine weitere Oberfläche eines weiteren Substratplattensegments unterteilt. Bei dieser Fortbildung wird die Substratplatte in zwei oder mehrere benachbarte Substratplattensegmente unterteilt. Unter einem Substratplattensegment ist hierbei ein fertigungstechnisch separater Abschnitt der Substratplatte zu verstehen, der alleinig aufgrund von Steuerungsdaten des Schichtauftrags und der Aushärtefolge definiert sein kann. In diesem Fall stellt ein Substratplattensegment den Bereich der Substratplatte dar, auf dem ein oder mehrere Produkte gefertigt werden, die zeitgleich von der Substratplatte entnommen werden können, da sie quasi zeitgleich begonnen und fertig gestellt werden. Unter einem Substratplattensegment kann insbesondere aber auch ein physikalisch separates Bauteil verstanden werden. In diesem Fall setzt sich die Substratplatte durch mehrere aneinander gefügte Segmente zusammen. Die Segmente können in diesem Fall ebenfalls dazu genutzt werden, um auf jeweils einem Segment eines oder mehrere Produkte aufzubauen, die quasi zeitgleich begonnen und fertig gestellt werden und dann von dem Substratplattensegment abgelöst werden können.

Dabei ist es insbesondere bevorzugt, wenn die Substratplattensegmente lösbar miteinander oder lösbar mit einem Grundträger verbunden sind und jedes Substratplattensegment nach Herstellen eines oder mehrere Produkte auf seiner Oberfläche von einem benachbarten Substratplattensegment oder dem Grundträger gelöst wird, um das/die darauf befindliche(n) Produkt(e) weiteren Bearbeitungsschritten zuzuführen. Mit dieser Fortbildung wird es möglich, jedes Substratplattensegment aus der Fertigungsvorrichtung herauszunehmen, um die darauf befindlichen, fertig gestellten Produkte weiteren Bearbeitungsschritten zuzuführen. Solche weiteren Bearbeitungsschritte können beispielsweise ein sorgfältiges Abtrennen des Produkts von dem Substratplattensegment eine spanende Nachbearbeitung, ein nachträgliches Aushärten und dgl. sein.

Noch weiter ist es dabei insbesondere bevorzugt, wenn die Substratplattensegmente in dem Fertigungsabschnitt, in dem die Schichten aufgetragen werden, so nebeneinander bereitgestellt werden, dass zwischen den Substratplattensegmenten kein Material hindurchtreten kann. Die solcherart durchgeführte Bereitstellung der Substratplattensegmente ist insbesondere vorteilhaft, wenn mit einer einzigen Schichtauftragsvorrichtung Schichten über mehrere Substratplattensegmente hinweg in einem Arbeitsgang aufgetragen werden. In diesem Fall wird verhindert, dass Material aus einem Schichtauftrag zwischen den Substratplattensegmenten hindurchtreten kann, was einerseits unerwünschten Materialverlust und andererseits eine geometrische Beeinflussung der Schichtdicke und des Schichtverlaufs haben könnte. Dies kann beispielsweise erreicht werden, indem die Substratplattensegmente mit zueinander kongruenten Kantenabschnitten unmittelbar aneinander anliegen oder indem eine entsprechende separate Dichtung zwischen zwei Substratplattensegmenten angeordnet ist.

Noch weiter ist es bevorzugt, dass die Substratplatte als Endlosfördervorrichtung ausgebildet ist, insbesondere indem die Substratplattensegmente als Segmente einer Endlosfördervorrichtung ausgebildet sind. Die Substratplattensegmente können beispielsweise an einem Endlosförderband befestigt sein oder solcherart miteinander verbunden sein, dass sie in Gestalt einer Gliederkette ein solches Endlosförderband bilden. In diesem Fall können die Substratplattensegmente in aufeinanderfolgender Weise entlang eines Obertrums und eines Untertrums bewegt werden, wobei während der Bewegung entlang des Obertrums der Schichtauftrag und die selektive Schichtaushärtung erfolgt. Die Entfernung von nicht ausgehärtetem, aufgetragenem Material aus dem Zwischenraum zwischen den hergestellten Produkten und die Entnahme der Produkte kann ebenfalls im Bereich des Obertrums erfolgen, beispielsweise durch entsprechende Absaugeinrichtungen bzw. mechanische Trennvorrichtungen. Es ist aber in gleicher Weise auch möglich, die Entfernung nicht ausgehärteten Materials im Bereich des Untertrums oder bei Übergang vom Obertrum in den Untertrum erfolgen zu lassen, beispielsweise schwerkraftbedingt und die fertig gestellten Produkte dann entweder mitsamt einem Substratplattensegment oder unmittelbar vom Substratplattensegment im Bereich des Untertrums abzunehmen.

Gemäß einer weiteren bevorzugten Ausführungsform ist vorgesehen, dass die Substratplattensegmente solcherart ausgebildet und angeordnet werden, dass ein erstes Produkt oder eine Gruppe von ersten Produkten auf einem einzigen Substratplattensegment aufgebaut wird und das ein weiteres Produkt oder eine Gruppe von weiteren Produkten auf einem weiteren oder mehreren weiteren Substratplattensegmenten aufgebaut wird. Bei dieser Ausgestaltung können einerseits ein oder mehrere Produkte auf einem einzigen Substratplattensegment hergestellt werden, um auf diese Weise mit hoher Produktivität kleine Produkte in einer sehr schnellen Fertigungszeit herzustellen. Andererseits ist es auch möglich, ein einziges Produkt auf mehreren Substratplattensegmenten herzustellen. Dies kann insbesondere dann vorteilhaft sein, wenn größere Produkte mit dem erfindungsgemäßen Verfahren hergestellt werden sollen, also solche Produkte, deren Längsstreckung oder Auflagefläche größer als die Oberfläche eines Substratplattensegments ist. Noch weiter ist vorgesehen, dass eine Gruppe von mehreren Produkten auf zwei oder mehr Substratplattensegmenten hergestellt werden kann. Dies kann insbesondere bei Produkten erforderlich sein, die sich in nur einer bestimmten Richtung sehr weit erstrecken. So kann mit dem erfindungsgemäßen Verfahren ein Produkt hergestellt werden, dessen Länge über mehrere Substratbettensegmente reicht. Wenn mehrere solcher Produkte hergestellt werden sollen, so kann gemäß dieser Fortbildungsform eine Gruppe, von solchen Produkten gebildet werden und diese Gruppe über mehrere Substratplattensegmente erstreckt, dann hergestellt werden.

Das erfindungsgemäße Verfahren zeichnet sich insbesondere dadurch aus, dass das Material als zusammenhängende Schicht auf das erste und das zumindest eine weitere Substratplattensegment solcherart aufgetragen und selektiv ausgehärtet wird, dass der maximale Abstand zwischen dem ersten Substratplattensegment und einem zur Herstellung des ersten Produkts darauf aufgetragenen Schichtabschnitts der Schicht in zumindest einem, vorzugsweise mehreren, insbesondere allen Verfahrensstadien sich von dem maximalen Abstand zwischen dem weiteren Substratplattensegment und einer zur Herstellung des weiteren Produkts darauf aufgetragenen Schichtabschnitts der Schicht unterscheidet. Gemäß dem erfindungsgemäßen Verfahren liegt das Material also zumindest in einem Verfahrensstadium der Fertigung solcherart vor, dass der Abstand zwischen einem ersten Substratplattenbereich und der oberhalb dieses Bereichs aufgetragenen Schicht größer ist als der Abstand zwischen einem anderen Substratplattenbereich und der oberhalb dieses anderen Bereichs aufgetragenen Schicht, bei der es sich um dieselbe Schicht handelt wie zuvor. Noch weiter kann das erfindungsgemäße Verfahren fortgebildet werden durch die Schritte: Entfernen von auf dem ersten Substratplattensegment angeordnetem Material, welches nicht ausgehärtet wurde, ohne hierbei Material eines weiteren Substratplattensegments zu entfernen, und darauffolgendes Entfernen von auf einem weiteren Substratplattensegment angeordnetem Material, welches nicht ausgehärtet wurde. Für die erfindungsgemäße, quasi-kontinuierliche generative Fertigung ist es an der Entnahmestelle besonders vorteilhaft, wenn das Entfernen des nicht ausgehärteten Materials in solcher Weise erfolgen kann, dass ein benachbarter Bereich hierdurch nicht beeinflusst wird und das nicht ausgehärtete Material in diesem benachbarten Bereich stehen bleibt. Während der generativen Fertigung hat das nicht ausgehärtete Material eine Stützfunktion und dient dazu, um darüber liegende Schichten aufzunehmen und zu tragen. Das nicht ausgehärtete Material darf daher in der Regel nicht entfernt werden, bevor das Produkt nicht vollständig aufgebaut und ausgehärtet worden ist. Um nun aber unter einer solchen Vorgabe die Notwendigkeit zu verhindern, dass fertig gestellte Produkte zunächst eine längere, der Prozesssicherheit dienende Strecke zurücklegen müssen, bis sie zu der Entnahmestelle gelangen, an dem das nicht ausgehärtete Material entfernt wird, ist es vorteilhaft, wenn die Materialentfernungsvorrichtung die Materialentfernung bewerkstelligen kann, ohne den unmittelbar benachbarten Bereich hierbei zu beeinflussen. Dies ermöglicht die schnelle und quasi-kontinuierliche Fertigung und vermeidet die Bereitstellung eines Sicherheitsabstandes zwischen Schichtauftragsvorrichtung und Materialentfernungsvorrichtung.

Noch weiter ist es bevorzugt, dass in einer ersten Phase des Herstellungsvorgangs nur Schichtbereiche einer Schicht selektiv ausgehärtet werden, welche zur Herstellung des ersten Produktes dienen und in einer letzten Phase des Herstellungsvorgangs nur Schichtbereiche einer Schicht selektiv ausgehärtet werden, welche zur Herstellung des weiteren Produktes dienen und vorzugsweise in einer zwischen der ersten und der letzten Phase liegenden mittleren Phase des Herstellungsvorgangs Schichtbereiche einer Schicht ausgehärtet werden, welche zur Herstellung des ersten und des weiteren Produktes dienen. Mit der so erreichten, quasi-kontinuierlichen und simultanen Fertigung von Produkten in unterschiedlichen Fertigstellungsstadien wird ein produktives und schnelles Verfahren zur individuellen Herstellung von kleinen Produkten mittels eines generativen Fertigungsverfahrens erzielt.

Noch weiter ist es bevorzugt, wenn zwischen den Substratplattensegmenten eine Trennwand bereitgestellt wird, welche den oberhalb jedes Substratplattensegments bestehenden Bauraum von dem oberhalb eines benachbarten Substratplattensegments bestehenden Bauraum abtrennt. Eine solche Trennwand ermöglicht oder vereinfacht die Entfernung von nicht ausgehärtetem Material oberhalb von einem Substratplattensegment, ohne hierbei das nicht ausgehärtete Material in einem hierzu benachbarten Substratplattensegment zu beeinflussen. Dabei ist zu verstehen, dass eine solche Trennwand als Bestandteil der Fertigungsvorrichtung bereitgestellt werden kann und in diesem Fall beispielsweise so ausgeführt werden kann, dass sie simultan zum Schichtauftrag nachgeführt wird, um jeweils die exakte Höhe oder etwas weniger als die exakte Höhe des Materialauftrags im Bereich zwischen zwei Substratplattensegmenten aufzuweisen.

Gemäß einer hierbei bevorzugten Ausführungsform ist vorgesehen, dass die Trennwand durch Aushärten des aufgetragenen Materialmaterials während des Herstellungsvorgangs des/der Produkts/Produkte hergestellt wird. Mit dieser Fortbildungsform wird jeweils am Rand eines Substratplattensegments während des Fertigungsvorgangs aus dem aufgetragenen Material eine solche Trennwand hergestellt. Diese Vorgehensweise hat den Vorteil, dass auf konstruktiv aufwändige Trennwandnachführungen verzichtet werden kann. Stattdessen wird entlang des Randbereichs eines Substratplattensegments eine entsprechende Trennwand aufgebaut, die dann bei Entfernen der Produkte von dem Substratplattensegment ebenfalls entfernt werden kann oder die im Zuge der Entfernung von nicht ausgehärtetem Material von dem benachbarten Substratplattensegment entfernt wird.

Dabei ist es besonders bevorzugt, wenn die Trennwand zwischen zwei Substratplattensegmenten mit zumindest einem der beiden Substratplattensegmente verbunden ist. Durch Verbindung der Trennwand mit beiden Substratplattensegmenten, welche sie voneinander abtrennt, kann zugleich auch eine sichere Abdichtung gegen Materialdurchtritt zwischen den Substratplattensegmenten erreicht werden. Die Verbindung kann hierbei durch generativen Aufbau der Trennwand auf einem oder beiden Substratplattensegmenten oder durch entsprechend konstruktive Verbindung eines zur Vorrichtung gehörenden Trennwandbauteils erzielt werden.

Gemäß einer noch weiteren bevorzugten Ausführungsform ist vorgesehen, dass das Material in einem ersten Fertigungsabschnitt in einem quasi-kontinuierlichen Verfahren auf die Substratplatte aufgetragen und selektiv vorbestimmte Bereiche einer jeweils aufgetragenen Schicht ausgehärtet werden und in einem zweiten Fertigungsabschnitt fertig ausgehärtete Produkte quasi-kontinuierlich entnommen werden. Durch diese Ausgestaltung wird ein quasi-kontinuierlicher, generativer Fertigungsprozess ausgeführt, der sich durch hohe Produktivität auszeichnet und zugleich auch sehr kleine Produkte in einer sehr kurzen Zeitspanne generativ herstellen kann. Diese Fertigungsweise ermöglicht eine qualitativ hochwertige generative Herstellung in einem ersten Fertigungsabschnitt und zugleich eine diese generative Fertigung nicht negativ beeinflussende Entnahme von fertig gestellten Produkten in einem zweiten Fertigungsabschnitt, der von dem ersten Fertigungsabschnitt beabstandet ist. Dies kann insbesondere mittels eines Endlosförderbandes, an dem die Substratplattensegmente angeordnet sind oder welches durch die Substratplattensegmente gebildet wird, erreicht werden. Insbesondere kann bei dieser Ausgestaltung der erste Fertigungsabschnitt in einer abgeschlossenen, inerten Atmosphäre gehalten werden, um die für eine generative Fertigung nach bestimmten Verfahren erforderliche Randbedingung einstellen zu können, wohingegen der zweite Fertigungsabschnitt eine Ausschleusung der Produkte ermöglicht oder die Produkte bereits beim Übergang vom ersten in den zweiten Fertigungsabschnitt aus der inerten Atmosphäre ausgeschleust werden.

Noch weiter ist es bevorzugt, dass vor jedem Materialauftrag die ausgehärteten Bereiche der zuvor aufgetragenen Schicht oberflächlich beschliffen werden. Durch eine solche Oberflächenbearbeitung, die insbesondere als Beschleifung, aber auch durch andere spanende Fertigungsverfahren mit geometrisch definierter oder geometrisch undefinierter Schneide erfolgen kann, wird die geometrische Präzision des generativen Fertigungsverfahrens weiter erhöht. Insbesondere wird durch eine solche spanende Bearbeitung eine definierte Auflagefläche und Verbindungsstelle für die darüber liegende Schicht und die darin auszuhärtenden Bereiche bereitgestellt. Zudem wird durch die spanende Bearbeitung eine definierte Schichtdicke eingestellt, was für ein reproduzierbares geometrisches Fertigungsergebnis vorteilhaft ist.

Noch weiter ist es bevorzugt, dass zur Aushärtung des/der Produkte auf der Substratplatte, insbesondere auf allen Substratplattensegmenten eine einzige Strahlungsquelle, insbesondere ein einziger Strahlengang einer einzigen Strahlungsquelle genutzt wird. Grundsätzlich ist zu verstehen, dass zur Beschleunigung des Fertigungsvorgangs auch auf mehrere Strahlenquellen oder mehrere Strahlengänge einer einzigen Strahlenquelle zurückgegriffen werden kann. Das erfindungsgemäße Herstellungsverfahren zeichnet sich aber insbesondere dadurch aus, dass es zwar mehrere Produkte gleichzeitig herstellt und diese Produkte in unterschiedlichen Fertigungsstadien sind, d.h. insbesondere aus einer unterschiedlichen Anzahl von Schichten aufgebaut sind. Besonders ist hierbei aber, dass sowohl der Auftrag einer Schicht durch eine einzige Schichtauftragsvorrichtung für alle Substratplattensegmente und darauf aufgebauten, zu fertigenden Produkte erfolgen kann und dass darüber hinaus auch die Aushärtung der bestimmten Bereiche einer Schicht für alle zu fertigenden Produkte durch eine einzige Strahlungsquelle erfolgen kann.

Schließlich kann das erfindungsgemäße Verfahren weiter fortgebildet werden durch die Schritte: selektives Aufbringen einer Materialschicht oder Aufbringen einer n-ten Materialschicht auf eine Substratträgerplatte und selektives Aushärten von Teilen der Materialschicht mittels Einwirken einer energiereichen Strahlung, insbesondere einer Laserstrahlung, auf diese Teile der Materialschicht, Führen der energiereichen Strahlung bzw. einer selektiven Materialauftragsvorrichtung über die n-te Materialschicht nach Führungsdaten, welche aus den geometrischen Daten einer x-ten Querschnittsfläche eines ersten Produkts ermittelt wurden, selektives Aufbringen einer Materialschicht oder Aufbringen einer n+1-ten Materialschicht auf die n-te Materialschicht, Führen der energiereichen Strahlung bzw. einer selektiven Materialauftragsvorrichtung über die n+1-te Materialschicht nach Führungsdaten, welche aus den geometrischen Daten einer x+1-ten Querschnittsfläche des ersten Produkts ermittelt wurden, Führen der energiereichen Strahlung bzw. einer selektiven Materialauftragsvorrichtung über die n-te Materialschicht nach Führungsdaten, welche aus den geometrischen Daten einer y-ten Querschnittsfläche eines zweiten Produkts ermittelt wurden, und Führen der energiereichen Strahlung bzw. einer selektiven Materialauftragsvorrichtung über die n+1-te Materialschicht nach Führungsdaten, welche aus den geometrischen Daten einer y+1-ten Querschnittsfläche des zweiten Produkts ermittelt wurden wobei, x ungleich y ist. Bei dieser Fortbildungsform werden zumindest zwei Produkte hergestellt, indem sie in einem gemeinsamen Schichtauftrag in zwei unterschiedlichen Schichtbereichen ein und derselben Schicht einer selektiven Aushärtung unterzogen werden, wobei in dieser Schicht in den Produkten selbst unterschiedliche Höhen gegenüber der Substratplatte dargestellt sind.

Gemäß einer weiteren bevorzugten Ausführungsform kann die erfindungsgemäße Vorrichtung fortgebildet werden, indem der Substratplattenträger als Endlosfördervorrichtung ausgebildet ist und die Materialauftragsvorrichtung ausgebildet ist, um das aushärtbare Material unmittelbar auf den Substratplattenträger abzugeben und/oder indem eine Abtrennvorrichtung an dem Substratplattenträger angeordnet ist zum Abtrennen der darauf hergestellten Produkte nach Ihrer Fertigstellung von dem Substratplattenträger oder einer daran angeordneten Substratplatte, wobei vorzugsweise die Endlosfördervorrichtung an einer Umlenkeinrichtung umgelenkt und hierbei verformt wird und die Produkte hierdurch abgetrennt werden. Durch eine solche Ausgestaltung wird eine besonders effiziente und verbrauchsmaterialarme Ausgestaltung der erfindungsgemäßen Vorrichtung bereitgestellt, die eine Endlosfördervorrichtung beinhaltet, um die Produkte darauf aufzubauen und die für die hierfür notwendige Relativbewegung notwendige Bewegungsachse bereitzustellen. Weiterhin ist gemäß dieser Fortbildungsform eine Abtrennvorrichtung bereitgestellt, wobei zu verstehen ist, dass diese Abtrennvorrichtung in Gestalt einer Bearbeitungsvorrichtung ausgeführt sein kann, die einen tatsächlichen Abtrennvorgang durch eine spanende Bearbeitung ausführt. Alternativ kann die Abtrennvorrichtung aber auch in Gestalt eines Mechanismus ausgeführt sein, der eine Scher- oder Biegekraft oder eine sonstige Krafteinwirkung auf die Verbindungsebene des Produkts mit der Fläche, auf der das Produkt aufgebaut wurde, ausübt, um das Produkt hiervon abzutrennen. Insbesondere kann die Abtrennvorrichtung als Umlenkrolle eines Förderbands ausgeführt sein, die eine Verformung des Förderbands aus einer planen Ebene in eine gekrümmte Ebene bewirkt und hierdurch ein auf diesem Förderband aufgebautes Produkt in der Grenzfläche zwischen Produkt und Förderband ablöst. Die Abtrennvorrichtung kann alternativ als ein beheiztes Trennelement, beispielsweise ein Schwert, ein Draht oder dergleichen, ausgeführt sein, dessen Temperatur so eingesteuert oder eingeregelt wird, dass sie oberhalb der Schmelztemperatur oder der Verdampfungstemperatur des ausgehärteten Materials liegt.

Gemäß einer weiteren bevorzugten Ausführungsform ist vorgesehen, dass das aushärtbare Material aus einer ersten Düsenanordnung mit zumindest einer Düse und die Farbe aus einer zweiten Düsenanordnung mit zumindest einer Düse abgegeben wird und dass die erste und zweite Düsenanordnung an einem Druckkopf angeordnet sind, der während des Auftrags entlang zumindest einer Achse bewegt wird, oder die erste Düsenanordnung an einem ersten Druckkopf und die zweite Düsenanordnung an einem zweiten Druckkopf angeordnet ist, und der erste und/oder zweite Druckkopf während des Auftrags entlang einer Achse bewegt wird, wobei die Achsen der Druckköpfe parallel zueinander liegen, insbesondere koaxial, und/oder die erste und zweite Düsenanordnung während des Auftrags unabhängig voneinander bewegt wird. Gemäß dieser bevorzugten Ausführungsform werden das aushärtbare Material und die Farbe aus separaten Düsenanordnungen abgegeben, wobei zu verstehen ist, dass jede Düsenanordnung ein oder mehrere Düsen umfassen kann. Die Düsenanordnungen können dabei in bestimmten bevorzugten Ausführungsformen an ein und demselben Druckkopf angeordnet sein und folglich gemeinsam beweglich ausgeführt sein, in anderen bevorzugten Ausführungsformen sind die Düsenanordnungen an voneinander getrennten, separaten Druckköpfen angeordnet und können folglich unabhängig voneinander bewegt werden. Es ist grundsätzlich zu verstehen, dass die genannten Ausführungsformen sich sowohl zur Ausführung des ersten und des zweiten Auftragsmodus als auch des ggfs. dritten Auftragsmodus zur Herstellung eines selektiv eingefärbten, dreidimensionalen Produkts eignen. Unter einer Düse ist im Sinne der Beschreibung und der Ansprüche eine sich an einem Kanal anschließende Austrittsöffnung zu verstehen, deren Querschnitt dem Kanalquerschnitt entsprechen kann oder diesem gegenüber verengt sein kann.

Noch weiter ist es bevorzugt, dass die Substratträgervorrichtung und die Materialauftragsvorrichtung solcherart zueinander relativ beweglich und an Führungseinrichtungen geführt sind, dass die aufeinanderfolgenden Schichten im ersten Auftragsmodus in Schichtebenen aufgetragen werden, die schräg zu der Oberfläche der Substratplatte ausgerichtet sind, die Farbe im zweiten Auftragsmodus vorzugsweise in einer mit dem ersten Betriebsmodus übereinstimmenden Schichtebene aufgetragen wird, insbesondere entlang einer in einer solchen Schichtebene liegenden Achse, und die Substratplatte bzw. der Druckträger während des Auftragsvorgangs in zumindest einer Richtung bewegt wird, die eine Richtungskomponente senkrecht zu der Schichtebene aufweist. Mit dieser Ausführungsform wird eine spezifisch vorteilhafte Konstruktion zur Führung der Relativbewegung zwischen der Materialauftragsvorrichtung und der Substratträgervorrichtung bereitgestellt, die ein kontinuierliches Herstellungsverfahren für dreidimensionale Produkte und für zweidimensionale Drucke ermöglicht. Die Vorrichtung zeichnet sich dabei dadurch aus, dass der Schichtauftrag schräg zu der Oberfläche der Substratplatte bzw. Substratträgervorrichtung oder schräg zu der Vorschubbewegung, die die Substratträgervorrichtung zwischen dem Auftrag von zwei Schichten ausführt, erfolgt. Diese Schräganordnung ermöglicht es einerseits, Produkte mit großer Längserstreckung in einem additiven Herstellungsprozess mit der erfindungsgemäßen Vorrichtung herzustellen, theoretisch kann mit dieser Ausgestaltung der Vorrichtung ein Produkt mit unendlicher Länge hergestellt werden. Erfindungsgemäß wird bei dieser Ausführungsform darüber hinaus die alternative Arbeitsweise im zweiten Auftragsmodus erzielt, insbesondere in dem die Auftragsvorrichtung entlang einer Achse in der schrägen Ebene bewegt wird und hierbei eine Bewegung entlang einer zweiten Achse bereitgestellt wird, insbesondere in dem der Druckträger entlang dieser zweiten Achse gefördert wird.

Es ist dabei weiter bevorzugt, dass die Steuerungsvorrichtung ausgebildet ist, um die Materialauftragsvorrichtung solcherart anzusteuern, dass sie das Material selektiv auf vorbestimmte Bereiche abgibt, welche dem Querschnitt eines Produkts in der jeweiligen Schicht entsprechen,

Die erfindungsgemäße Vorrichtung kann weiter fortgebildet werden durch eine Steuerung zur Ansteuerung der Materialauftragsvorrichtung, welche ausgebildet ist, um die Materialauftragsvorrichtung anzusteuern, dass eine Trennwand während des Herstellungsvorgangs des Produkts durch Aushärten des aufgetragenen Materials hergestellt wird.

Es ist dabei weiter bevorzugt, dass die Materialauftragsvorrichtung solcherart geführt ist, dass sie in einer Ebene verschieblich gelagert ist, die schräg zu der Oberfläche der Substratplatte verläuft.

Die erfindungsgemäße Vorrichtung kann weiter fortgebildet werden durch eine zweite Materialauftragsvorrichtung, welche ausgebildet und beweglich ist, um ein zweites Material als homogene Schicht aufzutragen bevor ein selektiver Materialauftrag erfolgt.

Es ist dabei weiter bevorzugt, dass die Materialauftragsvorrichtung ausgebildet ist, um eine Materialmischung aus zwei unterschiedlichen Materialien selektiv aufzutragen, wobei die zwei unterschiedlichen Materialien ausgebildet sind, um nach dem selektiven Auftrag durch chemische Reaktion miteinander auszuhärten, oder ein Material selektiv aufzutragen, wobei das Material ausgebildet sind, um nach dem selektiven Auftrag durch chemische Reaktion mit einem Umgebungsgas auszuhärten, oder ein schmelzflüssiges Material selektiv aufzutragen, wobei das schmelzflüssige Material ausgebildet sind, um nach dem selektiven Auftrag durch Abkühlen auszuhärten.

Es ist dabei weiter bevorzugt, dass die Materialauftragsvorrichtung(en) solcherart in Bezug auf die Substratplatte und die Schwerkraftrichtung bei Betriebsstellung der Vorrichtung angeordnet und ausgebildet ist/sind, dass das daraus abgegebene Material in Schwerkraftrichtung als Schicht auf die Substratplatte oder darauf angeordnete Schichten bzw. auf vorbestimmte Bereiche der Substratplatte oder darauf angeordneten Schichten zugeführt werden kann.

Es ist dabei weiter bevorzugt, dass die Steuerungsvorrichtung ausgebildet ist, um die Materialauftragsvorrichtung und/oder die Fördervorrichtung so anzusteuern, dass eine Schicht in einer Dicke zwischen 5 µm und 200 µm aufgetragen wird.

Bezüglich der spezifischen Ausgestaltungen und Vorteile der so fortgebildeten Vorrichtung für den zweidimensionalen und den dreidimensionalen Druck wird auf die voranstehende Erläuterung der entsprechend ausgebildeten Vorrichtung und das entsprechend erläuterte Verfahren für einen dreidimensionalen Druck in einer solchen Schräganordnung Bezug genommen. Es ist dabei grundsätzlich zu verstehen, dass auch die Vorrichtung für zweidimensionalen und dreidimensionalen Druck solcher Art fortgebildet werden kann, dass der additive Herstellungsvorgang im ersten Auftragsmodus und ggfs. im dritten Auftragsmodus solcher Art erfolgt und die Vorrichtung entsprechend fortgebildet ist, wie dies entsprechend für die voranstehend erläuterte Vorrichtung beschrieben ist.

Dabei kann insbesondere vorgesehen sein, dass eine Mehrzahl von verschiedenen Materialien aufgetragen werden, vorzugsweise aus mehreren Materialauftragsdüsen und dass das dreidimensionale Produkt durch Reaktion der verschiedenen Materialien miteinander aushärtet oder das dreidimensionale Produkt Bereiche mit unterschiedlichen mechanischen Materialeigenschaften aufweist.

Das Verfahren kann weiterhin fortgebildet werden, indem die Substratplatte als Endlosfördervorrichtung ausgebildet ist und die darauf hergestellten Produkte nach Ihrer Fertigstellung durch eine Abtrennvorrichtung von der Substratplatte abgetrennt werden, insbesondere indem die Substratplatte umgelenkt und hierbei verformt wird und die Produkte hierdurch abgetrennt werden.

Das Verfahren kann weiterhin fortgebildet werden, indem das aushärtbare Material aus einer ersten Düsenanordnung mit zumindest einer Düse und die Farbe aus einer zweiten Düsenanordnung mit zumindest einer Düse abgegeben wird und dass die erste und zweite Düsenanordnung an einem Druckkopf angeordnet sind, der während des Auftrags entlang zumindest einer Achse bewegt wird, die erste Düsenanordnung an einem ersten Druckkopf und die zweite Düsenanordnung an einem zweiten Druckkopf angeordnet ist, und der erste und/oder zweite Druckkopf während des Auftrags entlang einer Achse bewegt wird, wobei die Achsen der Druckköpfe parallel zueinander liegen, insbesondere koaxial, und/oder die erste und zweite Düsenanordnung während des Auftrags unabhängig voneinander bewegt wird.

Das Verfahren kann weiterhin fortgebildet werden, indem die aufeinanderfolgenden Schichten im ersten Auftragsmodus in Schichtebenen aufgetragen werden, die schräg zu der Oberfläche der Substratplatte ausgerichtet sind, die Farbe im zweiten Auftragsmodus vorzugsweise in einer mit dem ersten Betriebsmodus übereinstimmenden Schichtebene aufgetragen wird, insbesondere entlang einer in einer solchen Schichtebene liegenden Achse, und die Substratplatte bzw. der Druckträger während des Auftragsvorgangs in zumindest einer Richtung bewegt wird, die eine Richtungskomponente senkrecht zu der Schichtebene aufweist.

Das Verfahren kann weiterhin fortgebildet werden, indem der additive Herstellungsvorgang im ersten Auftragsmodus fortgebildet ist nach einem der Unteransprüche 38-50 oder 58-67.

Bezüglich der spezifischen Vorteile, Ausgestaltungen und Varianten des erfindungsgemäßen Verfahrens wird Bezug genommen auf die vorstehende Erläuterung bzgl. der korrespondierend ausgeführten erfindungsgemäßen Vorrichtung.

Die Aufgabe wird gemäß einem weiteren Aspekt der Erfindung gelöst durch eine Vorrichtung zur Herstellung von Produkten mit individueller Geometrie, umfassend eine Substratplatte, eine Materialauftragsvorrichtung zum Auftragen von Material oberhalb der Substratplatte, wobei die Substratplatte in mehrere Substratplattensegmente unterteilt ist, die lösbar miteinander oder mit einem Grundträger verbunden sind.

Die erfindungsgemäße Vorrichtung zeichnet sich dadurch aus, dass oberhalb einer Substratplatte eine Materialauftragsvorrichtung angeordnet ist, mit der in einem Arbeitsgang eine Materialschicht auf alle Substratplattensegmente der Substratplatte aufgetragen werden kann und/oder eine signaltechnisch mit der Materialauftragsvorrichtung gekoppelte Steuerungsvorrichtung ausgebildet ist, um die Materialauftragsvorrichtung solcherart anzusteuern, dass sie das Material selektiv auf vorbestimmte Bereiche abgibt, welche dem Querschnitt eines Produkts in der jeweiligen Schicht entsprechen. Dabei kann es sich insbesondere um eine relativ zur Substratplatte verfahrbare Materialauftragsvorrichtung zum Auftragen von Material auf die Substratplatte, vorzugsweise eine oberhalb der Substratplatte angeordnete Materialauftragsvorrichtung handeln.

Weiterhin kann eine Strahlungsquelle oberhalb der Substratplatte bereitgestellt sein. Materialauftragsvorrichtung und Strahlungsquelle werden mittels einer Fertigungssteuerungseinrichtung so angesteuert, dass die im ersten Arbeitsgang aufgetragene Materialschicht entweder selektiv in vorbestimmten Bereichen aufgetragen wird und dort aushärtet oder gegebenenfalls in einem weiteren Arbeitsgang mit der Strahlungsquelle oder einem anderen Mittel, beispielsweise durch Zugabe eines weiteren Materials auf vorbestimmte Bereiche der Schicht, selektiv ausgehärtet werden kann.

Die Substratplatte ist erfindungsgemäß in mehrere Segmente unterteilt. Die Segmente können lösbar miteinander verbunden sein, worunter zu verstehen ist, dass jeweils ein Segment mit nur einem benachbarten Segment verbunden ist oder ein Segment mit mehreren umgebenden Segmenten verbunden sein kann. Alternativ ist auch vorgesehen, dass die Segmente nebeneinander angeordnet sind und jedes Segment lösbar mit einem Grundträger verbunden ist. Mit der erfindungsgemäßen Vorrichtung wird es auf diese Weise möglich, mehrere Produkte verteilt auf mehrere Substratplattensegmente generativ zu fertigen und hierbei die Substratplattensegmente solcherart in ihrer Höhe relativ zueinander zu bewegen, dass die Produkte in unterschiedlichen Fertigungsstadien auf den unterschiedlichen Substratplattensegmenten hergestellt werden und das oder die Produkte, die auf einem ersten Substratplattensegment hergestellt worden sind, mit dem Substratplattensegment zu entnehmen und hiervon abzulösen, bevor ein oder mehrere Produkte von einem anderen Substratplattensegment entnommen und abgelöst werden.

Die Vorrichtung kann fortgebildet werden durch eine Strahlungsquelle für einen hochenergetischen Strahl und Strahlführungsmittel zum Führen des Strahls auf vorbestimmte Bereiche einer auf die Substratplatte aufgetragenen Materialschicht.

Die erfindungsgemäße Vorrichtung kann fortgebildet werden, indem die Materialauftragsvorrichtung zum simultanen Auftragen einer Materialschicht oberhalb einer Anzahl der mehreren Substratplattensegmente in einem Arbeitsgang ausgebildet ist.

Weiterhin kann die erfindungsgemäße Vorrichtung fortgebildet werden, indem die Substratplattensegmente und die Materialzufuhreinrichtung mittels eines oder mehrerer Aktuatoren solcherart relativ individuell zueinander bewegbar sind, dass der Abstand zwischen der Ebene der Oberfläche eines ersten Substratplattensegments und eines zur Herstellung eines ersten Produkts darauf aufgetragenen Schichtbereichs der Materialschicht sich von dem Abstand zwischen der Ebene der Oberfläche eines weiteren Substratplattensegments und eines zur Herstellung des weiteren Produkts darauf aufgetragenen Schichtbereichs derselben Materialschicht unterscheidet.

Noch weiter kann die erfindungsgemäße Vorrichtung fortgebildet werden durch eine Materialentfernungsvorrichtung, insbesondere eine Material-Absaugeinrichtung, wobei die Materialentfernungsvorrichtung ausgebildet ist, um nicht ausgehärtetes Material aus einem ein gefertigtes Produkt umgebenden Bereich zu entfernen, und so angeordnet ist, dass sie das Material auf einem ersten Substratplattensegment entfernen kann und hierbei das Material auf einem weiteren, hierzu benachbarten Substratplattensegment belassen kann.

Gemäß einer weiteren bevorzugten Ausführungsform ist vorgesehen, dass die erfindungsgemäße Vorrichtung eine Steuerung aufweist zur Ansteuerung der Führungsvorrichtung des hochenergetischen Strahls oder der Materialauftragsvorrichtung, welche ausgebildet ist, um die Führungsvorrichtung so anzusteuern, dass in einer ersten Phase des Herstellungsvorgangs nur Schichtbereiche einer Schicht selektiv ausgehärtet werden, welche zur Herstellung eines ersten Produktes auf einem ersten Substratplattensegment dienen, in einer letzten Phase des Herstellungsvorgangs nur Schichtbereiche einer Schicht selektiv ausgehärtet werden, welche zur Herstellung eines weiteren Produktes auf einem weiteren Substratplattensegment dienen und in einer zwischen der ersten und der letzten Phase liegenden mittleren Phase des Herstellungsvorgangs Schichtbereiche einer Schicht ausgehärtet werden, welche zur Herstellung des ersten und des weiteren Produktes dienen.

Die erfindungsgemäße Vorrichtung kann weiter fortgebildet werden durch eine Steuerung zur Ansteuerung der Materialauftragsvorrichtung und/oder zur Ansteuerung von zumindest einem Aktuator zur relativen Bewegung zwischen den Substratplattensegmenten und der Materialauftragsvorrichtung, die ausgebildet ist, um die sich nach Auftrag aller Materialschichten einstellende Höhe des Materialbetts auf einem ersten Substratplattensegment verschieden von der nach Auftrag aller Materialschichten resultierende Höhe des Materialbetts auf einem anderen Substratplattensegment bereitzustellen. Hiermit können auf verschiedenen Substratplattensegmenten Produkte unterschiedlicher Bauhöhe hergestellt und diese gleichzeitig fertiggestellt werden.

Weiterhin ist bevorzugt vorgesehen, dass an der Materialauftragsvorrichtung eine Bearbeitungsvorrichtung zum Abtragen eines Oberflächenanteils der ausgehärteten Materialbereiche, vorzugsweise zum oberflächlichen Beschleifen, der ausgehärteten Materialbereiche einer zuvor aufgetragenen Materialschicht angeordnet ist.

Noch weiter ist bevorzugt vorgesehen, dass die Substratplattensegmente an einem Endlos-Förderband angeordnet sind, welches teilweise oder vollständig in einer Bearbeitungskammer verläuft, die gegen die Umgebung soweit abgedichtet ist, dass darin eine kontrollierte, insbesondere inerte Atmosphäre eingestellt werden kann.

Weiter fortgebildet werden kann die Vorrichtung durch zumindest eine Hubeinrichtung, welche mit jedem Substratplattensegment gekoppelt ist oder gekoppelt werden kann, um während des Herstellungsvorgang das jeweilige Substratplattensegment unabhängig von den anderen Substratplattensegmenten in einer vertikalen Richtung anzuheben und abzusenken.

Noch weiter kann die erfindungsgemäße Vorrichtung fortgebildet werden durch eine einzige Strahlungsquelle, die, insbesondere mittels eines einzigen Strahlengangs, zur Aushärtung der auf allen Substratplattensegmenten hergestellten Produkte genutzt wird.

Noch weiter kann die erfindungsgemäße Vorrichtung fortgebildet werden durch eine zwischen den Substratplattensegmenten angeordnete Trennwand, welche den oberhalb jedes Substratplattensegments bestehenden Bauraum von dem oberhalb eines benachbarten Substratplattensegments bestehenden Bauraum abtrennt.

Es ist bevorzugt weiter vorgesehen, dass die Trennwand zwischen zwei Substratplattensegmenten mit zumindest einem der beiden Substratplattensegmenten verbunden oder gegen dieses Substratplattensegment solcherart abgedichtet ist, dass kein Material zwischen Trennwand und Substratplattensegment hindurchtreten kann.

Gemäß einer weiteren bevorzugten Ausführungsform zeichnet sich die Vorrichtung aus durch eine Steuerung zur Ansteuerung der Materialauftragsvorrichtung oder der Führungsvorrichtung des hochenergetischen Strahls, welche ausgebildet ist, um die Materialauftragsvorrichtung bzw. die Führungsvorrichtung so anzusteuern, dass die Trennwand während des Herstellungsvorgangs des Produkts durch selektives Auftragen bzw. selektives Aushärten des aufgetragenen Materials hergestellt wird.

Schließlich kann die erfindungsgemäße Vorrichtung fortgebildet werden durch eine Steuerung der Führungsvorrichtung des hochenergetischen Strahls und/oder der Materialauftragsvorrichtung, welche ausgebildet ist, um die energiereiche Strahlung und/oder die Materialauftragsvorrichtung über die n-te Materialschicht nach Führungsdaten zu führen, welche aus den geometrischen Daten einer x-ten Querschnittsfläche eines ersten Produkts ermittelt wurden, um Teile der n-ten Materialschicht mittels Einwirken einer energiereichen Strahlung bzw. selektivem Auftrag auszuhärten, die energiereiche Strahlung und/oder die Materialauftragsvorrichtung über eine n+1-te Materialschicht nach Führungsdaten zu führen, welche aus den geometrischen Daten einer x+1-ten Querschnittsfläche des ersten Produkts ermittelt wurden, um Teile der n+1-ten. Materialschicht mittels Einwirken der energiereichen Strahlung bzw. selektivem Auftrag auszuhärten, die energiereiche Strahlung und/oder der Materialauftragsvorrichtung über die n-te Materialschicht nach Führungsdaten zu führen, welche aus den geometrischen Daten einer y-ten Querschnittsfläche eines zweiten Produkts ermittelt wurden, um Teile der n-ten Materialschicht mittels Einwirken der energiereichen Strahlung bzw. selektivem Auftrag auszuhärten und die energiereiche Strahlung und/oder der Materialauftragsvorrichtung über die n+1-te Materialschicht nach Führungsdaten zu führen, welche aus den geometrischen Daten einer y+1-ten Querschnittsfläche des zweiten Produkts ermittelt wurden, um Teile der n+1-ten Materialschicht mittels Einwirken der energiereichen Strahlung bzw. selektivem Auftrag auszuhärten wobei x ungleich y ist.

Die erfindungsgemäße Vorrichtung arbeitet vorzugsweise nach einem Verfahren mit den Schritten: Bereitstellen einer Substratplatte welche in ein erstes Substratplattensegment und zumindest ein weiteres Substratplattensegment unterteilt ist, die lösbar miteinander oder mit einem Grundträger verbunden sind, Herstellen eines ersten Produkts auf dem ersten Substratplattensegment durch aufeinanderfolgendes Auftragen von Materialschichten auf das erste Substratplattensegment und selektives Aushärten von vorbestimmten Bereichen jeder aufgetragenen Materialschicht nach deren Auftrag, Herstellen von zumindest einem weiteren Produkt auf dem zumindest einen weiteren Substratplattensegment durch aufeinanderfolgendes Auftragen von Materialschichten auf das weitere Substratplattensegment und selektives Aushärten von vorbestimmten Bereichen jeder aufgetragenen Materialschicht nach deren Auftrag.

Dabei kann insbesondere vorgesehen sein, dass das Verfahren mit folgenden Schritten abläuft: Herstellen eines oder mehrerer Produkte auf oder an der Oberfläche einer Substratplatte mittels selektiven Aushärtens, insbesondere mittels selektiven Sinterns oder Schmelzens, bei dem das Material in aufeinanderfolgenden Schichten aufgetragen wird, nach jedem Schichtauftrag ein oder mehrere vorbestimmte Bereiche selektiv ausgehärtet und mit einem oder mehreren Bereichen der benachbarten, insbesondere der darunterliegenden Schicht verbunden werden, wobei die vorbestimmten Bereiche anhand einer Querschnittsgeometrie des Produkts in der jeweiligen Schicht vorbestimmt werden, selektives Auftragen des Materials in die vorbestimmten Bereiche der Schicht, und Bereitstellen einer Substratplatte welche in ein erstes Substratplattensegment und zumindest ein weiteres Substratplattensegment unterteilt ist, die lösbar miteinander oder mit einem Grundträger verbunden sind, Herstellen eines ersten Produkts auf bzw. an dem ersten Substratplattensegment durch aufeinanderfolgendes selektives Auftragen von vorbestimmten Bereichen von Materialschichten auf das erste Substratplattensegment und selektives Aushärten dieser vorbestimmten Bereiche jeder aufgetragenen Materialschicht nach deren Auftrag und ggfs. Herstellen von zumindest einem weiteren Produkt auf bzw. an dem zumindest einen weiteren Substratplattensegment durch aufeinanderfolgendes selektives Auftragen von vorbestimmten Bereichen von Materialschichten auf das weitere Substratplattensegment und selektives Aushärten der vorbestimmten Bereiche jeder aufgetragenen Materialschicht nach deren Auftrag. Bei dieser Ausgestaltung erfolgt die selektive Aushärtung nach dem Auftrag und wird auf vorbestimmte Bereiche begrenzt, indem ein selektiver Auftrag durchgeführt wird.

Das Verfahren zeichnet sich dadurch aus, dass eine Substratplatte bereitgestellt wird, auf welcher ein erstes und ein weiteres Produkt in einem ersten und einem entsprechend weiteren Substratplattensegment gleichzeitig generativ hergestellt werden können und diese Substratplattensegmente lösbar miteinander oder mit einem Grundträger verbunden sind. Hierdurch wird es ermöglicht, ein einzelnes Substratplattensegment nach Fertigstellung des darauf aufgebauten Produkts zu entnehmen, um das Produkt von dem Substratplattensegment ablösen zu können, während ein weiteres Produkt auf einem anderen Substratplattensegment weiterhin generativ hergestellt wird.

Insbesondere können bei dem Verfahren die Materialschichten auf die zumindest zwei Substratplattensegmente so aufgetragen werden, dass zumindest eine der Materialschichten sich über beide Substratplattensegmente erstreckt. In diesem Fall kann das Verfahren so ablaufen, dass zunächst jeweils eine Materialschicht auf die zumindest zwei Substratplattensegmente aufgetragen wird und diese Materialschicht im Bereich oberhalb beider Substratplattensegmente selektiv ausgehärtet wird.

Die Substratplattensegmente können insbesondere solcherart mit einer einzigen Beschichtungsvorrichtung zusammenwirken, dass auf einem Substratplattensegment ein Produkt in einem ersten Fertigungsstadium aufgebaut wird, beispielsweise mit einer n-ten Schicht oberhalb der Substratplatte und auf einem anderen Substratplattensegment ein anderes Produkt in einem anderen Fertigungsstadium aufgebaut wird, beispielsweise mit einer m-ten aufgebauten Schicht oberhalb der Substratplatte, wobei m ungleich n ist und die n-te und m-te Schicht in einem Arbeitsgang durch die Beschichtungsvorrichtung aufgetragen werden.

Mit dem Verfahren können somit mit zeitlich gestaffelten Fertigungsstartzeitpunkten mehrere Produkte auf einer Substratplatte hergestellt werden, wobei die Produkte teilweise gleichzeitig hergestellt werden und auch zeitversetzt von der Substratplatte abgelöst werden. Auf diese Weise wird es möglich, die Substratplatte mit dem Ziel einer hohen Produktivität mit mehreren Produkten auszulasten, gleichzeitig aber zu vermeiden, dass der Fertigungsstartzeitpunkt erst nach Fertigstellung aller Fertigungsdaten für alle auf der Substratplatte herzustellenden Produkte liegen kann. Stattdessen kann der Fertigungsstartzeitpunkt für jedes Substratplattensegment individuell bestimmt werden und entsprechend auch ein individueller Fertigungsendzeitpunkt für jedes Substratplattensegment erzielt werden. Auf diese Weise wird die Dauer der Fertigung eines individuellen Produkts entscheidend herabgesetzt.

Grundsätzlich ist zu verstehen, dass die Substratplatte in zwei, drei oder mehrere Substratplattensegmente unterteilt sein kann. Dabei ist diese Unterteilung insbesondere als tatsächliche physikalische Unterteilung in einzelne Bauelemente zu verstehen, welche zu einer Substratplatte entsprechend zusammengesetzt werden können. Grundsätzlich können auf alle Substratplattensegmente mit einer einzigen, gemeinsamen Schichtauftragsvorrichtung Schichten aufgetragen werden, was aufgrund der damit verbundenen effizienten Fertigung bevorzugt ist. In bestimmten Anwendungen kann es aber vorteilhaft sein, die Substratplattensegmente mittels separater Schichtauftragsvorrichtungen mit Material zu beschichten, wobei auch hier zu verstehen ist, dass beim erfindungsgemäßen Verfahren zwar ein zeitversetzter Fertigungsbeginn und ein entsprechend zeitversetztes Fertigungsende der Produkte auf den verschiedenen Substratplattensegmenten erfolgt, aber auf mehreren Substratplattensegmenten eine simultane Fertigung vorzugsweise mit einem auf allen Substratplattensegmenten simultanen Schichtauftrag und nachfolgender selektiver Aushärtung bestimmter Bereiche zur generativen Herstellung von Produkten zwecks hoher Produktivität stattfindet.

Gemäß einer ersten bevorzugten Ausführungsform ist vorgesehen, dass der eine oder die mehreren vorbestimmten Bereiche mittels einer energiereichen Strahlung selektiv ausgehärtet und mit einem oder mehreren Bereichen der darunterliegenden Schicht verbunden werden. Diese Aushärtungswirkung kann zusätzlich zu einem anderen Aushärtungseffekt bereitgestellt werden oder kann als alleiniger Aushärtungsmechanismus wirken. Grundsätzlich ist unter einer Aushärtung mittels einer energiereichen Strahlung ein Vorgang zu verstehen, bei dem ein zuvor flüssiges Material durch die Strahlungseinwirkung aushärtet, beispielsweise durch eine Photopolymerisation, oder bei dem ein zuvor als fließfähiges Pulver, Granulat oder dergleichen vorliegendes Material durch die Strahlungseinwirkung erhitzt und hierdurch teilweise oder vollständig aufgeschmolzen und dann durch Abkühlen verfestigt oder gesintert wird. Insbesondere geht diese Aushärtung mit einer Verbindung des Materialbereichs, welcher der Strahlungseinwirkung ausgesetzt ist mit einem benachbarten oder darunterliegenden Materialbereich einher, um so das Produkt als integrales Bauteil aufzubauen.

Weiterhin ist es bevorzugt, dass die Substratplattensegmente so nebeneinander bereitgestellt werden, dass zwischen den Substratplattensegmenten kein Material hindurchtreten kann. Insbesondere kann zu diesem Zweck eine entsprechende Abdichtung zwischen den einzelnen Substratplattensegmenten vorgesehen sein oder die Substratplattensegmente in solcher Weise passend aneinandergefügt sein, dass ein Materialdurchtritt zwischen den Substratplattensegmenten nicht möglich ist.

Noch weiter ist es bevorzugt, dass die Substratplattensegmente als Segmente einer Endlosfördervorrichtung ausgebildet sind. Diese Ausgestaltung ermöglicht in besonders effizienter Weise eine kontinuierliche generative Herstellung von Produkten. Die Substratplattensegmente können beispielsweise an einem Endlosförderband befestigt sein oder solcherart miteinander verbunden sein, dass sie in Gestalt einer Gliederkette ein solches Endlosförderband bilden. In diesem Fall können die Subtratplattensegmente in aufeinander folgender Weise entlang eines Obertrums und eines Untertrums bewegt werden, wobei während der Bewegung entlang des Obertrums der Schichtauftrag und die selektive Schichtaushärtung erfolgt. Die Entfernung von nicht ausgehärtetem, aufgetragenem Material aus dem Zwischenraum zwischen den hergestellten Produkten und die Entnahme der Produkte kann ebenfalls im Bereich des Obertrums erfolgen, beispielsweise durch entsprechende Absaugeinrichtungen bzw. mechanische Trennvorrichtungen. Es ist aber in gleicher Weise auch möglich, die Entfernung nicht ausgehärteten Materials im Bereich des Untertrums oder bei Übergang vom Obertrum in den Untertrum erfolgen zu lassen, beispielsweise schwerkraftbedingt und die fertig gestellten Produkte dann entweder mitsamt einem Substratplattensegment oder unmittelbar vom Substratplattensegment im Bereich des Untertrums abzunehmen.

Weiterhin ist es bevorzugt vorgesehen, dass die Substratplattensegmente solcherart ausgebildet und angeordnet werden, dass das erste Produkt oder eine Gruppe von ersten Produkten auf einem einzigen Substratplattensegment aufgebaut wird und das weitere Produkt oder eine Gruppe von weiteren Produkten auf einem oder mehreren weiteren Substratplattensegmenten aufgebaut wird. Bei dieser Ausgestaltung können einerseits ein oder mehrere Produkte auf einem einzigen Substratplattensegment hergestellt werden, um auf diese Weise mit hoher Produktivität kleine Produkte in einer sehr schnellen Fertigungszeit herzustellen. Andererseits ist es auch möglich, ein einziges Produkt auf mehreren Substratplattensegmenten herzustellen. Dies kann insbesondere dann vorteilhaft sein, wenn größere Produkte mit dem erfindungsgemäßen Verfahren hergestellt werden sollen, also solche Produkte, deren Längsstreckung oder Auflagefläche größer als die Oberfläche eines Substratplattensegments ist. Noch weiter ist vorgesehen, dass eine Gruppe von mehreren Produkten auf zwei oder mehr Substratplattensegmenten hergestellt werden kann. Dies kann insbesondere bei Produkten erforderlich sein, die sich in nur einer bestimmten Richtung sehr weit erstrecken. So kann mit dem erfindungsgemäßen Verfahren ein Produkt hergestellt werden, dessen Länge über mehrere Substratbettensegmente reicht. Wenn mehrere solcher Produkte hergestellt werden sollen, so kann gemäß dieser Fortbildungsform eine Gruppe, von solchen Produkten gebildet werden und diese Gruppe über mehrere Substratplattensegmente erstreckt, dann hergestellt werden.

Noch weiter ist es bevorzugt, dass das Material in einem ersten Fertigungsabschnitt in einem quasi-kontinuierlichen Verfahren auf die Substratplatte aufgetragen und selektiv vorbestimmte Bereiche einer jeweils aufgetragenen Schicht ausgehärtet werden und in einem zweiten Fertigungsabschnitt fertig ausgehärtete Produkte quasi-kontinuierlich entnommen werden. Diese Fertigungsweise ermöglicht eine qualitativ hochwertige generative Herstellung in einem ersten Fertigungsabschnitt und zugleich eine diese generative Fertigung nicht negativ beeinflussende Entnahme von fertig gestellten Produkten in einem zweiten Fertigungsabschnitt, der von dem ersten Fertigungsabschnitt beabstandet ist. Dies kann insbesondere erreicht werden, in dem die Substratplattensegmente an einem Endlosförderband an dem angeordnet sind oder ein solches durch die Substratplattensegmente gebildet wird und die Substratplattensegmente entsprechend von dem ersten in den zweiten Fertigungsabschnitt gefördert werden. Insbesondere kann bei dieser Ausgestaltung der erste Fertigungsabschnitt in einer abgeschlossenen kontrollierten, insbesondere, inerten Atmosphäre gehalten werden, um die für eine generative Fertigung nach bestimmten Verfahren erforderlichen Randbedingungen einstellen zu können, wohingegen im zweiten Fertigungsabschnitt die Produkte ausgeschleust werden, bzw. der zweite Fertigungsabschnitt eine Schleuse beinhaltet oder die Produkte bereits beim Übergang vom ersten in den zweiten Fertigungsabschnitt aus der kontrollierten Atmosphäre ausgeschleust werden.

Weiterhin ist bevorzugt vorgesehen, dass in einem ersten Verfahrensschritt eine Materialschicht oberhalb von zumindest zwei, vorzugsweise mehreren Substratplattensegmenten aufgetragen wird, in einem zweiten Verfahrensschritt die Materialschicht selektiv ausgehärtet wird, und dass der maximale Abstand zwischen dem ersten Substratplattensegment und einer zur Herstellung des ersten Produkts darauf aufgetragenen Schicht in zumindest einem, vorzugsweise mehreren, insbesondere allen Verfahrensstadien sich von dem maximalen Abstand zwischen dem weiteren Substratplattensegment und einer zur Herstellung des weiteren Produkts darauf aufgetragenen Schicht unterscheidet. Bei dieser Ausbildungsform ist zu verstehen, dass ein Verfahrensstadium die Sequenz von Schichtauftrag und selektiver Aushärtung umfasst und folglich wiederholt durchgeführt wird, wodurch aufeinanderfolgende Verfahrensstadien entstehen in einem jeweiligen Verfahrensstadium jeweils ein erster und zweiter Verfahrensschritt aufeinanderfolgend ausgeführt wird und hierbei auf jeweils zumindest zwei, insbesondere mehrere oder alle Substratplattensegmente eine Materialschicht in einem Arbeitsgang aufgetragen wird und diese nachfolgend selektiv ausgehärtet wird, um mehrere Produkte auf den entsprechend mehreren Substratplattensegmenten generativ herzustellen. Erfindungsgemäß wird dabei die Schicht auf die Substratplattensegmente solcherart aufgetragen, dass der Abstand zwischen der aufgetragenen Schicht zu den Substratplattensegmenten unterschiedlich für zumindest zwei, insbesondere für jedes Substratplattensegment ist. Dabei ist zu verstehen, dass dieser maximale Abstand während des Schichtauftrags, und auch oder nur während der selektiven Aushärtung unterschiedlich ist. Dieser Abstand kann sich in nur einem von mehreren aufeinanderfolgenden Verfahrensstadien unterscheiden, die jeweils aus der Abfolge eines Schichtauftrags und der selektiven Aushärtung dieser Schicht bestehen, insbesondere aber kann der Abstand in allen Verfahrensstadien sich unterscheiden, d.h. typischerweise, dass die Summe der aufgetragenen Schichten oberhalb eines Substratplattensegments verschieden ist von der Summe der aufgetragenen Schichten oberhalb eines anderen Substratplattensegments, beispielsweise weil mit dem gemeinsamen Auftrag auf die beiden Substratplattensegmente erst zu einem Zeitpunkt begonnen wurde, wo auf einem der beiden Substratplattensegmente bereits eine oder mehrere Schichten aufgetragen waren. Das Verfahren kann beispielsweise auf solche Weise umgesetzt werden, dass die Substratplattensegmente individuell hinsichtlich ihrer Höhe verfahren werden können, um auf diese Weise zu erreichen, dass zwar eine Schicht auf alle Substratplattensegmente in einer gemeinsamen Ebene aufgetragen wird, gleichwohl aber der Abstand dieser Schicht zu den Substratplattensegmenten unterschiedlich für jedes Substratplattensegment ist, oder indem die Schichtauftragsvorrichtung während des Auftragsvorgangs zwischen den Substratplattensegmenten vertikal verstellt wird.

Noch weiter ist es bevorzugt, das Verfahren fortzubilden durch die Schritte Entfernen von auf dem ersten Substratplattensegment angeordnetem Material, welches nicht ausgehärtet wurde, ohne hierbei Material eines weiteren Substratplattensegments zu entfernen, und darauffolgendes Entfernen von dem auf dem weiteren Substratplattensegment angeordnetem Material, welches nicht ausgehärtet wurde. Für die erfindungsgemäße, quasi-kontinuierliche generative Fertigung ist es an der Entnahmestelle besonders vorteilhaft, wenn das Entfernen des nicht ausgehärteten Materials in solcher Weise erfolgen kann, dass ein benachbarter Bereich hierdurch nicht beeinflusst wird und das nicht ausgehärtete Material in diesem benachbarten Bereich stehen bleibt. Während der generativen Fertigung hat das nicht ausgehärtete Material eine Stützfunktion und dient dazu, darüber liegende Schichten aufzunehmen und zu tragen. Das nicht ausgehärtete Material darf daher in der Regel nicht entfernt werden, bevor das Produkt nicht vollständig aufgebaut und ausgehärtet worden ist. Um nun aber unter einer solchen Vorgabe die Notwendigkeit zu verhindern, dass fertig gestellte Produkte zunächst eine längere, der Prozesssicherheit dienende Strecke zurücklegen müssen, bis sie zu der Entnahmestelle gelangen, an dem das nicht ausgehärtete Material entfernt wird, ist es vorteilhaft, wenn die Materialentfernungsvorrichtung die Materialentfernung bewerkstelligen kann, ohne das unmittelbar benachbarte Substratplattensegment hierbei zu beeinflussen. Dies ermöglicht die schnelle und quasi-kontinuierliche Fertigung und vermeidet die Bereitstellung eines Sicherheitsabstandes zwischen Schichtauftragsvorrichtung und Materialentfernungsvorrichtung.

Weiterhin ist es bevorzugt, dass in einer ersten Phase des Herstellungsvorgangs nur Schichtbereiche einer Schicht selektiv ausgehärtet werden, welche zur Herstellung des ersten Produktes dienen und in einer letzten Phase des Herstellungsvorgangs nur Schichtbereiche einer Schicht selektiv ausgehärtet werden, welche zur Herstellung des weiteren Produktes dienen und vorzugsweise in einer zwischen der ersten und der letzten Phase liegenden mittleren Phase des Herstellungsvorgangs Schichtbereiche einer Schicht ausgehärtet werden, welche zur Herstellung des ersten und des weiteren Produktes dienen. Mit der so erreichten, quasi-kontinuierlichen und simultanen Fertigung von Produkten in unterschiedlichen Fertigstellungsstadien wird ein produktives und schnelles Verfahren zur individuellen Herstellung von kleinen Produkten mittels eines generativen Fertigungsverfahrens erzielt.

Gemäß einer weiteren bevorzugten Ausführungsform ist vorgesehen, dass zwischen den Substratplattensegmenten eine Trennwand bereitgestellt wird, welche den oberhalb jedes Substratplattensegments bestehenden Bauraum von dem oberhalb eines benachbarten Substratplattensegments bestehenden Bauraum abtrennt. Eine solche Trennwand ermöglicht oder vereinfacht die Entfernung von nicht ausgehärtetem Material oberhalb von einem Substratplattensegment, ohne hierbei das nicht ausgehärtete Material in einem hierzu benachbarten Substratplattensegment zu beeinflussen. Dabei ist zu verstehen, dass eine solche Trennwand als Bestandteil der Fertigungsvorrichtung bereitgestellt werden kann und in diesem Fall beispielsweise so ausgeführt werden kann, dass sie simultan zum Schichtauftrag nachgeführt wird, um jeweils eine exakte Höhe oder etwas weniger als diese exakte Höhe aufzuweisen, die der oberen Schichtfläche des Materialauftrags im Bereich zwischen zwei Substratplattensegmenten entspricht.

Dabei kann insbesondere vorgesehen sein, dass die Trennwand durch Aushärten des aufgetragenen Materials während des Herstellungsvorgangs des Produkts hergestellt wird. Mit dieser Fortbildungsform wird jeweils am Rand eines Substratplattensegments während des Fertigungsvorgangs aus dem aufgetragenen Material eine solche Trennwand hergestellt. Diese Vorgehensweise hat den Vorteil, dass auf konstruktiv aufwändige Trennwandnachführungen verzichtet werden kann. Stattdessen wird entlang des Randbereichs eines Substratplattensegments eine entsprechende Trennwand aufgebaut, die entsprechend bei jedem Schichtauftrag höher wächst und auf diese Weise zur Gesamthöhe des Materialschichtbettes nachgeführt wird. Die Trennwand kann dann bei Entfernen der Produkte von dem Substratplattensegment oder im Zuge der Entfernung von nicht ausgehärtetem Material von dem benachbarten Substratplattensegment entfernt werden.

Die beiden vorgenannten Ausführungsformen können weiter fortgebildet werden, indem die Trennwand zwischen zwei Substratplattensegmenten mit zumindest einem der beiden Substratplattensegmenten verbunden ist. Durch Verbindung der Trennwand mit beiden Substratplattensegmenten, welche sie voneinander abtrennt, kann zugleich auch eine sichere Abdichtung gegen Materialdurchtritt zwischen den Substratplattensegmenten erreicht werden. Die Verbindung kann hierbei durch generativen Aufbau der Trennwand auf einem oder beiden Substratplattensegmenten oder durch entsprechend konstruktive Verbindung eines zur Vorrichtung gehörenden Trennwandbauteils erzielt werden.

Gemäß einer weiteren bevorzugten Ausführungsform ist vorgesehen, dass jedes Substratplattensegment individuell in Bezug auf die Schichtauftragsvorrichtung solcherart verfahren wird, dass der Abstand senkrecht zur Oberfläche der Substratplatte und der mit einer Schichtauftragsvorrichtung aufgetragenen Schicht verändert wird und die resultierende Höhe des Materialbetts auf einem Substratplattensegment verschieden von der Höhe des Materialbetts auf einem anderen Substratplattensegment ist. Gemäß dieser Ausführungsform kann jedes Substratplattensegment beispielsweise mittels eines Aktuators, der wechselweise auf die Substratplattensegmente einwirkt oder mittels mehrerer Aktuatoren, von denen jeder für jeweils ein Substratplattensegment bereitgestellt ist, individuell in seiner Höhe verfahren werden. Hierdurch wird erreicht, dass die Substratplattensegmente auf unterschiedlichen Höhen platziert werden können, um dann nachfolgend eine Materialschicht in eine Ebene oberhalb der Substratplattensegmente aufzutragen. Diese Materialschicht liegt dann in individuell verschiedenem Abstand zu den jeweiligen Substratplattensegmenten, d.h. insbesondere in individuellem Abstand zu der Ebene der Oberfläche der Substratplattensegmente, auf welche die erste Materialschicht auf das jeweilige Substratplattensegment aufgetragen worden ist. Die Ausführungsform eignet sich, um ein Produkt in einem ersten Verfahrensstadium auf einem ersten Substratplattensegment und ein anderes Produkt in einem anderen Fertigungsstadium auf einem anderen Substratplattensegment bei gemeinsamem Schichtauftrag auf die beiden Substratplattensegmente generativ herzustellen und kann auf entsprechend mehrere Substratplattensegmente mit entsprechend mehreren Produkten in unterschiedlichen Verfahrensstadien angewendet werden.

Weiter ist es bevorzugt, dass vor jedem Materialauftrag die ausgehärteten Bereiche der zuvor aufgetragenen Schicht oberflächlich beschliffen werden. Durch eine solche Oberflächenbearbeitung, die insbesondere als Beschleifung, aber auch durch andere spanende Fertigungsverfahren mit geometrisch definierter oder geometrisch undefinierter Schneide erfolgen kann, wird die geometrische Präzision des generativen Fertigungsverfahrens weiter erhöht. Insbesondere wird durch eine solche spanende Bearbeitung eine definierte Auflagefläche und Verbindungsstelle für die darüber liegende Schicht und die darin auszuhärtenden Bereiche bereitgestellt. Zudem wird durch die spanende Bearbeitung eine definierte Schichtdicke eingestellt, was für ein reproduzierbares geometrisches Fertigungsergebnis vorteilhaft ist.

Noch weiter ist es bevorzugt, dass zur Aushärtung des ersten und des zumindest einen weiteren Produkts, insbesondere aller weiteren Produkte eine einzige Strahlungsquelle, insbesondere ein einziger Strahlengang einer einzigen Strahlungsquelle oder eine einzige Materialauftragsvorrichtung genutzt wird. Grundsätzlich ist zu verstehen, dass zur Beschleunigung des Fertigungsvorgangs auch auf mehrere Strahlenquellen oder mehrere Strahlengänge einer einzigen Strahlenquelle zurückgegriffen werden kann. Das erfindungsgemäße Herstellungsverfahren zeichnet sich aber insbesondere dadurch aus, dass es zwar mehrere Produkte gleichzeitig herstellt und diese Produkte in unterschiedlichen Fertigungsstadien sind, d.h. insbesondere aus einer unterschiedlichen Anzahl von Schichten aufgebaut sind. Besonders ist hierbei aber, dass sowohl der Auftrag einer Schicht durch eine einzige Schichtauftragsvorrichtung für alle Substratplattensegmente und darauf aufgebauten, zu fertigenden Produkte erfolgen kann und dass darüber hinaus auch die Aushärtung der bestimmten Bereiche einer Schicht für alle zu fertigenden Produkte durch eine einzige Strahlungsquelle erfolgen kann.

Gemäß einer weiteren bevorzugten Ausführungsform ist vorgesehen, dass jedes Substratplattensegment während des Herstellungsvorgangs mittels einer Hubvorrichtung in einer vertikalen Richtung angehoben und abgesenkt wird und die Hebe- und Senkbewegung der Substratplattensegmente unabhängig voneinander ist. Die unabhängige Hebe- und Senkbewegung kann insbesondere durch jeweils einen auf mehrere Substratplattensegmente einwirkenden Aktuator bewirkt werden oder durch jeweils einen Aktuator, der jeweils einem Substratplattensegment zugeordnet ist.

Noch weiter ist es bevorzugt, dass mehrere Substratplattensegmente in einem Arbeitsgang mit einer einzigen Materialauftragsvorrichtung mit Material beschichtet werden. Diese Fortbildung ermöglicht eine effizient arbeitende Schichtauftragsvorrichtung bei zugleich individuellem Fertigungsfortschritt der jeweiligen Produkte, die auf den jeweils mehreren Substratplattensegmenten hergestellt werden.

Schließlich kann das Verfahren durch die Schritte fortgebildet werden: selektives Aufbringen einer Materialschicht oder Aufbringen einer n-ten Materialschicht auf eine Substratträgerplatte und selektives Aushärten von Teilen der Materialschicht mittels Einwirken einer energiereichen Strahlung, insbesondere einer Laserstrahlung, auf diese Teile der Materialschicht, Führen der energiereichen Strahlung bzw. einer selektiven Materialauftragsvorrichtung über die n-te Materialschicht nach Führungsdaten, welche aus den geometrischen Daten einer x-ten Querschnittsfläche eines ersten Produkts ermittelt wurden, selektives Aufbringen einer Materialschicht oder Aufbringen einer n+1-ten Materialschicht auf die n-te Materialschicht, Führen der energiereichen Strahlung bzw. einer selektiven Materialauftragsvorrichtung über die n+1-te Materialschicht nach Führungsdaten, welche aus den geometrischen Daten einer x+1-ten Querschnittsfläche des ersten Produkts ermittelt wurden, Führen der energiereichen Strahlung bzw. einer selektiven Materialauftragsvorrichtung über die n-te Materialschicht nach Führungsdaten, welche aus den geometrischen Daten einer y-ten Querschnittsfläche eines zweiten Produkts ermittelt wurden, und Führen der energiereichen Strahlung bzw. einer selektiven Materialauftragsvorrichtung über die n+1-te Materialschicht nach Führungsdaten, welche aus den geometrischen Daten einer y+1-ten Querschnittsfläche des zweiten Produkts ermittelt wurden wobei, x ungleich y ist. Bei dieser Fortbildungsform werden zumindest zwei Produkte hergestellt, indem sie in einem gemeinsamen Schichtauftrag in zwei unterschiedlichen Schichtbereichen ein und derselben Schicht einer selektiven Aushärtung unterzogen werden, wobei in dieser Schicht in den Produkten selbst unterschiedliche Höhen gegenüber der Substratplatte dargestellt sind.

Die erfindungsgemäße Vorrichtung und das erfindungsgemäße Verfahren gemäß der in dieser Beschreibung erläuterten Aspekte eignen sich erfindungsgemäß in vorteilhafter Weise für verschiedene Verwendungen. So können einerseits mit der Vorrichtung/dem Verfahren personalisierte Produkte für eine Verbraucher-Anwendung hergestellt werden, beispielsweise können die Vorrichtung/das Verfahren mit einer Steuerung ausgeliefert werden, die das persönliche Erstellen von Figuren, Spielelementen und dergleichen ermöglicht. In entsprechender Weise kann das erfindungsgemäße Verfahren/die erfindungsgemäße Vorrichtung auch dazu verwendet werden, um individualisierten Schmuck herzustellen.

Eine weitere Anwendung für die Vorrichtung/das Verfahren nach der Erfindung liegt in der Herstellung von Platinen für gedruckte Schaltungen, insbesondere in einer Verwendungsweise, bei der neben dem Platinenträger auch darauf angeordnete Leiterbahnen hergestellt werden und dies durch entsprechende generative Fertigung mit den hierfür erforderlichen, unterschiedlichen Materialien erreicht wird. In diesem Zusammenhang ist insbesondere zu verstehen, dass mit der erfindungsgemäßen Vorrichtung und den erfindungsgemäßen Verfahren auch zwei unterschiedliche Werkstoffe bzw. Materialien simultan oder zeitversetzt verarbeitet werden können, um ein Produkt herzustellen, welches aus zwei oder mehr unterschiedlichen Materialien aufgebaut ist. Zu diesem Zweck wird der erfindungsgemäße Gedanke dahingehend weiterentwickelt, dass ein erstes aushärtbares Material zum Schichtaufbau in einem ersten Prozessschritt genutzt wird und ein zweites, vom ersten verschiedenes, aushärtbares Material zum Schichtaufbau in der gleichen oder einer nachfolgenden Schicht in einem zweiten Prozessschritt benutzt wird. Dabei ist zu verstehen, dass sich auf diese Verwendungsweise die zuvor erläuterten Ausführungen einer Vorrichtung/eines Verfahrens mit der Möglichkeit eines Auftrags eines aushärtbaren Materials und eines Farbauftrags auch in ihrer Ausgestaltung und in ihren Fortbildungen auf eine Ausführung mit der Möglichkeit eines Auftrags eines zweiten aushärtbaren Materials anstelle oder zusätzlich zu einer Farbe entsprechend anwenden lässt.

Weitere Anwendungsmöglichkeiten für die erfindungsgemäßen Vorrichtungen/Verfahren liegen in der Herstellung von individuell geformten Lebensmitteln in kleinerer oder größerer Serie. Hier eignet sich die Erfindung zur Herstellung von Lebensmitteln aus Fleischprodukten, aus Teigmaterial für Backwaren, aus Gemüse- oder Obstprodukten oder Süßwaren, wie bspw. Schokolade, die sich zur Verarbeitung als aushärtbares Material eignen und dem Benutzer eine kreative, hinsichtlich der Oberflächen/Volumen-Verhältnisse vorteilhafte Ausformung für eine Weiterverarbeitung und Geschmackswirkung eröffnen.

Weitere erfindungsgemäße Anwendungen für die erfindungsgemäßen Vorrichtungen und Verfahren liegen in der medizinischen Technik. Hier können die erfindungsgemäßen Verfahren/Vorrichtungen zur Herstellung von künstlichen Organen oder Organstrukturen für Nachzüchtungen solcher Organe auf biotechnologischem Weg dienen, in gleicher Weise aber auch für die Herstellung individuell geformter Implantate, Orthesen, Prothesen und dergleichen. Bei dieser Anwendungsweise kommt insbesondere die Möglichkeit der gezielten Herstellung individuell geformter und individuell gefärbter dreidimensionaler Produkte zum Tragen, wenn es sich um ästhetisch relevante Bauteile handelt. Soweit liegt ein vorteilhaftes Verwendungsgebiet für die erfindungsgemäßen Verfahren und Vorrichtungen auch im Bereich der zahnmedizinischen Technik, insbesondere in der Verwendung der Vorrichtung/Verfahren zur Herstellung von Zahnersatz und dentalen Hilfsteilen, Schablonen zur Durchführung zahnmedizinischer oder kieferorthopädischer Eingriffe. Generell ist die erfindungsgemäße Vorrichtung/das erfindungsgemäße Verfahren vorteilhaft einsetzbar, um damit Lehren, Schablonen, Führungseinrichtungen und dergleichen in individueller Weise solcher Art anzufertigen, dass sie chirurgische Eingriffe im Wege einer operativen Behandlung in sicherer Weise und mit einer höheren Präzision erlauben als vorbekannte Vorgehensweisen mit standardisierten Schablonen/Führungseinrichtungen.

Schließlich liegt eine vorteilhafte Verwendung der erfindungsgemäßen Vorrichtung/des Verfahrens in der Herstellung von individuellen Modellen zur Visualisierung von Produkten, baulichen Situationen in maßstabsgetreuer verkleinerter oder vergrößerter Darstellung oder als reelles 1:1 Prototypenmodel, beispielsweise im Bereich der Stadtplanung oder Architektur.

Bezüglich der zuvor und in der nachfolgenden Beschreibung und den Ansprüchen beschriebenen Erfindungsaspekte und Ausführungsformen ist zu verstehen, dass sich die beschriebenen Ausführungsformen der Vorrichtung und des Verfahrens für Ausführung eines additiven Herstellungsverfahrens mit schrägem Schichtauftrag, die Ausführung eines additiven Herstellungsverfahrens und eines zweidimensionalen Druckverfahrens sowie die Ausführung eines additiven Herstellungsverfahrens auf mehreren Substratplattensegmenten auch miteinander kombinieren lassen, beispielsweise indem ein schräger Schichtauftrag auf mehreren Substratplattensegmenten erfolgt oder indem ein schräger Schichtauftrag oder ein Schichtauftrag auf mehrere Substratplattensegmente in einem ersten Auftragsmodus nach einem additiven Herstellungsverfahren in einer Vorrichtung erfolgt, die alternativ einen zweidimensionalen Druck in einem zweiten Auftragsmodus vorsieht. In ebengleicher Weise lassen sich einzelne oder mehrere Merkmale spezifischer Fortbildungsformen dieser Ausführungsformen miteinander in vorteilhafter Weise kombinieren.

### IV. Kurze Beschreibung der Figuren

Bevorzugte Ausführungsformen der Erfindung werden anhand der beiliegenden Figuren beschrieben. Es zeigen:
Fig. 1A eine schematische, längsgeschnittene Seitenansicht einer ersten Ausführungsform der Erfindung,
Fig. 1B eine Draufsicht auf die Ausführungsform gemäß Fig. 1A,
Fig. 2 eine schematische, längsgeschnittene Seitenansicht einer zweiten Ausführungsform der Erfindung,
Fig. 3 eine schematische, längsgeschnittene Seitenansicht einer dritten Ausführungsform der Erfindung,
Fig. 4 eine schematische, längsgeschnittene Seitenansicht einer vierten Ausführungsform der Erfindung,
Fig. 5 eine schematische Ansicht einer Fertigungsanordnung gemäß einer fünften Ausführungsform der Erfindung, und.
Fig. 6 eine schematische Ansicht einer Fertigungsanordnung gemäß einer sechsten Ausführungsform der Erfindung,
Fig. 7 eine schematische Ansicht einer Fertigungsanordnung gemäß einer siebten Ausführungsform der Erfindung,
Fig. 8 eine achte Ausführungsform der Erfindung,
Fig. 9 eine schematische, längsgeschnittene Seitenansicht eines Fertigungsabschnitts einer generativen Fertigungsstrecke gemäß einer neunten Ausführungsform der Erfindung,
Fig. 10 eine schematische Prinzipdarstellung einer Fertigungsanordnung gemäß einer zehnten Ausführungsform der Erfindung,
Fig. 11 eine schematische, längsgeschnittene Seitenansicht eines Fertigungsabschnitts mit Endlosförderband,
Fig. 12 eine schematische, längsgeschnittene Seitenansicht eines Fertigungsabschnitts gemäß einer elften Ausführungsform der Erfindung,
Fig. 13 eine schematische Darstellung einer Fertigungsanordnung gemäß einer zwölften Ausführungsform der Erfindung,
Fig. 14 eine schematische Darstellung einer Fertigungsanordnung gemäß einer dreizehnten Ausführungsform der Erfindung,
Fig. 15 eine schematisch geschnittene Ansicht einer ersten Ausführungsform eines erfindungsgemäßen Druckkopfs,
Fig. 16 eine schematisch geschnittene Ansicht einer zweiten Ausführungsform eines erfindungsgemäßen Druckkopfs,
Fig. 17 eine schematisch geschnittene Ansicht einer dritten Ausführungsform eines erfindungsgemäßen Druckkopfs und
Fig. 18 eine schematisch geschnittene Ansicht einer vierten Ausführungsform eines erfindungsgemäßen Druckkopfs.

### V. Ausführliche Beschreibung der bevorzugten Ausführungsformen

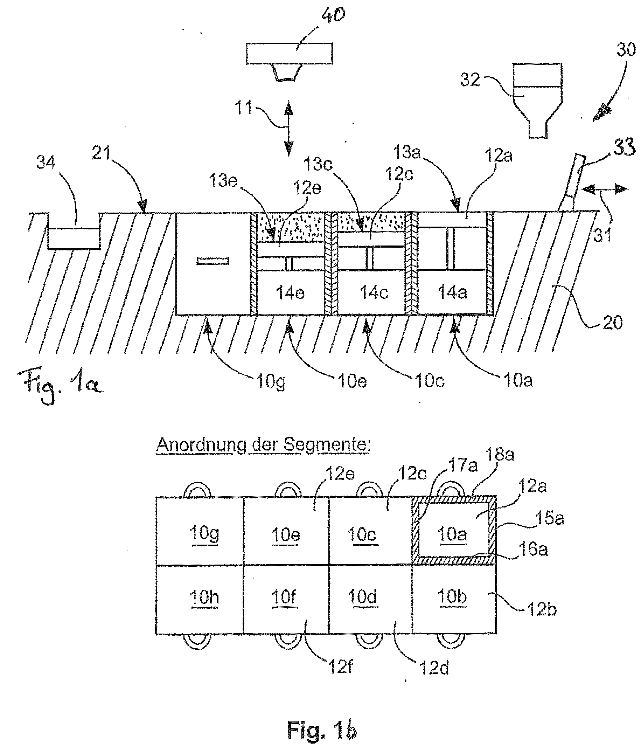

Fig. 1A zeigt eine Aufnahmevorrichtung 20 für insgesamt acht Einschübe 10a-h, die in zwei Reihen und vier Spalten angeordnet sind, wie aus Fig. 1B zu erkennen ist. Jeder Einschub 10a-h weist ein individuell höhenverstellbares Substratplattensegment 12a-f auf. Jedes Substratplattensegment 12a-f ist innerhalb seines Einschubs 10a-f in einer vertikalen Richtung 11 individuell höhenverstellbar. Die vertikale Richtung 11 liegt hierbei für jedes der Substratplattensegmente 12a-f parallel zueinander und senkrecht zur oberen Oberfläche 13a-f der Substratplattensegmente 12a-f, die horizontal, d.h. senkrecht zur Schwerkraftrichtung ausgerichtet ist.

Die Auswertungen innerhalb der Aufnahmevorrichtung 20 sind ausgebildet, um jeweils einen Einschub 10a-f aufzunehmen, in dem ein Substratplattensegment 12a-f angeordnet ist. Es ist aber zu verstehen, dass auch Substratplattensegmente in die Aufnahmevorrichtung 20 eingesetzt werden können, welche eine größere Grundfläche der Substratplatte 12a aufweisen, beispielsweise eine Grundfläche, die doppelt so groß oder viermal so groß ist wie die in Fig. 1a, b dargestellten Substratplattensegmente und die entsprechend zwei bzw. vier Einschubplätze einnehmen.

In den Einschüben 10g und 10h ist ein Füllblock 12g, 12h eingesetzt, der kein Substratplattensegment darstellt und nicht zur Fertigung von Produkten dient.

Jedes Substratplattensegment 12a-f ist mittels jeweils eines Aktuators 14a-f, der beispielsweise ein elektromotorisch betriebener Linearaktuator sein kann, höhenverstellbar. Der Aktuator 14a-f ist Bestandteil des Einschubes 10a-f.

Jeder Einschub 10a-f ist von einem nach oben offenen, im Querschnitt rechteckigen, insbesondere quadratischen Gehäuse umgeben, welches vier Wände umfasst, wie beispielhaft am Einschub 10a durch die Wände 15a - 18a abgebildet. Innerhalb dieser Wände bewegt sich das Substratplattensegment 12a und dichtet hierbei an seinem seitlichen Randbereich mit den Wänden solcherart ab, dass Beschichtungsmaterial, welches auf das Substratplattensegment aufgetragen ist, nicht zwischen Substratplattensegment und den Wänden hindurchtreten kann.

Die oberen Endkanten der Wände schließen bündig mit einer Oberfläche 21 der Aufnahmevorrichtung 20 ab, wenn die Einschübe 10a-e in die Aufnahmevorrichtung eingesetzt sind. In gleicher Weise steht eine obere Oberfläche der Einschübe 10g, h fluchtend zu der Oberfläche 21 der Aufnahmevorrichtung 20.

Eine Pulverauftragsvorrichtung 30 ist bereitgestellt, welche einen Pulverförderer 32 umfasst, aus dem Pulver auf die Oberfläche 21 der Aufnahmevorrichtung abgegeben werden kann, und die weiterhin einen Schieber 33 umfasst, der sich entlang einer Bewegungsrichtung 31 reziprokal über die Oberfläche 21 und die Substratplattensegmente 12a-f bzw.

Einschübe 10a-h bewegen kann. Der Schieber 33 verteilt hierbei das von dem Pulverförderer 32 abgegebene Pulver und trägt eine Pulverschicht oberhalb der Substratplattensegmente 12a-f auf.

Die Pulverauftragsvorrichtung umfasst weiterhin eine Sammelvorrichtung 34 für überschüssiges Pulver. In die Sammelvorrichtung 34 schiebt der Schieber 33 dasjenige Pulver, welches nicht als Pulverschicht oberhalb der Substratplattensegmente aufgetragen werden konnte.

Wie in Fig. 1A zu erkennen ist, sind die Substratplattensegmente 12a-f mittels ihrer Aktuatoren 14a-f auf unterschiedliche Höhen eingestellt, d.h. der Abstand der oberen Oberfläche 13a-f jedes Substratplattensegments zu der Ebene der Oberfläche 21, entlang welcher sich der Schieber 33 bewegt und als Rakel das Pulver aufträgt, ist unterschiedlich.

Nach jedem Pulverauftragsvorgang, der durch Bewegen des Schiebers 33 aus der in Fig. 1A dargestellten rechten Position in eine von hier aus gesehen linke Position im Bereich der Auffangwanne 34 erfolgt, wird die bei diesem Pulverauftragsvorgang aufgetragenen Schicht oberhalb jedes Substratplattensegments 12a-f mittels einer Strahlungsquelle, hier einem Hochleistungslaser 40 in vorbestimmten Bereichen ausgehärtet. Diese selektive Aushärtung erfolgt anhand von Steuerungsdaten, die den Querschnitt eines Produkts in der jeweils aufgetragenen Schicht entsprechen. Bei diesem selektiven Aushärtungsvorgang werden die ausgehärteten Bereiche zugleich mit entsprechend darunterliegenden Bereichen des Produkts, die zuvor ausgehärtet wurden, verbunden. Der Aushärtungsvorgang kann insbesondere als selektives Lasersintern oder selektives Laserschmelzen erfolgen. Grundsätzlich sind aber auch andere Aushärtungsprinzipien, wie beispielsweise Photopolymerisation, auf das Prinzip der Erfindung anwendbar. Der Strahl des Hochleistungslasers 40 wird hierbei mit Strahllenkungsmitteln solcherart gelenkt, dass er auf die vorbestimmten Bereiche der jeweils zuvor aufgetragenen Schicht trifft und diese Bereiche oberhalb allen zuvor beschichteten Substratplattensegmenten selektiv aushärtet.

Die Strahllenkungsmittel sind hierzu mit einer Steuerungsvorrichtung signaltechnisch gekoppelt. In der Steuerungsvorrichtung sind Fertigungsdaten für zumindest die jeweils gleichzeitig herzustellenden Produkte gespeichert. Die Fertigungsdaten umfassen insbesondere Lagedaten, welche die Lage eines jeweiligen Produkts auf der Substratplatte charakterisieren und Geometriedaten, welche die Geometrie des jeweiligen Produkts charakterisieren. Die Geometriedaten sind solcherart aufbereitet, dass darin die geometrischen Daten einzelner Querschnitte des Produkts enthalten sind. Die jeweilige Lage eines solchen Querschnitts und die für diesen Querschnitt gespeicherten Geometriedaten entspricht der Lage der jeweils aufgetragenen Materialschicht, aus dem dieser Produktquerschnitt hergestellt wird und der Geometrie des Produkts in dieser Materialschicht. In der dargestellten Ausführungsform mit senkrecht auf der Platte aufstehenden Produkten entsprechen die geometrischen Daten daher horizontal verlaufenden Querschnittsebenen durch dieses Produkt.

Nach der Aushärtung der selektierten Bereiche fährt der Schieber 33 aus der linken Position in die in Fig. 1A dargestellte rechte Position zurück. Hierbei werden die selektiv ausgehärteten Bereiche mittels einer Schleifvorrichtung, die am Schieber angeordnet ist, oberflächlich beschliffen, um hierdurch eine definierte Oberfläche für den nachfolgenden Beschichtungs- und Aushärtungsvorgang und eine höhere geometrische Präzision des generativ hergestellten Bauteils zu erzielen.

Nach diesem Vorgang werden die Substratplattensegmente 12a-f um eine vordefinierte Distanz abgesenkt, welche der Schichtstärke der nachfolgend aufgetragenen Schicht entspricht. Durch diesen Absenkungsvorgang liegt die Oberfläche der zuvor aufgetragenen Schicht und der darin selektiv ausgehärteten Bereiche nicht mehr in Flucht mit der Oberfläche 21, entlang welcher sich der Schieber 33 mit einer unteren Rakelkante bewegt, sondern um die Distanz, um welche das Substratplattensegment abgesenkt wurde, unterhalb der Ebene dieser Oberfläche 21. Hierauf folgend wird wiederum eine dosierte Menge Pulver aus dem Pulverförderer 32 auf die Oberfläche 21 abgegeben und durch Bewegen des Schiebers 33 nach links dieses Pulver als Schicht oberhalb jedes abgesenkten Substratplattensegments aufgetragen.

Der Vorgang wird wiederholt, bis innerhalb des solcherart schichtweise aufgetragenen Pulverbettes oberhalb eines Substratplattensegments ein Produkt fertig gestellt ist. Dabei ist, wie aus Fig. 1A zu erkennen ist, der Zeitpunkt der Fertigstellung eines oder mehrerer Produkte oberhalb eines Substratplattensegments in den verschiedenen Einschüben 10a-f unterschiedlich, im dargestellten Beispiel wird das oder die Produkte auf dem Substratplattensegment 12e im Einschub 10e typischerweise vor dem oder den Produkten auf dem Substratplattensegment 12c im Einschub 10c fertig gestellt werden, sofern die darin gefertigten Produkte etwa die gleiche Höhe aufweisen. Der Einschub 10a ist in der maximal angehobenen Position des Substratplattensegments 12a gezeigt, welche dem Fertigungsbeginn entspricht.

Nach Fertigstellung der Produkte auf einem einzelnen Einschub 10a-f kann dieser Einschub aus der Aufnahmevorrichtung 20 entnommen werden und durch einen neuen Einschub ersetzt werden, dessen Substratplatte in der obersten Position ist. Die Produkte im entnommenen Einschub können von der Substratplatte abgelöst werden, nachdem nicht ausgehärtetes Pulvermaterial entfernt worden ist. Auf dem neu eingesetzten Segment können simultan neue Produkte hergestellt werden. Durch den solcherart möglichen, zeitversetzten aber zugleich simultanen Aufbau von Produkten in der Vorrichtung wird eine hohe Produktivität bei der generativen Fertigung von Produkten erzielt.

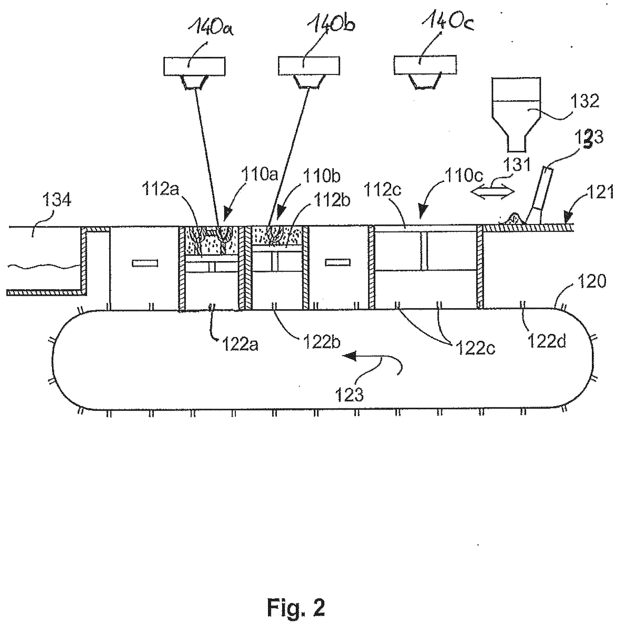

Fig. 2 zeigt eine zweite Ausführungsform der Erfindung, bei der mehrere Substratplattensegmente 112a-c als Module 110a-c auf einem Endlosförderband 120 angekoppelt werden können. An dem Förderband 120 sind mehrere Ankopplungspunkte 122a, b, c, d ... bereitgestellt, welche zugleich als Arretierung für ein Modul 110a-c dienen und die Stromversorgung für einen in dem Modul angeordneten Aktuator 114a-c bereitstellen.

Der Aktuator innerhalb jedes Moduls ist ausgebildet, um die Substratplattensegmente 112a-c jeweils individuell höhenzuverstellen.

Wie in Fig. 2 zu erkennen ist, sind die Substratplattensegmente 112a und 112b als Einzelsegmente ausgeführt, wohingegen das Substratplattensegment 112c als Doppelsegment ausgeführt ist und sich über die doppelte Länge entlang des Förderbandes 120 erstreckt.

Jedes Modul 110a-c ist wiederum, wie die Einschübe gemäß Fig. 1A, B, mit Seitenwänden versehen, innerhalb welcher sich die Substratplattensegmente 112a-c in randseitig abgedichteter Weise vertikal bewegen können. Die randseitigen Wände schließen mit ihren oberen Kanten fluchtend mit einer Oberfläche 121 ab, auf welche wiederum aus einem Pulverförderer 132 Pulver abgegeben werden kann. Die Oberfläche 121 liegt horizontal, d.h. senkrecht zur Schwerkraftrichtung und durch Bewegen eines Schiebers 133 mit einer unteren Rakelkante, welche auf der Oberfläche 121 aufliegt, in einer Richtung 131 wird das aufgetragene Pulver über die Substratplattensegmente 112a-c verteilt und schließlich nach Verfahren des Schiebers aus der in Fig. 2 dargestellten rechten Position in eine hierzu horizontal nach links versetzte linke Position überschüssiges Pulver in einen Auffangbehälter 134 geschoben.

Wiederum wird auch bei der in Fig. 2 dargestellten Ausführungsform durch stufenweises Absenken der Substratplattensegmente 112a-c in jeweils individueller Weise ein unterschiedlich hohes Pulverbett in jedem einzelnen Modul 110a-c eingestellt und hierdurch ein unterschiedlicher Fertigungsfortschritt erreicht, d.h. die in einem Arbeitsgang des Schiebers 133 aufgetragene Schicht weist einen Abstand zu der oberen Oberfläche des Substratplattensegments 112c auf, der unterschiedlich ist zu dem Abstand zur Oberfläche des Substratplattensegments 112b, der wiederum unterschiedlich ist zu der Oberfläche des Substratplattensegments 112a. Auf diese Weise können in den einzelnen Modulen Produkte mit unterschiedlichem Fertigungsfortschritt bzw. in unterschiedlichen Fertigungsstadien generativ erzeugt werden, wie zu ersehen ist aus dem im Modul 110a kurz vor Fertigstellung befindlichen Produkt 160, 161a und dem im Modul 110b etwa zur Hälfte fertig gestellten Produkt 160b.

Für die Funktion der Fertigungsanordnung gemäß Fig. 2 ist es vorgesehen, dass der Fertigungsfortschritt in den Modulen 110a-c ausgehend von rechts in Förderrichtung des Förderbandes 120 nach links, wie dargestellt durch den Pfeil 123, zunimmt. Sobald in einem Fertigungsmodul eine Fertigstellung der Produkte erzielt wurde, wird das Förderband so weit fortbewegt, dass dieses Modul entnommen werden kann oder das Modul wird entnommen und das Förderband um die entsprechende Länge des Moduls fortbewegt. In diesem Fall kann ein neues Modul auf der rechten Seite benachbart zur dargestellten Position des Schiebers 133 eingesetzt werden und eine generative Fertigung in diesem neuen Modul begonnen werden. Das entnommene Modul kann in einem weiteren Fertigungsabschnitt weiterverarbeitet werden, insbesondere kann hieraus das nicht ausgehärtete Pulvermaterial entnommen werden und die darin gefertigten Produkte von dem Substratplattensegment entfernt werden. Der besondere Vorteil liegt hierbei darin, dass in dem fertig gestellten Substratplattensegment, welches zuvor einer simultanen Fertigung mit den anderen Substratplattensegmenten unterzogen war, nun eine Entfernung des nicht ausgehärteten Pulvers und der fertig gestellten Produkte möglich ist, ohne dass hierzu das Pulver aus anderen Substratplattensegmenten entfernt werden muss oder der Fertigungsprozess in den anderen Substratplattensegmenten angehalten werden muss.

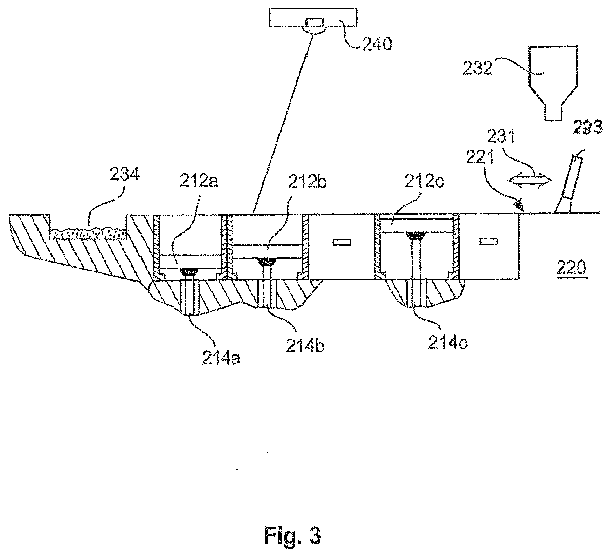

Fig. 3 zeigt eine weitere Ausführungsform der Erfindung. In einer insoweit mit den Ausführungsformen der Figuren 1A, B und 2 übereinstimmenden Weise sind mehrere Substratplattensegmente 212a-c nebeneinander angeordnet und jeweils von Seitenwänden in zu den Randbereichen jedes Substratplattensegments abgedichteter Weise umgeben. Die Seitenwände schließen mit ihren oberen Kanten bündig zu einer Oberfläche 221 ab, entlang derer sich ein Schieber 233 einer Pulverauftragsvorrichtung mit seiner unteren, als Rakelkante dienenden Kante in einer Richtung 231 entlangbewegt. Der Schieber 233 trägt hierbei eine Pulverschicht oberhalb der Substratplattensegmente 212a-c in einem Arbeitshub auf und schiebt überschüssiges Pulver in eine Auffangwanne 234.

Ebenso ist eine Laserstrahlquelle 240 vorgesehen, welche dazu dient, um vorbestimmte Bereiche der aufgetragenen Pulverschicht oberhalb jedes Substratplattensegments selektiv auszuhärten. Eine Steuerung für die Fertigungsvorrichtung ist vorgesehen, welche solcherart ausgebildet ist, dass nach jedem Schichtauftragsvorgang vorbestimmte Bereiche oberhalb jedes Substratplattensegments mittels der Laserstrahlquelle 240 ausgehärtet werden, wie zuvor beschrieben.

Im Unterschied zu den in den Figuren 1A, B und 2 gezeigten Ausführungsformen ist bei der Ausführungsform gemäß Fig. 3 ein jeweiliger Aktuator 214a-c, welcher dazu dient, um die Substratplattensegmente 212a-c individuell höhenzuverstellen und hierdurch den Abstand der oberen Oberfläche des jeweiligen Substratplattensegments von der Ebene, in welcher sich die Rakelkante des Schiebers 133 bewegt, individuell zu verändern, nicht Bestandteil eines Moduls, welches in eine Aufnahmevorrichtung eingesetzt wird. Stattdessen sind diese Aktuatoren 214a-c in die Aufnahmevorrichtung 220 integriert und die Substratplattensegmente 212a-c können mit den Aktuatoren 214a-c lösbar gekoppelt werden.

Mit der in Fig. 3 dargestellten Ausführungsform kann somit in gleicher Weise eine quasi kontinuierliche Fertigung von Produkten mittels eines generativen Herstellungsverfahrens wie SLS (Selective Laser Sintering) oder SLM (Selective Laser Melting) erfolgen, wobei in mehreren Substratplattensegmenten simultan Produkte hergestellt werden, die in einem unterschiedlichen Fertigungsstadium für jedes Substratplattensegment sind. Dies wird erreicht, indem die Substratplattensegmente individuell höhenverstellt werden können und hierdurch erreicht wird, dass oberhalb jedes Substratplattensegments ein Pulverbett aufgetragen wird, dessen Höhe unterschiedlich zwischen benachbarten Substratplattensegmenten ist, obwohl die jeweiligen neuen Schichten des aushärtbaren Materials mittels eines einzigen Schiebers 133 in einem einzigen Arbeitsgang auf die mehreren Substratplattensegmente 212a-c aufgetragen wird.

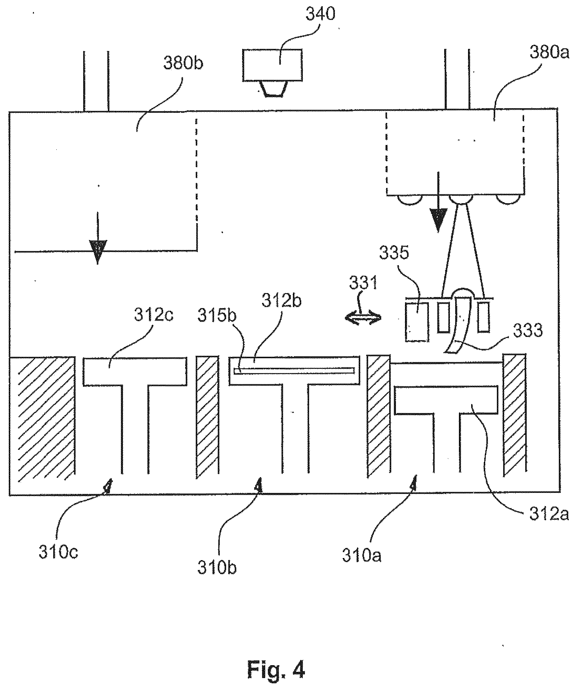

Fig. 4 zeigt eine vierte Ausführungsform der Erfindung, welche sich durch bestimmte Merkmale auszeichnet. Die in Fig. 4 gezeigte Ausführungsform beruht auf dem grundsätzlich ähnlichen Prinzip wie die in den Figuren 1A - 3 gezeigten Ausführungsformen und weist ein Substratplattensegmente 312a auf, das benachbart zu anderen Substratplattensegmenten (nicht dargestellt) angeordnet sein kann und individuell in seiner Höhe verstellt werden kann. Es ist zu verstehen, dass das zur Fig. 4 nachfolgend erläuterte Prinzip auf die in den Figuren 1A - 3 erläuterten Ausführungsformen angewendet werden kann.

Fig. 4 zeigt ein erstes Dosiermodul 310a, welches als Dosierplattform dient und vor Beginn eines Fertigungsprozesses mit Pulver gefüllt wird. Zu diesem Zweck ist eine höhenverstellbare Grundplatte 312a innerhalb des Dosiermoduls in die unterste Position verfahren. Oberhalb des Dosiermoduls 310a ist ein Strahlerfeld 380 angeordnet, welches das in das Dosiermodul 310a eingefüllte Pulver vorheizt.

Eine Rakel 333 ist entlang einer Richtung 331 horizontal verschiebbar. In Bewegungsrichtung vor der Rakel 333 ist ein Heizband 335 angeordnet, welches das durch die Rakel bewegte Pulver laufend heizt bzw. auf der vorgeheizten Temperatur hält.

Benachbart zu dem Dosiermodul 310a ist das Substratplattensegment 312b in einem Baumodul 310b angeordnet. Das Substratplattensegment 312b ist individuell und unabhängig von der Grundplatte 312a in dem Baumodul 310a vertikal verschieblich.

Das Baumodul 310b liegt in Bezug auf die Bewegungsrichtung 331 der Rakel 333 zwischen dem Dosiermodul 310a und einem Auffangmodul 310c, der dazu dient, überschüssiges Pulver, welches durch die Rakel 333 über das Baumodul 310b hinweggeschoben wurde, aufzunehmen. Auch in dem Auffangmodul 310c ist eine Grundplatte 312c angeordnet, die individuell und unabhängig von der Grundplatte 312a und dem Substratplattensegment 312b vertikal verschoben werden kann.

Grundsätzlich ist zu verstehen, dass die in Fig. 4 gezeigte Ausführungsform anstelle des dargestellten einzelnen Baumoduls 310b mit Substratplattensegment 312b auch mehrere solche Baumodule Substratplattensegmente aufweisen kann. Diese mehreren Baumodule wären nebeneinander in Auftragsrichtung 313 angeordnet und die Mehrzahl der Substratplattensegmente wäre insgesamt zwischen einem in Bezug auf den Verschiebeweg 331 der Rakel 333 an einem Ende angeordneten Dosiermodul 310a und einem am anderen Ende angeordneten Auffangmodul 310c platziert.

Auch oberhalb des Auffangmoduls 310c ist ein Strahlerfeld 380c angeordnet, welches dazu dient, um das in dem Auffangmodul aufgefangene überschüssige Material auf einer gewünschten Temperatur zu halten.

In das Substratplattensegment 312b ist eine Heizung 315b eingebaut, welche das Substratplattensegment und das darauf angeordnete Pulverbett auf einer gewünschten Temperatur hält.

Die in Fig. 4 dargestellte Ausführungsform ist insgesamt dahingehend optimiert, dass ein gewünschter, vorgewärmter Pulverzustand des Pulvers vor dem selektiven Aushärtungsvorgang erreicht wird, indem die Strahlerfelder 380a, b, das Heizband 335 und die Heizung 315b bereitgestellt sind.

Der mit der in Fig. 4 dargestellten Ausführungsform erzielbare Fertigungsprozess besteht in einer Sequenz, in der zunächst das Substratplattensegment 312b um einen bestimmten Betrag, welcher der aufzutragenden Schichtdicke entspricht, abgesenkt wird und die Plattform 312a des Dosiermoduls 315a um einen bestimmten Betrag angehoben wird, welcher sich aus dem Querschnitt der Plattform und dem für den nachfolgenden Auftragsvorgang erforderlichen Pulvervolumen berechnet.

Hierauf folgend wird das vorgewärmte Pulvervolumen aus dem Bereich des Dosiermoduls durch horizontale Bewegung der Rakel 333 über das Substratplattensegment 312b geschoben und hierbei eine Schicht auf das Substratplattensegment 312b oder gegebenenfalls weitere Substratplattensegmente aufgetragen. Überschüssiges Pulver wird in das Auffangmodul eingebracht.

Nach Auftrag dieser Pulverschicht wird mittels eines Lasers 340 die Pulverschicht in vorbestimmten Bereichen selektiv ausgehärtet und die dabei ausgehärteten Bereiche mit zuvor ausgehärteten Bereichen in der darunter liegenden Schicht verbunden.

Die Rakel 333 fährt hierauf folgend zurück, wobei mittels einer Schleifeinrichtung, die in der nun erfolgenden Bewegungsrichtung von links nach rechts vor dem Rakel angeordnet ist, die zuvor ausgehärteten Bereiche oberflächlich angeschliffen werden, um hierdurch die Geometrietreue des generativ hergestellten Produkts zu verbessern und die Anbindung der darauffolgenden auszuhärtenden Bereiche zu erhöhen. Alternativ zu dieser Ausgestaltung, bei welcher der Schleifvorgang in einem Rückhubvorgang der Beschichtungsvorrichtung ausgeführt wird, ist es möglich, den Schleifvorgang gemeinsam mit dem Fertigungsschritt des erneuten Pulverauftrags auszuführen, In diesem Fall ist die Anordnung der Schleifeinrichtung an der Beschichtungsvorrichtung konstruktiv so zu wählen, dass die Schleifeinrichtung in Bewegungsrichtung des Pulverauftrags vor der Position liegt, an der das Pulver aufgetragen wird.

Nachdem die Rakel 333 in seine in Fig. 4 dargestellte rechte Position zurückgekehrt ist, beginnt der Prozess erneut und wird so lange wiederholt, bis das oberhalb des Substratplattensegments 312b oder eines gegebenenfalls anderen in einer Reihe von Substratplattensegmenten angeordnetem Substratplattensegment zu erstellende Produkt fertig gestellt ist. Dabei wird der Laserstrahl der Laserstrahlquelle 340 über jede Schicht solcherart selektiv geführt, dass zuvor berechnete Bereiche dieser Schicht, welche dem Querschnitt der herzustellenden Produkte in der jeweiligen Schicht auf allen Substratplattensegmenten entsprechen, selektiv ausgehärtet werden.

Nach Abschluss des Fertigungsvorgangs kann das Produkt von dem Substratplattensegment abgetrennt werden. Dabei ist grundsätzlich zu verstehen, dass auch mehrere Produkte oberhalb von einem Substratplattensegment hergestellt werden können und dass auch mehrere Substratplattensegmente nebeneinander in unterschiedlichen Fertigungsstadien mit dem einzigen Rakel 333 beschichtet und dem einzigen Laser 340 selektiv ausgehärtet werden können.

Das in dem Auffangmodul 310c aufgefangene Pulver kann durch Hochfahren der Plattform 312c angehoben werden und durch entsprechendes Verfahren der Rakel 333 von links nach rechts in den Dosiereinschub zurückbefördert werden, um einen neuen Fertigungsprozess zu starten und das Pulver hierbei wieder zu verwenden. Alternativ kann auch nun im nachfolgenden Fertigungsvorgang die Funktion von Dosiermodul und Auffangmodul vertauscht werden, so dass der Schichtauftragsvorgang nun durch eine Bewegung der Rakel von links nach rechts stattfindet und der Schleifvorgang durch eine entsprechend umgekehrte Bewegung von rechts nach links. In diesem Fall ist die aus Heizband, Rakel und Schleifvorrichtung bestehende verfahrbare Einheit entsprechend vorzugsweise um 180° um eine vertikale Achse verstellbar auszubilden.

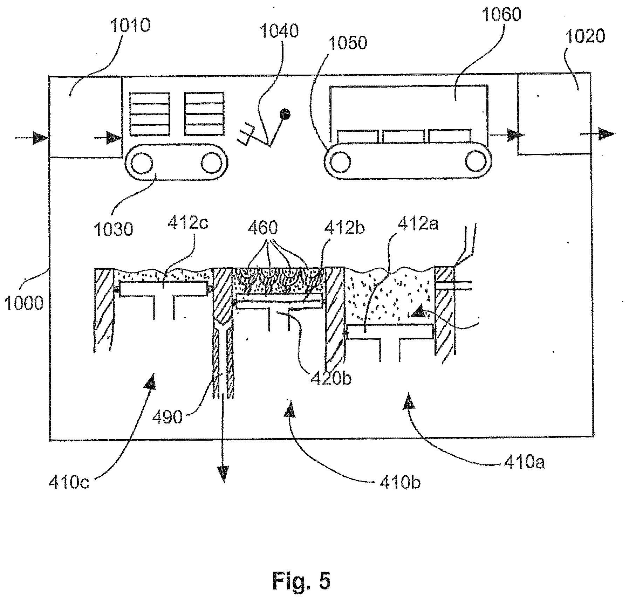

Fig. 5 zeigt eine weitere Ausführungsform der Erfindung. Die in Fig. 5 gezeigte Fertigungsanordnung umfasst eine Prozesskammer 1000, welche eine erste Schleuse 1010 und eine zweite Schleuse 1020 aufweist.

Durch die erste Schleuse 1010 werden Substratplattensegmente zugeführt und auf ein Förderband 1030 aufgelegt. Die Substratplattensegmente werden auf diesem Förderband zwischengelagert und können gegebenenfalls vorgeheizt werden.

Mittels eines Roboterarms 1040 können die Substatplattensegmente auf eine Bauplattform 420b eines Baueinschubs 410b aufgelegt werden, um darauf generativ Produkte herzustellen. Der Baueinschub 410b ist, wie zuvor bezüglich der Ausführungsform gemäß Fig. 4 bezüglich der dortigen gezeigten drei Module 312a-c erläutert, von einem Dosiereinschub 410a und einem Auffangeinschub 410c flankiert und es ist zu verstehen, dass auch mehrere Substratplattensegmente nebeneinander zwischen dem Dosiereinschub und dem Auffangeinschub angeordnet sein können, um eine quasi kontinuierliche Fertigung in der zuvor erläuterten Weise durchzuführen.

Nach Fertigstellung der generativ hergestellten Produkte in dem Baueinschub kann bei der in Fig. 5 dargestellten Ausführungsform das Substratplattensegment 412b in eine untere Position verfahren werden. In dieser unteren Position steht der Bauraum oberhalb des Substratplattensegments 412b mit einem Pulverabsaugkanal 490 in Verbindung, der in die Wandung eingelassen ist, welche den Bauraum als Seitenwand begrenzt. Über diesen Pulverabsaugkanal 490 kann dann das nicht ausgehärtete Pulver aus dem Bereich oberhalb des Substratplattensegments 412b abgesaugt werden.

Der Pulverabsaugkanal 490 ist zugleich solcherart ausgeführt, dass auch das in den Auffangeinschub geschobene Pulver durch den Absaugkanal 490 abgesaugt werden kann, wobei zu verstehen ist, dass dies als optional weitere Funktion vorgesehen sein kann oder auch nicht. Diesbezüglich wird insbesondere auf die unterschiedlichen Betriebsweisen der Ausführungsform mit Dosiermodul und Auffangmodul Bezug genommen, die zur Ausführungsform gemäß Fig. 4 erläutert wurden.

Nachdem das nicht ausgehärtete Pulver aus dem Bereich oberhalb des Substratplattensegments 412b abgesaugt wurde, kann die Bauplattform in die oberste Position vertikal verfahren werden und das Substratplattensegment 412b wiederum mittels des Roboterarms 1040 gefasst werden und einem zweiten Förderband 1050 zugeführt werden.

Mit dem zweiten Förderband 1050 wird das Substratplattensegment 412b mitsamt den darauf angeordneten Produkten durch einen Temperofen 1060 gefördert, um die darauf befindlichen Produkte einer Temperung zu unterziehen und hierdurch die gewünschten Bauteileigenschaften herzustellen. Nach erfolgter Temperung kann das Substratplattensegment 412b durch die Schleuse 1020 aus der Prozesskammer 1000 ausgeschleust werden.

Durch den Aufbau gemäß Fig. 5 wird es möglich, sowohl die Vorwärmung und Bereitstellung der Platten, als auch die gesamte generative Fertigung und Pulverhandhabung sowie das nachfolgende Tempern in einer kontrollierten Atmosphäre, insbesondere einer Inertgas- oder Aktivgasatmosphäre innerhalb einer Prozesskammer 1000 auszuführen.

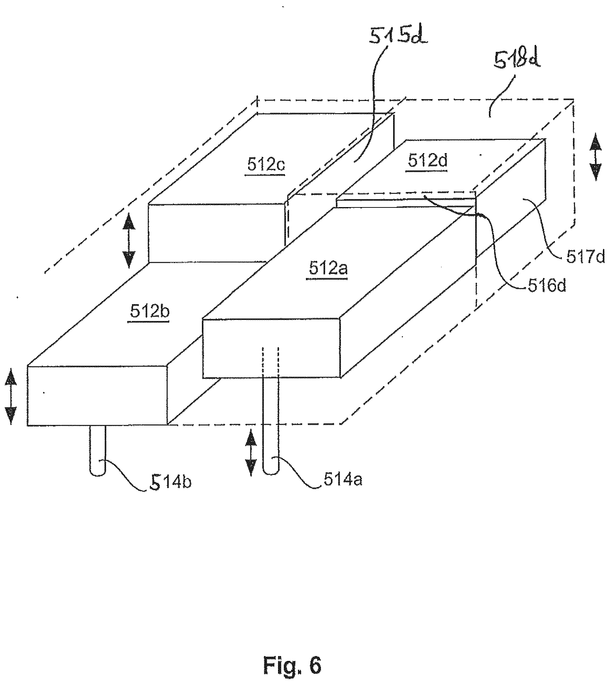

Fig. 6 zeigt einen weiteren Aspekt der erfindungsgemäßen Vorrichtung bzw. des erfindungsgemäßen Verfahrens. Dargestellt sind in Fig. 6 vier in zwei Reihen und zwei Spalten angeordnete Substratplattensegmente 512a-d. Wie zu erkennen ist, ist jedes der Substratplattensegmente individuell höhenverstellbar mittels jeweils einer entsprechenden Hebe/Senkvorrichtung 514a-d. Sowohl die Substratplattensegmente einer Zeile als auch die Substratplattensegmente einer Spalte sind unabhängig voneinander vertikal verschiebbar, so dass auf jedem der Substratplattensegmente Produkte generativ in unterschiedlichen Fertigungsstadien hergestellt werden können.

Zwischen den jeweiligen Substratplattensegmenten sind zwecks des individuellen Aufbaus eines Pulverbetts oberhalb des jeweiligen Substratplattensegments Trennwände vorzusehen. Hierbei ist in der gezeigten Ausführungsform vorgesehen, dass diese Trennwände nicht Bestandteil der Vorrichtung sind, sondern dass die Trennwände durch selektives Aushärten des Pulvermaterials im Randbereich der jeweiligen Substratplattensegmente kontinuierlich aufgebaut werden und folglich mit dem generativ hergestellten Produkt im Mittelbereich des Substratplattensegments vertikal mitwachsen. Alternativ hierzu kann vorgesehen sein, dass Trennwände als Bestandteil der Fertigungsvorrichtung bereitgestellt sind und solcherart angeordnet sind, dass ihre Oberkante bündig mit einer Ebene, in welcher sich eine Pulverauftragsrakel bewegt, abschließen.

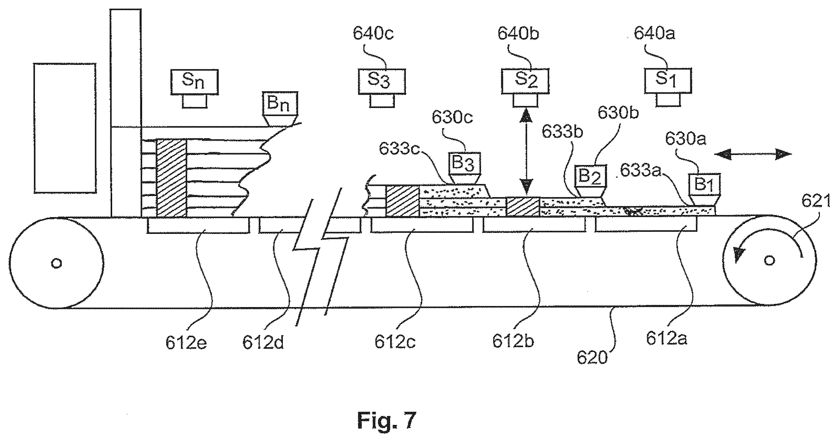

Fig. 7 zeigt eine siebte Ausführungsform der Erfindung. Die Ausführungsform weist ein Endlosförderband 620 auf, entlang dem mehrere Substratplattensegmente 612a-e in Förderrichtung 621 angeordnet sind.

Die Substratplattensegmente 612a-e sind solcherart platziert, dass ihre obere Oberfläche in einer gemeinsamen Ebene liegt.

Oberhalb der Substratplattensegmente 612a-e sind mehrere Beschichtungsvorrichtungen 630a-d angeordnet. Die Einzel-Beschichtungsvorrichtungen 630a-d umfassen jeweils eine Rakel 633a-d. Die Unterkante der Rakel 633a ist in dem Abstand einer Schicht von der Oberfläche der Substratplattensegmente 612a-e angeordnet. Die untere Kante der Rakel 633b ist gegenüber der vorhergehenden Rakel 633a um einen Schichtabstand mehr von der Oberfläche der Substratplattensegmente 612a-e beabstandet und in gleicher Weise sind die Unterkanten der Rakel 633c, d entsprechend um jeweils eine Schichtdicke mehr von der Oberfläche der Substratplattensegmente gegenüber der vorhergehenden, benachbarten Rakel angehoben.

Grundsätzlich ist die in Fig. 7 dargestellte Ausführungsform so zu verstehen, dass eine Vielzahl von nebeneinander angeordneten Einzel-Beschichtungsvorrichtungen a, b, c, d ... in einer solch vertikal gestaffelten Höhenanordnung bereitgestellt ist.

Zwischen jeweils zwei Schichtauftragsvorrichtungen 633a, b, c ... ist ein Bereich, in dem die aufgetragene Schicht mittels eines Lasers 640a, b, c, d selektiv ausgehärtet werden kann. Dabei ist jeder Einzel-Beschichtungsvorrichtung ein entsprechender Laser zugeordnet.

Das Förderband 620 wird während der Fertigung kontinuierlich oder diskontinuierlich solcherart fortbewegt, dass sich der Obertrum in der in Fig. 7 dargestellten Konstellation von rechts nach links bewegt. Hierdurch wird oberhalb der Substratplattensegmente 612a, b, c ... ein Materialbett durch aufeinander folgende Schichten aufgetragen, welches umso höher wird, je weiter ein Substratplattensegment von rechts nach links mittels des Förderbandes gefördert ist. In entsprechend gleicher Weise erhöht sich die Bauhöhe der auf den jeweiligen Substratplattensegmenten generativ hergestellten Produkte.

Das Prinzip der in Fig. 7 dargestellten Ausführungsform ist einerseits so zu verstehen, dass durch eine Vielzahl von Pulverauftragsvorrichtungen und die Summe der mit diesen Pulverauftragsvorrichtungen in einem Bewegungsgang des Förderbandes aufgetragenen Schichten die gewünschte Höhe des Pulverbetts und somit der hergestellten Produkte erreicht werden kann. Alternativ hierzu kann auch das Förderband 620 reziprok während eines Herstellungsprozesses mehrfach hin- und her bewegt werden und hierbei die mehreren Pulverauftragsvorrichtungen oder das Förderband vertikal verschoben werden, um mittels einer Anzahl von N Pulverauftragsvorrichtungen während eines Fertigungsprozesses eine Anzahl von M x N Pulverschichten aufzutragen, wobei M der Anzahl der reziproken Bewegungen des Förderbandes entspricht. Hierbei ist zu verstehen, dass die N Pulverauftragsvorrichtungen nach jeder reziproken Bewegung des Förderbandes um einen Betrag angehoben oder das Förderband um einen solchen Betrag abgesenkt wird, der der N-fachen Schichtstärke entspricht, um hierbei zu erreichen, dass die am weitesten rechts und folglich am tiefsten liegende Pulverauftragsvorrichtung im darauf folgenden Auftragsvorgang ihre Schicht auf die zuvor von der am weitesten links und folglich am höchsten angeordneten Pulverauftragsvorrichtung aufgetragenen Schicht aufträgt.

Nach entsprechender Fertigstellung der Produkte erfolgt in Förderrichtung nach links des Förderbandes 520 eine Absaugung des nicht ausgehärteten Pulvermaterials 590 aus dem Bereich oberhalb eines Substratplattensegments, auf dem fertig gestellte Produkte aufgebaut liegen. Dabei ist zu verstehen, dass jeweils nur oberhalb des am weitesten links liegenden Substratplattensegments eine solche Pulverabsaugung erfolgt, wohingegen das rechts hiervon liegende Substratplattensegment aufgrund der in der Regel dort noch nicht fertig gestellten Produkte noch nicht abgesaugt wird. Dies kann durch entsprechend parallel aufgebaute Trennwände zwischen den Substratplattensegmenten erreicht werden.

Nach Absaugung des nicht ausgehärteten Pulvers können die auf dem Substratplattensegment hergestellten Produkte von diesem abgetrennt werden. Gegebenenfalls kann nach diesem Abtrennvorgang mittels einer links von der Absaugung angeordneten Vorrichtung zur Oberflächenglättung, insbesondere einer Fräs- oder Schleifstation oder einer Vorrichtung zur Laserglättung die Oberflächen des Substratplattensegmentes, wieder plan zubereitet werden, um hierauf folgend das Substratplattensegment einer erneuten generativen Fertigung zuzuführen.

Es ist zu verstehen, dass die mehreren Strahlungsquellen durch jeweils einzelne Laserquellen bereitgestellt werden können oder durch einen oder mehrere Laserquellen, deren Strahl geteilt und folglich auf entsprechend mehrere Stellen gerichtet werden kann. Hierbei ist weiter zu verstehen, dass der aufgeteilte Strahl und die hieraus erzeugten mehreren Strahlengänge auch durch entsprechende Strahlungsleitmittel individuell über die jeweiligen Schichten geführt werden können, um jede Schicht individuell selektiv auszuhärten. Erfindungsgemäß findet der Schichtauftragsvorgang für alle Substratplattensegmente in einem gemeinsamen ersten Arbeitsgang, gefolgt von einem selektiven Aushärtungsvorgang in einem zweiten Arbeitsgang statt. Dies kann bei entsprechender Anzahl von Einzel-Beschichtungsvorrichtungen unter kontinuierlicher Bewegung des Förderbandes oder - bei reziproker Bewegung des Förderbandes - in einem quasi-kontinuierlichen Prozess stattfinden.

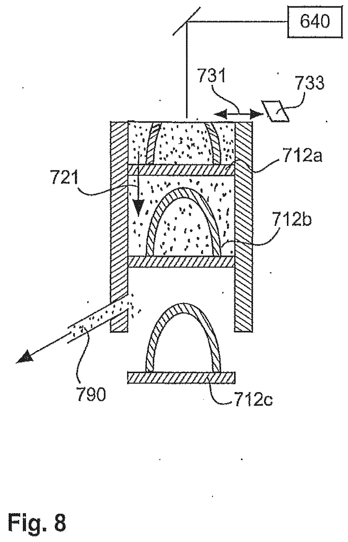

Fig. 8 ist eine weitere Ausführungsform der Erfindung zu entnehmen. Bei dieser Ausführungsform sind mehrere Substratplattensegmente 712a, b übereinander angeordnet und durch gemeinsame Seitenwände 715 - 718 wird der Bauraum oberhalb der jeweiligen Substratplattensegmente begrenzt. Die Substratplattensegmente 712a, b ... bewegen sich hierbei in einer vertikalen Bewegungsrichtung von oben nach unten durch den durch die Seitenwände begrenzten Bauraum. Mittels einer Schichtauftragsvorrichtung wird hierbei in den jeweils oberhalb des obersten Substratplattensegments 712b bereitgestellten Bauraum iterativ Schichten aufgetragen und mittels einer Laserstrahlquelle selektiv ausgehärtet. Dabei ist zu verstehen, dass der Schichtauftragsvorgang in gleicher Weise wie zuvor erläutert mittels eines Rakels erfolgen kann. Dieser Rakel bewegt sich bei der in Fig. 8 gezeigten Ausführungsform in einer horizontalen Ebene, also senkrecht zur Förderrichtung der Substratplattensegmente 712a, b.

Sobald oberhalb eines Substratplattensegments ein ausreichend hohes Pulverbett aufgetragen worden ist und das darin eingebettete, generativ hergestellte Produkt fertig gestellt ist, kann ein neues Substratplattensegment darauf aufgelegt werden, wobei es jeweils in entsprechender Weise an einer Fördervorrichtung für die vertikale Bewegung angekoppelt wird.

Die Substratplattensegmente mit darauf aufgebauten fertig gestellten Produkten können in einem unterhalb der Schichtauftragsvorrichtung und des Bauraums, in dem generativ hergestellt wird, angeordneten Fertigungsabschnitt entnommen werden, indem das Pulver abgesaugt und die Produkte von dem Substratplattensegment abgetrennt werden. Hierzu kann insbesondere eine Kanalabsaugung verwendet werden, wie sie bezüglich Fig. 5 erläutert wurde, um hierauf folgend die Produkte in einen Bereich zu fördern, der nicht von seitlichen Wänden begrenzt ist und hierdurch die Entnahme der Produkte oder des gesamten Substratplattensegments aus der Vertikalfördervorrichtung zu ermöglichen.

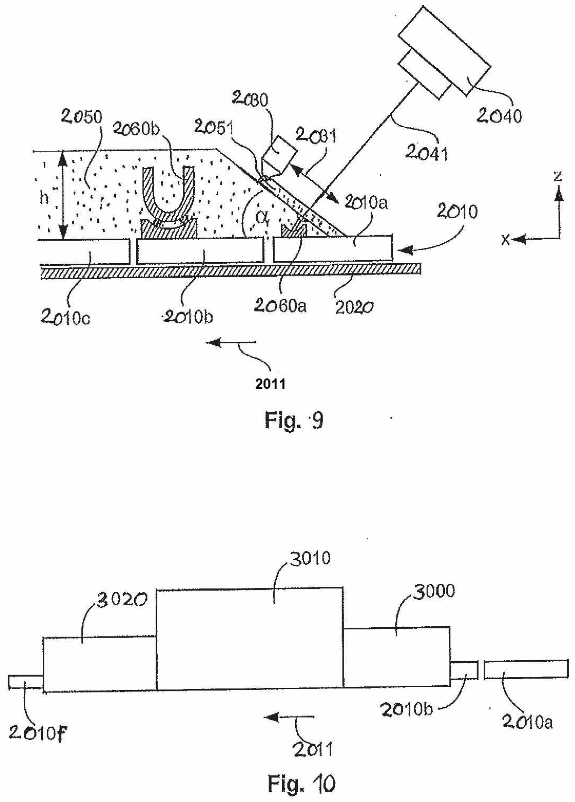

Fig. 9 zeigt eine Substratplatte 2010, die aus mehreren Substratplattensegmenten 10a-c besteht. Die Substratplattensegmente 2010a-c sind lösbar mit einem darunter angeordneten Substratplattenträger 2020 verbunden. Der Substratplattenträger 2020 und die Substratplattensegmente 2010a-c sind solcherart angeordnet, dass die Oberfläche der Substratplattensegmente 2010a-c im Betriebszustand der Vorrichtung horizontal, d.h. senkrecht zur Schwerkraftrichtung ausgerichtet sind.

In Schwerkraftrichtung oberhalb von der oberen Auflagefläche der Substratplattensegmente 2010a-c ist eine Beschichtungsvorrichtung 2030 angeordnet. Die Beschichtungsvorrichtung 2030 ist entlang einer Bewegungsrichtung 2031 verschiebbar. Die Bewegungsrichtung 2031 ist geradlinig und schließt mit der durch die obere Auflagefläche der Substratplattensegmente 2010a-c definierten Ebene einen Winkel α ein. Durch zyklisches Hin- und Herbewegen der Beschichtungsvorrichtung 2030 entlang der Bewegungsrichtung 2031 kann oberhalb der Substratplattensegmente 2010a-c eine in einem Winkel α zur Horizontalen geneigte Pulverschicht aufgetragen werden.

In jedes Substratplattensegment 2010a-c kann eine Heizung eingebaut sein, welche das Substratplattensegment und das darauf angeordnete Pulverbett auf einer gewünschten Temperatur hält. Hierdurch, und durch ein oder mehrere gegebenenfalls zusätzlich vorgesehene Strahlerfelder und/oder Heizbänder im Bereich der Beschichtungsvorrichtung, welche die aufgetragene Pulverschicht erwärmen beziehungsweise dessen Temperatur aufrechterhalten, kann die Vorrichtung dahingehend optimiert werden, dass ein gewünschter, vorgewärmter Pulverzustand des Pulvers vor dem selektiven Aushärtungsvorgang erreicht wird.

Die Substratplattensegmente 2010a-c können kontinuierlich oder in getakteter, quasi-kontinuierlicher Weise in einer Bewegungsrichtung 2011 fortbewegt werden, die parallel zur Horizontalen liegt. Durch die Bewegungsrichtung 2011 wird nach Auftrag einer Schicht mittels der Beschichtungsvorrichtung 2030 ein Abstand zwischen der Ebene, in der sich die Beschichtungsvorrichtung 2030 bewegt und der aufgetragenen Schicht erzeugt, welcher der Schichthöhe der nächsten, aufzutragenden Schicht entspricht.

Eine Strahlungsquelle 2040, die ein Hochleistungslaser ist, ist solcherart angeordnet, dass sein Strahl etwa senkrecht, vorzugsweise genau senkrecht auf die Oberfläche einer aufgetragenen Schicht trifft. Der Strahl der Strahlungsquelle 2040 kann mit Strahllenkungsmitteln solcherart gelenkt werden, dass er auf vorbestimmte Bereiche einer aufgetragenen Schicht trifft und diese selektiv aushärtet.

Die Strahllenkungsmittel sind mit einer Steuerungsvorrichtung signaltechnisch gekoppelt. In der Steuerungsvorrichtung sind Fertigungsdaten für zumindest die jeweils gleichzeitig herzustellenden Produkte gespeichert. Die Fertigungsdaten umfassen insbesondere Lagedaten, welche die Lage eines jeweiligen Produkts auf der Substratplatte charakterisieren und Geometriedaten, welche die Geometrie des jeweiligen Produkts charakterisieren. Die Geometriedaten sind solcherart aufbereitet, dass darin die geometrischen Daten einzelner Querschnitte des Produkts enthalten sind. Die jeweilige Lage eines solchen Querschnitts und die für diesen Querschnitt gespeicherten Geometriedaten entspricht der Lage derjeweils aufgetragenen Materialschicht, aus dem dieser Produktquerschnitt hergestellt wird und der Geometrie des Produkts in dieser Materialschicht. In der dargestellten Ausführungsform mit senkrecht auf der Platte aufstehenden Produkten entsprechen die geometrischen Daten daher schräg verlaufenden Querschnittsebenen durch dieses Produkt.

Wie zu erkennen ist, ist oberhalb des Substratplattensegmentes 2010c ein Pulverbett aufgetragen, welches aus mehreren Pulverschichtlagen zusammengesetzt ist und welches die maximale Höhe h über den Substratplattensegmenten aufweist. Auch oberhalb des Substratplattensegmentes 2010b ist diese maximale Höhe in einem links liegenden Bereich bereits erreicht, allerdings in einem hiervon rechts, entgegen der Förderrichtung 2011 liegenden Bereich noch nicht vollständig erreicht. Stattdessen verläuft die Oberfläche des Pulverbetts in diesem rechten Bereich des Substratplattensegmentes 2010b, ebenso wie in einem linken Bereich des Substratplattensegmentes 2010c geneigt im Winkel α1.

Oberhalb des Substratplattensegmentes 2010b ist ein generativ hergestelltes Produkt 2060b im Pulverbett in ausgehärteter Form angeordnet. In gleicher Weise wird oberhalb des Substratplattensegmentes 2010a ein Produkt 2060c generativ hergestellt. Dieser Herstellvorgang erfolgt, indem nach dem Auftrag jeder Pulverschicht 1051 vorbestimmte Bereiche dieser Pulverschicht mittels der Strahlungsquelle 2040 selektiv ausgehärtet werden. Hierauf folgend wird durch Vorschub der Substratplattensegmente in der Förderrichtung 2011 ein der Schichthöhe entsprechender Abstand zwischen der Ebene der Beschichtungsvorrichtung 2030 und der zuvor aufgetragenen Schicht hergestellt und hiernach erfolgt ein erneuter Beschichtungsvorgang durch Bewegung der Beschichtungsvorrichtung 2030 entlang der Bewegungsrichtung 2031. An der Beschichtungsvorrichtung kann vorzugsweise eine Schleifeinrichtung angeordnet sein, die entweder in der Bewegungsrichtung beim Pulverauftrag vor der Position, an der das Pulver aufgetragen wird, angeordnet ist und dazu dient und ausgebildet ist, dass die zuvor ausgehärteten Bereiche oberflächlich angeschliffen werden. Hierdurch kann die Geometrietreue des generativ hergestellten Produkts verbessert und die Anbindung der darauffolgenden auszuhärtenden Bereiche zu erhöht werden. Alternativ hierzu ist es möglich, den Schleifvorgang in einem Rückhubvorgang der Beschichtungsvorrichtung auszuführen, das heißt zwischen dem Fertigungsschritt der selektiven Aushärtung und dem Fertigungsschritt des erneuten Pulverauftrags, In diesem Fall ist die Anordnung der Schleifeinrichtung an der Beschichtungsvorrichtung in Bezug auf die Position, an der das Pulver aufgetragen wird, konstruktiv frei wählbar, da Schleifvorgang und Pulverauftragsvorgang nicht während ein und derselben Bewegung der Beschichtungsvorrichtung erfolgen.

Dieser Prozess wird wiederholt durchgeführt, bis das gesamte Produkt 60c hergestellt ist. Durch die Förderbewegung 2011 werden die solcherart generativ hergestellten und fertig gestellten Produkte 2060b, c nach links weitergefördert, wo sie nach entsprechender Entfernung des nicht ausgehärteten Pulvers von der Substratplatte entfernt werden können.

Fig. 10 zeigt hierzu einen möglichen Aufbau einer Fertigungsanordnung und einen entsprechenden Prozessablauf. Wie erkennbar ist, werden die Substratplattensegmente 2010a, b, c ... von einer rechten Seite in einer horizontalen Bewegungsrichtung 2011 in eine Eingangsschleuse 3000 eingeschleust und gelangen in der gleichen Bewegungsrichtung 2011 aus der Eingangsschleuse 3000 in eine Prozesskammer 3010. In der Prozesskammer 3010 ist der in Fig. 9 dargestellte Fertigungsabschnitt angeordnet und findet der bezüglich Fig. 1 erläuterte Fertigungsvorgang statt. Nach entsprechender generativer Herstellung der Produkte in der Prozesskammer 3010 gelangen diese durch weitere Bewegung entlang der Bewegungsrichtung 2011 in einer Ausgangsschleuse 3020 und werden hierdurch aus der Prozesskammer ausgeschleust.

Durch die Einschleusung der unbeschichteten Substratplattensegmente durch die Eingangsschleuse 3000 und die Ausschleusung der beschichteten und mit generativ hergestellten Produkten bestückten Substratplattensegmenten durch die Ausgangsschleuse 3020 kann in der Prozesskammer 3010 eine für die generative Fertigung günstige Atmosphäre, insbesondere eine Inertgasatmosphäre oder eine Aktivgasatmosphäre, aufrechterhalten werden und hierdurch die Produktqualität sichergestellt werden.

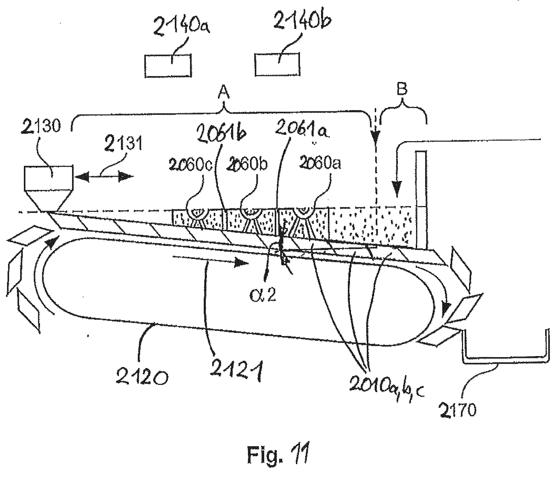

Fig. 11 zeigt eine zweite Ausführungsform eines Fertigungsabschnitts zur generativen Fertigung sowie eines Fertigungsabschnitts zur Abtrennung und Entnahme von generativ hergestellten Produkten. Eine Mehrzahl von Substratplattensegmenten 2010a, b, c ... ist solcherart nebeneinander angeordnet, dass hierdurch eine zusammenhängende Substratplatte bereitgestellt wird. Die obere Oberfläche dieser durch die Substratplattensegmente 2010a, b, c ... bereitgestellten Substratplatte ist in einem Winkel α zur Horizontalen geneigt, d.h. diese Oberfläche steht in einem Winkel 90° - α zur Schwerkraftrichtung.

Oberhalb der Substratplattensegmente 2010a, b, c ... ist eine Beschichtungsvorrichtung 2130 angeordnet, die sich entlang einer horizontalen Bewegungsrichtung 2131 zyklisch hin- und her bewegen kann. Mittels der Beschichtungsvorrichtung 2130 wird auf diese Weise eine Pulverschicht aus einem Pulverreservoir, welches an der Beschichtungsvorrichtung 2130 angeordnet sein kann oder welches entlang des Bewegungspfades 2131 der Beschichtungsvorrichtung 2130 angeordnet sein kann, aufgetragen.

Mittels der Beschichtungsvorrichtung 2130 kann durch Bewegung entlang der Beschichtungsrichtung 2131 eine Pulverschicht oberhalb der Substratplattensegmente 2010a, b, c ... aufgetragen werden, die in einem Winkel α zur oberen Oberfläche der Substratplattensegmente liegt.

Auf den Substratplattensegmenten 2010a, b, c ... wird durch selektives Aushärten jeder aufgetragenen Schicht mittels zweier als Hochleistungslaser ausgebildeten Strahlungsquellen 2140a, b vorbestimmte Bereiche jeder Pulverschicht selektiv ausgehärtet und hierdurch Produkte 2060a, b auf den Substratplattensegmenten schichtweise generativ aufgebaut. Des Weiteren werden zwischen jedem Produkt oder zwischen einer Gruppe von Produkten jeweils Trennwände 2061a, b oberhalb der Substratplattensegmente durch entsprechend selektives Aushärten der Schichten aufgebaut. Diese Trennwände unterteilen das Pulverbett oberhalb der Substratplattensegmente in mehrere Pulverbettbereiche. In jedem Pulverbettbereich ist ein oder sind mehrere Produkte angeordnet, die gleichzeitig entnommen werden können.

Die Substratplattensegmente 2010a, b, c ... sind an einem Endlosförderband 2120 befestigt und werden mittels dieses Endlosförderbands 2120 in einer Förderrichtung 2111 kontinuierlich oder diskontinuierlich fortbewegt. In einem Fertigungsabschnitt A erfolgt durch diese Förderbewegung 2121 und ein wiederholtes Auftragen von Pulverschichten mittels der Beschichtungsvorrichtung 2130, gefolgt von einem selektiven Aushärten jeder aufgetragenen Schicht die generative Fertigung der Produkte. Die Pulverbeschichtungsvorrichtung 2130 bewegt sich hierbei entlang einer Bewegungsrichtung 2131, die in einem Winkel α2 zur Bewegungsrichtung 2121 der Substratplattensegmente liegt.

In einem Fertigungsbereich B wird nicht ausgehärtetes Pulvermaterial durch eine Absaugvorrichtung aus dem Bereich zwischen zwei generativ hergestellten Trennwänden 2061a-d entfernt und hierauf folgend sowohl die Trennwände als auch die in diesem Bereich zwischen den beiden Trennwänden generativ hergestellten und fertiggestellten Produkte entnommen. In Förderrichtung 2121 hinter dem Fertigungsabschnitt B werden die Substratplattensegmente entlang einer Umlenkrolle in den Untertrum des Förderbandes 2120 geführt und laufen entlang dieses Untertrums bis zu einer zweiten Umlenkrolle, an der sie wiederum in den Obertrum geführt werden, um einer erneuten Beschichtung mit Pulverschichten und generativer Fertigung von Produkten zugeführt zu werden.

Eine Auffangwanne 2170 ist bereitgestellt, um überschüssiges Pulver aufzufangen, welches bei Umlenkung der Substratplattensegmente abfällt.

Wie aus Fig. 11 erkennbar ist, können einzelne Produkte auf einem einzigen Substratplattensegment generativ aufgebaut werden oder ein einzelnes Produkt kann auch auf mehreren Substratplattensegmenten generativ aufgebaut werden. Dabei hängt es allein von der Größe der Substratplattensegmente und der darauf generativ hergestellten Produkte ab, ob mehrere Produkte auf einem Substratplattensegment oder ein Produkt auf mehreren Substratplattensegmenten oder jeweils ein Produkt pro Substratplattensegment hergestellt wird. Insbesondere kann durch die Verwendung von Stützen auch ein Produkt auf einem einzigen Substratplattensegment hergestellt werden, dessen Abmessungen größer als die Abmessungen des Substratplattensegments selbst sind.

Die in Figur 11 gezeigte Ausführungsformen eignen sich insbesondere für die Stereolithographie. Sowohl in der in Fig. 9 als auch in der in Fig. 11 dargestellten Ausführungsform ist der Winkel α1 bzw. α2 zwischen Schichtauftragsrichtung und Oberfläche der Substratplattensegmente kleiner als der Pulverschüttwinkel des aufgetragenen Pulvers, um hierdurch eine Stabilität des aufgetragenen Pulverbetts gegenüber der Einwirkung der Schwerkraft zu erzielen. Grundsätzlich könnte bei der in Fig. 11 dargestellten Ausführungsform der Winkel α2 auch größer als dieser Pulverschüttwinkel gewählt werden, da das Pulverbett durch die Trennwände 2061a-d stabilisiert ist und die Pulverschichtlagen selbst horizontal aufgetragen werden und liegen.

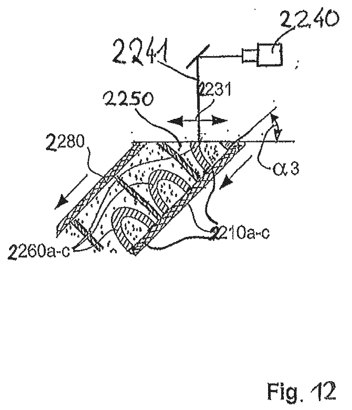

Fig. 12 zeigt eine schematische Darstellung einer alternativen Ausführungsform, bei welcher der Winkel α3 zwischen der Ebene, in welcher der Pulverschichtauftrag erfolgt und der Oberfläche der Substratplattensegmente größer als der Pulverschüttwinkel sein kann. Bei dieser Ausführungsform werden die Produkte 2260a-c ebenfalls auf Substratplattensegmenten 2210a-c generativ aufgebaut und hierbei ein Pulverbett 2250 oberhalb dieser Substratplattensegmente hergestellt. Das Pulverbett 2250 wird mittels einer parallel zu den Substratplattensegmenten im Fertigungsabschnitt verlaufenden Deckplatte 2280 stabilisiert. Hierbei kann die Deckplatte 2280 insbesondere sich kontinuierlich mit den Substratplattensegmenten fortbewegen, um eine Relativbewegung zwischen dem Pulverbett und der Deckplatte 2280 zu verhindern.

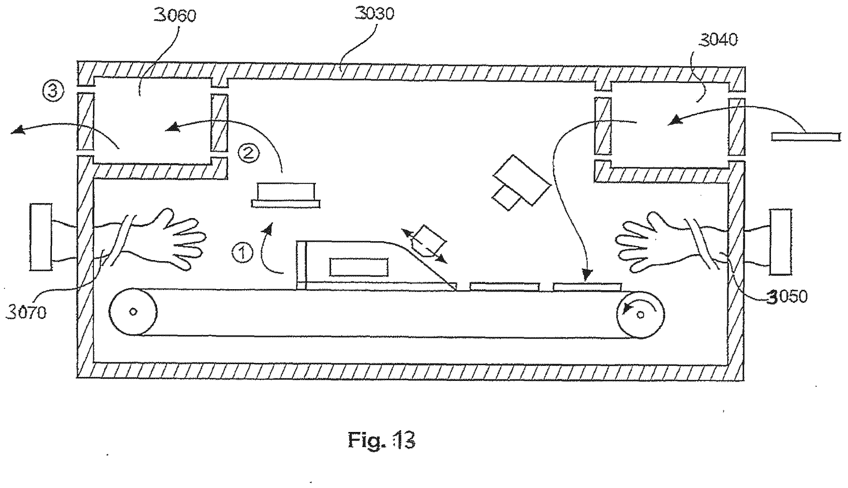

Fig. 13 zeigt eine schematische Darstellung einer Fertigungsanordnung zur kontinuierlichen Herstellung generativ hergestellter Produkte. Die Ausführungsform gemäß Fig. 13 stellt eine Alternative zu der in Fig. 10 dargestellten Ausführungsform dar. Entgegen der in Fig. 10 dargestellten Ausführungsform sind bei der in Fig. 13 dargestellten Ausführungsform sämtliche zur generativen Herstellung und Entnahme der Produkte aus dem generativen Herstellungsprozess erforderlichen Fertigungsabschnitte innerhalb einer Prozesskammer 3030 angeordnet, die unter kontrollierter Atmosphäre, insbesondere einer Inertgas- oder Aktivgasatmosphäre gehalten werden kann.

Wie zu erkennen ist, ist innerhalb der Prozesskammer 3030 ein Fertigungsprozess angeordnet, dessen prinzipielle Systematik dem Fertigungsprozess gemäß Fig. 9 entspricht. Es ist aber zu verstehen, dass in gleicher Weise die in Fig. 13 dargestellte Fertigungsanordnung solcherart ausgestaltet sein kann, dass ein Fertigungsprozess gemäß Fig. 11 oder Fig. 12 in der Prozesskammer stattfindet. Die Prozesskammer 3030 weist eine erste Schleuse 3040 auf, durch welche neue, unbeschichtete und nicht mit Produkten bestückte Substratplatten eingeschleust werden können und auf einem Endlosförderband befestigt werden können. Um diesen Vorgang manuell vornehmen zu können, ist ein Arbeitshandschuh 3050 gasdicht in einem solchen Bereich angeordnet, der eine Aufnahme von Substratplatten aus der Schleuse 3040 und deren Befestigung auf dem Endlosförderband ermöglicht.

Des Weiteren ist an der Prozesskammer 3030 eine zweite Schleuse 3060 angeordnet. Durch die Schleuse 3060 können Substratplatten mit darauf angeordneten, fertig gestellten Produkten aus der Prozesskammer 3030 ausgeschleust werden. Um diesen Vorgang manuell durchführen zu können, ist wiederum im Bereich der Schleuse 3060 ein Handschuh angeordnet, mittels dem in die Prozesskammer 3030 hineingegriffen werden kann, die Substratplattensegmente mitsamt darauf angeordneter Produkte von dem Endlosförderband abgelöst werden können und durch die Schleuse 3060 aus der Prozesskammer 3030 ausgeschleust werden können.

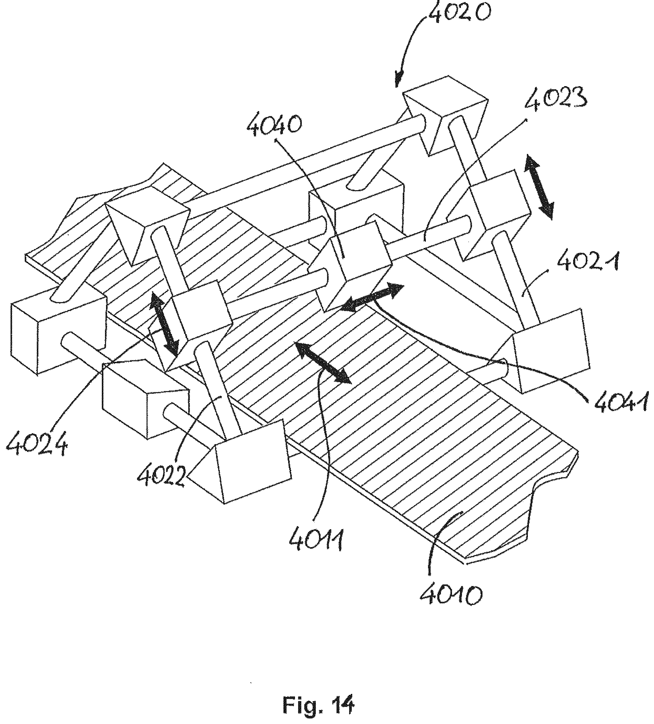

Bei der in Figur 14 gezeigten weiteren Ausführungsform ist die Substratplatte 4010 als Endlosförderband ausgebildet und läuft durch in einer Richtung 4011 durch ein Rahmengestell 4020 hindurch. Das Rahmengestell 4020 ist als im Querschnitt dreieckiger Profilaufbau ausgebildet, dessen Basisfläche parallel zu der Oberfläche des Endlosförderbandes angeordnet ist.

An zwei zu dieser Basisfläche geneigt angeordneten Rahmenstreben 4021, 4022 ist eine Führungsstange 4023 entlang einer Richtung 4024 verschieblich gelagert. Die Führungsstange überstreicht bei Verschiebung entlang der Rahmenstreben 4021, 4022 eine Fläche, die schräg geneigt zu der Oberfläche des Endlosförderbandes 4010 verläuft, auf dem die Produkte generativ aufgebaut werden. Vorzugsweise kann die Neigung dieser Fläche eingestellt werden, um hierdurch eine Anpassung an verschiedene Materialien und Produktformen vorzunehmen. So ist es für die zeiteffiziente Herstellung langer Bauteile vorteilhaft, diese in ihrer Längserstreckung parallel zur Substratplatte anzuordnen und einen kleinen Neigungswinkel einzustellen, wohingegen es für die schnelle Herstellung mehrerer kleiner Produkte in Folge vorteilhaft ist, den Winkel groß einzustellen, um eine Fertigstellung und Entnahme eines ersten Produkts zu ermöglichen, während ein nachfolgendes Produkt noch hergestellt wird.

An der Führungsstange 4023 ist ein Druckkopf 4040 befestigt, der entlang der Führungsstange 4023 in einer Richtung 4041 verschieblich gelagert ist. Der Druckkopf 4040 ist ausgebildet, um selektiv einen Materialauftrag vorzunehmen. Hierbei wird ein Material auf bestimmte Bereiche einer Schicht aufgetragen und härtet hiernach aus. Diese Aushärtung kann - je nach Art und Beschaffenheit des aufgetragenen Materials - durch Trocknung oder chemische Aushärtung an Luft, durch Abkühlung aus einem schmelzflüssigen Zustand, durch Reaktion von zwei in dem Material enthaltenen Reagenzien oder durch andere chemische oder physikalische Vorgänge erreicht werden.

Mit der Vorrichtung gemäß Fig. 14 wird eine Anordnung zur generativen Fertigung bereitgestellt, bei welcher ein Druckkopf in einer Ebene frei beweglich ist, die schräg zu einer Substratplattenoberfläche angeordnet ist und durch die Richtungen 4024 und 4041 aufgespannt wird, Der Druckkopf stellt durch Auftragen von Material auf die Substratplattenoberfläche bzw. schräg darauf aufgebaute Schichten schichtweise ein Produkt her. Der Druckkopf ist dabei an einem Rahmengestell angeordnet, dessen Abmessungen so gewählt sind, dass die Substratplatte durch diesen Rahmen hindurchgeführt werden kann, insbesondere als ein durch das Rahmengestell hindurchlaufendes Endlosförderband ausgebildet sein kann.

Auf diese Weise wird es mit dieser Vorrichtung in einfacher Form möglich, Produkte mit einer sehr großen Länge generativ herzustellen, indem diese Produkte unter einer horizontalen Vorschubrichtung der Substratplatte aufgebaut werden. Die Produkte können unmittelbar auf der Substratplattenoberfläche aufgebaut werden, wahlweise aber auch oberhalb der Substratplattenoberfläche und können nebeneinander, hintereinander oder übereinander versetzt hergestellt werden. Dabei kann vorgesehen sein, die Produkte durch Hilfsstrukturen aneinander abzustützen, um deren Lage zu sichern und die Fertigungspräzision zu erhöhen, wobei diese Hilfsstrukturen vorzugsweise Sollbruchstellen zur späteren leichten Entfernung aufweisen können.

Die in Figur 14 gezeigte Vorrichtung eignet sich insbesondere auch dazu, um neben der Herstellung von dreidimensionalen Produkten in einem ersten Auftragsmodus in der zuvor beschriebenen Weise auch die Bedruckung von Druckträgern in einem zweiten Auftragsmodus zu realisieren. Dabei wird die Achse 4023 des Druckkopfs 4040 in eine entlang der Bewegungsrichtung 4024 fixierte Position gefahren, so dass die Achse 4023 während des Drucks feststeht. Auf dem Förderband 4010 kann ein Blatt Papier, eine Folie oder dergleichen als Druckträger in Förderrichtung 4011 gefördert werden und hierbei durch die Bewegung des Druckkopfs 4040 entlang der Achse 4023 in Kombination mit der Bewegung entlang der Förderrichtung 4011 ein zweidimensionaler Druck durch Abgabe einer Farbe oder mehrerer Farben auf das Papier/die Folie erfolgen.

Dabei ist zu verstehen, dass die in Figur 14 dargestellte Schrägstellung der Achse 4022 und entsprechende Bewegungsrichtung 4024 nicht notwendiger Weise für die Ausgestaltung der Vorrichtung zum 3D-Druck und 2D-Druck in einem ersten und zweiten Auftragsmodus erforderlich ist. Stattdessen sind andere Geometrien, insbesondere Geometrien, in denen die Achse 4022 senkrecht zum Förderband steht, ebenfalls ausführbar, ohne die Wahlmöglichkeit eines zwei- oder dreidimensionalen Drucks zur Herstellung von bedruckten Druckträgern bzw. dreidimensionalen Produkten hierdurch zu verlieren.

Die Vorrichtung nach Figur 14 eignet sich insbesondere auch dazu, um in einem dritten Auftragsmodus selektiv eingefärbte dreidimensionale Produkte mit individueller Geometrie herzustellen. Hierzu ist in dem Druckkopf 4040 sowohl ein Farbleitungskanal als auch ein Leitungskanal für ein aushärtbares Material bereitgestellt. Die Farbe kann dann entweder unmittelbar im Druckkopf 4040 dem aushärtbaren Material zugemischt werden und mit diesem gemeinsam abgegeben werden oder sie kann separat aus einer eigenen Austrittsöffnung aus dem Druckkopf 4040 auf eine bereits aufgetragene Schicht abgegeben werden.

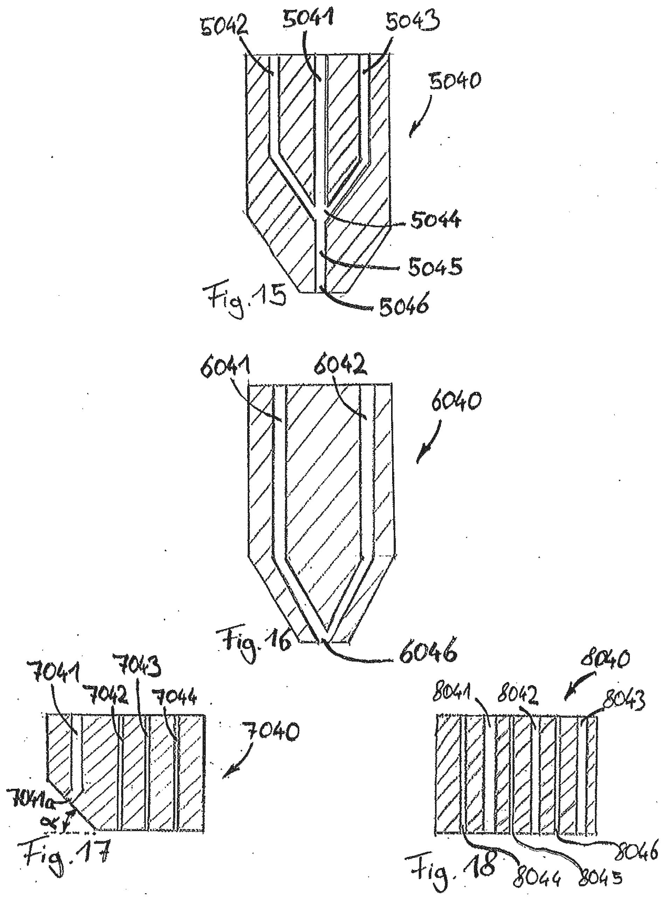

Die Figuren 15 bis 18 zeigen verschiedene Varianten von Druckköpfen im Querschnitt, die sich für die Vorrichtung/das Verfahren für einen alternativ dreidimensionalen oder zweidimensionalen Druck in zwei unterschiedlichen Auftragsmodi eignen.

In Figur 15 ist eine Variante gezeigt, bei der ein Druckkopf 5040 einen zentralen Einlasskanal 5041 für ein aushärtbares Material aufweist. Seitlich und bspw. auf einer Kreisbahn um diesen zentralen Kanal 5041 herum angeordnet sind ein oder mehr Farbeinlasskanäle 5042, 5043, in die eine Druckfarbe dosiert zugeführt werden kann. Bei diesen Druckfarben kann es sich vorzugsweise um übliche Farbzusammenstellungen zur Mischung jeglicher Farben handeln, beispielsweise eine Farbzusammenstellung nach dem RGB-Farbraum oder nach dem CMYK-Farbraum. Zusätzlich kann aus Effizienz-und Kostengründen ein Farbkanal für eine schwarze Farbe vorgesehen sein.

Die Farbkanäle 5042, 5043 münden an einem Mischpunkt 5044 in den zentralen Kanal 5041 und das dort gemischte Material verläuft von hier aus in einem gemeinsamen, zentralen Abgabekanal 5045 zu einer Austrittsdüse 5046.

Mit einem Druckkopf nach dieser Ausgestaltung kann durch entsprechende Zudosierung mit mehreren Farben und einem oder mehreren aushärtbaren Materialien mittels entsprechender Dosiereinheiten aus Farbspeichern bzw. Materialspeichern im Druckkopf selbst eine gezielte Mischung zwischen dem aushärtbaren Material und den Farben hergestellt werden, um hierdurch eine selektive Farbgebung bei individuell hergestellten dreidimensionalen Produkten zu erzielen. Durch entsprechende Ansteuerung kann weiterhin wahlweise ein ungefärbtes insbesondere farbloses dreidimensionales Produkt durch alleinige Zufuhr von aushärtbarem Material hergestellt werden oder ein reiner, zweidimensionaler Farbdruck durch alleinige Zufuhr von Farbe erzeugt werden.

Figur 16 zeigt eine andere Ausführungsform eines erfindungsgemäßen Druckkopfs 6040. Bei diesem Druckkopf sind zwei oder mehr Zufuhrkanäle 6041, 6042 vorhanden, die in eine gemeinsame Düse 6046 münden. In die Zufuhrkanäle 6041, 6042 wird durch eine in dem Druckkopf 6040 vorgeschaltete Dosier-Mischeinheit entweder ausschließlich aushärtbares Material, ausschließlich Farbe oder eine Mischung aus aushärtbarem Material und Farbe eingeführt und aus der Düse 6046 abgegeben. Der Druckkopf ermöglicht in gleicher Weise wie der zuvor erläuterte Druckkopf 5040 drei Auftragsmodi in der zuvor beschriebenen Weise und unterscheidet sich vom Druckkopf 5040 darin, dass die Zumischung in einer vom Druckkopf beabstandeten Dosier-Mischeinheit erfolgt und hierdurch einen kompakteren Aufbau des Druckkopfs ermöglicht.

In Figur 17 ist eine Ausführungsform gezeigt, welche insgesamt 4 Kanäle 7041 - 7044 in einen Druckkopf 7040 zeigt. Der Kanal 7041 ist hierbei zur Zufuhr und Abgabe von einem aushärtbaren Material für den dreidimensionalen Druck vorgesehen und mündet in eine Düse 7041a. Die Kanäle 7042 - 7044 sind zur Zuleitung und Abgabe von Farbe aus dem Druckkopf 7040 bereitgestellt und münden in entsprechende Farbabgabedüsen 7042a - 7044a. Dabei ist zu verstehen, dass diese Farbkanäle 7042 - 7044 ebenfalls innerhalb des Druckkopfs zusammengeführt werden könnten und in eine gemeinsame Abgabedüse münden könnten.

Der Materialzufuhrkanal 7041 mündet in eine Düse 7041a, die an einer Fläche 7047 des Druckkopfs 7040 angeordnet ist. Diese Fläche 7047 ist in einem Winkel α schräg geneigt zu der Fläche 7048, in welche die Farbkanäle 7042 - 7044 münden, angeordnet. Die Ausgestaltung des Druckkopfs 7040 eignet sich aufgrund dieser Formgebung insbesondere dazu, um dreidimensionale Produkte in einem kontinuierlichen Herstellungsverfahren herzustellen, bei dem die Auftragsebene schräg zu der Vorschubrichtung steht, die zwischen zwei Schichtaufträgen ausgeführt wird, insbesondere die Auftragsebene schräg zu der Substratplattenoberfläche liegt. Der Druckkopf 7040 eignet sich in gleicher Weise zur Ausführung von insgesamt drei Auftragsmodi in der zuvor beschriebenen Weise. Im Unterschied zu der Ausführungsweise mit den Druckköpfen 5040 und 6040 wird beim Druckkopf 7040 jedoch bei der Herstellung selektiv eingefärbter individueller dreidimensionaler Produkte der Farbauftrag separat auf eine bereits aufgetragene Schicht des aushärtbaren Materials durchgeführt, wobei hierbei wahlweise auf eine zuvor mittels der Auftragsdüse 7041a aufgetragene und noch nicht vollständig ausgehärtete Materialschicht aufgetragen wird, um ein Eindringen der Farbe in das aushärtbare Material vor dessen Aushärtung zu erzielen oder der Farbauftrag auf eine bereits ausgehärtete Schicht erfolgt und nachfolgend durch entsprechende Beschichtung mit einem aushärtbaren Material versiegelt wird.

In Figur 18 ist schließlich eine vierte Ausführungsform eines Druckkopfs 8040 gezeigt, bei dem eine Mehrzahl von Leitungskanälen 8041-8043 für aushärtbares Material und eine Mehrzahl von Leitungskanälen 8044-8046 für Farbe in einer parallel nebeneinander ausgeführten Anordnung bereitgestellt sind. Die Kanäle für Material und Farbe sind dabei wechselweise nebeneinander angeordnet. Mit diesem Druckkopf kann nach Art eines Matrixdrucks in schneller und effizienter Weise sowohl ein individuelles dreidimensionales Produkt als auch ein zweidimensionaler Druck auf einem Druckträger ausgeführt werden. Dabei kann der erste und zweite Auftragsmodus und ebenso der dritte Auftragsmodus ausgeführt werden, wobei durch entsprechende enge Anordnung der Düsen zueinander hier auch ein simultaner Auftrag von Farbe und aushärtbarem Material zur Herstellung selektiv eingefärbter individueller dreidimensionaler Produkte durchgeführt werden kann. In gleicher Weise eignet sich der Druckkopf 8040 aber zu einer zeitversetzten Herstellung solcher selektiver Einfärbungen an dreidimensionalen Produkten, wie dies zuvor für den Druckkopf 7040 beschrieben wurde.

Die zuvor erläuterten Druckköpfe eignen sich ebenfalls dafür, eine Mehrzahl unterschiedlicher aushärtbarer Materialien aufzutragen, beispielsweise Materialien mit unterschiedlichen mechanischen, elektrischen, chemischen Eigenschaften oder in ihren Eigenschaften übereinstimmende Materialien in unterschiedlicher Farbgebung, um daraus, beispielsweise in einem RGB-Farbraum, ein aushärtbares Material in beliebiger Farbe zu mischen.

Grundsätzlich können die zuvor erörterten Druckköpfe 5040 - 8040 anstelle des Druckkopfs 4040 in der Vorrichtung gemäß Figur 14 eingesetzt werden und sind dann entlang der Achse 4023 beweglich. Dabei können auch mehrere solche Druckköpfe entlang der Achse 4023 oder auf hierzu parallelen Achsen angeordnet sein, um eine schnelle und effiziente Fertigung zu erlauben. Die Druckköpfe können simultan und synchron ansteuerbar sein oder können individuell ansteuerbar sein, um sie unabhängig voneinander bewegen zu können.

## Patentansprüche

1. Verfahren zum Herstellen von Produkten mit individueller Geometrie, insbesondere mittels 3D Printing, Contour Crafting, Fused Deposition Modeling (FDM) oder Multi-Jet Modeling, mit den Schritten:
- Herstellen von zumindest einem Produkt an oder auf der Oberfläche einer Substratplatte (2010; 4010) mittels selektiven Aushärtens,
- Auftragen eines aushärtbaren Materials in aufeinanderfolgenden Schichten,
- Selektives Aushärten eines oder mehrerer vorbestimmter Bereiche nach jedem Schichtauftrag und hierbei Verbinden dieser Bereiche mit einem oder mehreren Bereichen der darunterliegenden Schicht,
- wobei der/die vorbestimmte(n) Bereich(e) anhand einer Querschnittsgeometrie des Produkts in der jeweiligen Schicht vorbestimmt wird/werden,
wobei
- das Material selektiv in die vorbestimmten Bereiche der Schicht aufgetragen wird und keine homogene zusammenhängende Schicht aufgetragen wird, sondern die Schicht bereits selektiv aufgetragen wird und die aufgetragenen Bereiche ausgehärtet werden, und
- jede der aufeinanderfolgenden Schichten in Schichtebenen aufgetragen werden, die schräg, nämlich unter einem spitzen Winkel (α) zwischen 0° und 90°, zu der Oberfläche der Substratplatte (2010; 4010) ausgerichtet sind.

2. Verfahren nach Anspruch 1,
**dadurch gekennzeichnet, dass**
a) die Relativbewegung zwischen Substratplatte (2010; 4010) und Materialauftragsvorrichtung (2030; 4040) teilweise oder vollständig mittels einer Fördereinrichtung erzielt wird, die entlang zumindest einer Achse eine Förderbewegung ausführt und um drei Achsen verschwenkbar ausgeführt ist, oder
b) die Substratplatte zwischen zwei aufeinanderfolgenden Schichtauftragsvorgängen mit einer Richtungskomponente senkrecht zur Ebene, in der die Schicht aufgetragen wird, verfahren wird, indem die Substratplatte in einer Richtung (2011; 4011) parallel zur Oberfläche der Substratplatte bewegt wird, oder
c) das Material aus einer Materialauftragsvorrichtung (2030; 4040) aufgetragen wird, die an einem Rahmengestell angeordnet ist, das solcherart auf einer Oberfläche angeordnet ist, dass eine Bewegung des Rahmengestells in einer Achse relativ zur Oberfläche ausgeführt wird.

3. Verfahren nach einem der vorhergehenden Ansprüche,
**dadurch gekennzeichnet, dass** das Aushärten durch
- schmelzflüssigen Auftrag des Materials mit nachfolgender Erstarrung,
- chemische Reaktion des Materials mit der Umgebung,
- chemische Reaktion von zwei oder mehr gleichzeitig oder zeitversetzt aufgetragenen Materialkomponenten miteinander, oder
- chemische oder physikalische Reaktion des Materials infolge einer Strahlungseinwirkung, wie beispielsweise einer Photopolymerisation
erfolgt.

4. Verfahren nach einem der vorhergehenden Ansprüche,
**dadurch gekennzeichnet, dass** die Oberfläche der Substratplatte in eine erste Oberfläche eines ersten Substratplattensegments und zumindest eine weitere Oberfläche eines weiteren Substratplattensegments unterteilt ist.

5. Verfahren nach einem der vorhergehenden Ansprüche,
**dadurch gekennzeichnet, dass** die Substratplatte in zwei oder mehrere benachbarte Substratplattensegmente unterteilt ist, wobei unter einem Substratplattensegment ein physikalisch separates Bauteil verstanden wird und sich die Substratplatte durch mehrere aneinander gefügte Substratplattensegmente zusammensetzt, wobei vorzugsweise die Substratplattensegmente lösbar miteinander oder lösbar mit einem Grundträger verbunden sind.
wobei vorzugsweise die Substratplattensegmente in dem Fertigungsabschnitt, in dem die Schichten aufgetragen werden, so nebeneinander bereitgestellt werden, dass zwischen den Substratplattensegmenten kein Material hindurchtreten kann.

6. Verfahren nach einem der vorhergehenden Ansprüche 4-5,
**dadurch gekennzeichnet, dass** mit einer einzigen Materialauftragsvorrichtung Schichten über mehrere Substratplattensegmente hinweg in einem Arbeitsgang aufgetragen werden, und/oder
dass ein einziges Produkt auf mehreren Substratplattensegmenten hergestellt wird,
wobei vorzugsweise ein Produkt hergestellt wird, dessen Länge über mehrere Substratplattensegmente reicht.

7. Verfahren nach einem der vorhergehenden Ansprüche,
**dadurch gekennzeichnet, dass** vor jedem Materialauftrag die ausgehärteten Bereiche der zuvor aufgetragenen Schicht oberflächlich beschliffen werden.

8. Verfahren Anspruch 2, ausgebildet nach Variante c),
**dadurch gekennzeichnet, dass** die Bewegung zwischen der Materialauftragsvorrichtung und der Oberfläche durch eine Kombination einer Bewegung der Materialauftragsvorrichtung relativ zum Rahmengestell in einer oder mehreren Achsen und einer Bewegung des Rahmengestells zur Oberfläche in der einen Achse ausgeführt wird.

9. Verfahren nach Anspruch 2, ausgebildet nach Variante b)
**dadurch gekennzeichnet, dass** die Substratplatte als Endlosfördervorrichtung, insbesondere als Endlosförderband, ausgebildet ist,
wobei vorzugsweise das Endlosförderband in einer Richtung (4011) durch ein Rahmengestell (4020) hindurch läuft, wobei das Rahmengestell (4020) vorzugsweise als im Querschnitt dreieckiger Profilaufbau ausgebildet ist, dessen Basisfläche parallel zu der Oberflache des Endlosförderbandes angeordnet ist.

10. Verfahren nach Anspruch 9,
**dadurch gekennzeichnet, dass** an zwei, vorzugsweise zu dieser Basisfläche geneigt angeordneten, Rahmenstreben (4021, 4022) eine Führungsstange (4023) entlang einer Richtung (4024) verschieblich gelagert ist, wobei die Führungsstange bei Verschiebung entlang der Rahmenstreben (4021, 4022) eine Fläche überstreicht, die schräg geneigt zu der Oberfläche des Endlosförderbandes (4010) verläuft, auf dem Produkte generativ aufgebaut werden können,
wobei die Neigung dieser Fläche vorzugsweise eingestellt werden kann,
wobei an der Führungsstange (4023) vorzugsweise ein Druckkopf (4040) der Materialauftragsvorrichtung befestigt ist, der entlang der Führungsstange (4023) in einer Richtung (4041) verschieblich gelagert ist, wobei der Druckkopf (4040) ausgebildet ist, um selektiv einen Materialauftrag vorzunehmen.

11. Verfahren nach einem der vorhergehenden Ansprüche,
**dadurch gekennzeichnet, dass** die Materialauftragsvorrichtung das Material aus einer Materialquelle bezieht, eine geeignete Abgabeform für das Material erzeugt und dann das Material in Form von Streifen oder Raupen abgibt.

12. Verfahren nach einem der vorhergehenden Ansprüche,
**dadurch gekennzeichnet, dass** die aufeinanderfolgenden Schichten parallel zueinander aufgetragen werden.

13. Verfahren nach einem der vorhergehenden Ansprüche,
**dadurch gekennzeichnet, dass**
- die Schichten des aushärtbaren Materials nicht solcherart aufgetragen werden, dass die Schichtebene parallel zu der Oberfläche der Substratplatte ausgerichtet ist, sondern stattdessen so aufgetragen werden, dass die Schichtebene schräg, nämlich unter einem Winkel größer 0° und kleiner 90° zu der Oberfläche der Substratplatte ausgerichtet ist, wobei sich die Dicke des aufgetragenen Materialbettes ausgehend von einem Bereich, in dem genau eine Schichtdicke auf der Substratplatte aufliegt, kontinuierlich bis in einen Bereich, in dem die maximal aufgetragenen Schichten oberhalb der Substratplatte aufgelegt sind, vergrößert, und/oder
- der spitze Winkel eine Untergrenze von 10° und eine Obergrenze von 80°, vorzugsweise eine Untergrenze von 30° und eine Obergrenze von 60° aufweist, und/oder
- die Schichten des aushärtbaren Materials so aufgetragen werden, dass die insgesamt oberhalb eines Ortes der Substratplatte angeordnete Materialbettdicke nicht an jeder Stelle gleich ist, sondern unterschiedlich ist, nämlich sich die Dicke des aufgetragenen Materialbettes ausgehend von einem Bereich, in dem genau eine Schichtdicke auf der Substratplatte aufliegt, kontinuierlich bis in einen Bereich, in dem die maximal aufgetragenen Schichten oberhalb der Substratplatte aufgelegt sind, vergrößert, und/oder
- die Oberfläche der Substratplatte in dem Bereich, in dem die Schichten aufgetragen werden, horizontal in Bezug auf die Schwerkraftrichtung verläuft.

14. Vorrichtung zur Herstellung von Produkten mit individueller Geometrie, insbesondere mittels 3D Printing, Contour Crafting, Fused Deposition Modeling (FDM) oder Multi-Jet Modeling, umfassend
- eine Substratplatte (2010; 4010),
- eine relativ zur Substratplatte verfahrbare Materialauftragsvorrichtung (2030; 4040) zum Auftragen von Material auf die Substratplatte, vorzugsweise oberhalb der Substratplatte,
- eine Steuerungsvorrichtung, welche signaltechnisch mit der Materialauftragsvorrichtung und/oder einer Fördervorrichtung zur Förderung der Substratplatte gekoppelt ist,
- wobei die Steuerungsvorrichtung ausgebildet ist, um die Materialauftragsvorrichtung solcherart anzusteuern, dass sie das Material selektiv auf vorbestimmte Bereiche abgibt, welche dem Querschnitt eines Produkts in der jeweiligen Schicht entsprechen, und um keine homogene zusammenhängende Schicht aufzutragen, sondern die Schicht bereits selektiv aufzutragen und die aufgetragenen Bereiche ausgehärtet werden,
**dadurch gekennzeichnet, dass**
- die Materialauftragsvorrichtung (2030; 4040) ausgebildet ist, um das Material in einer Ebene aufzutragen, die schräg, nämlich unter einem spitzen Winkel (α) zwischen 0° und 90°, zu der Oberfläche der Substratplatte (2010; 4010) ausgerichtet ist, auf welche das Material aufgetragen wird, und dass
a) eine Fördereinrichtung vorgesehen ist, welche die Relativbewegung zwischen Substratplatte und Materialauftragsvorrichtung teilweise oder vollständig erzielt und die entlang zumindest einer Achse eine Förderbewegung ausführt und um drei Achsen verschwenkbar ausgeführt ist, oder
b) die Substratplatte ausgebildet ist, um zwischen zwei aufeinanderfolgenden Schichtauftragsvorgängen mit einer Richtungskomponente senkrecht zur Ebene, in der die Schicht aufgetragen wird, verfahren zu werden, indem die Substratplatte in einer Richtung parallel zur Oberfläche der Substratplatte bewegt wird, oder
c) die Materialauftragsvorrichtung an einem Rahmengestell angeordnet ist, das solcherart auf einer Oberfläche angeordnet ist, dass eine Bewegung des Rahmengestells in einer Achse relativ zur Oberfläche ausgeführt wird.

15. Vorrichtung nach Anspruch 14,
**dadurch gekennzeichnet, dass**
- die Materialauftragsvorrichtung (2030; 4040) ausgebildet ist, um ein Material aufzutragen, bei dem das Aushärten durch schmelzflüssigen Auftrag des Materials mit nachfolgender Erstarrung erfolgt, und/oder
- die Substratplatte in zwei oder mehrere benachbarte Substratplattensegmente unterteilt ist, wobei unter einem Substratplattensegment ein physikalisch separates Bauteil verstanden wird und sich die Substratplatte durch mehrere aneinander gefügte Substratplattensegmente zusammensetzt, wobei vorzugsweise die Substratplattensegmente lösbar miteinander oder lösbar mit einem Grundträger verbunden sind, und hierbei vorzugsweise die Materialauftragsvorrichtung ausgebildet ist, um Schichten über mehrere Substratplattensegmente hinweg in einem Arbeitsgang aufzutragen, und/oder
- die Bewegung zwischen der Materialauftragsvorrichtung und der Oberfläche nach Variante c) durch eine Kombination einer Bewegung der Materialauftragsvorrichtung relativ zum Rahmengestell in einer oder mehreren Achsen und einer Bewegung des Rahmengestells zur Oberfläche in der einen Achse ausgeführt wird, und/oder
- die Substratplatte der Variante b) als Endlosfördervorrichtung, insbesondere als Endlosförderband, ausgebildet ist, wobei vorzugsweise das Endlosförderband in einer Richtung (4011) durch ein Rahmengestell (4020) hindurch läuft, wobei das Rahmengestell (4020) vorzugsweise als im Querschnitt dreieckiger Profilaufbau ausgebildet ist, dessen Basisfläche parallel zu der Oberflache des Endlosförderbandes angeordnet ist, und/oder
- an zwei, vorzugsweise zu dieser Basisfläche geneigt angeordneten, Rahmenstreben (4021, 4022) eine Führungsstange (4023) entlang einer Richtung (4024) verschieblich gelagert ist, wobei die Führungsstange bei Verschiebung entlang der Rahmenstreben (4021, 4022) eine Fläche überstreicht, die schräg geneigt zu der Oberfläche des Endlosförderbandes (4010) verläuft, auf dem Produkte generativ aufgebaut werden können, wobei die Neigung dieser Fläche vorzugsweise eingestellt werden kann, wobei an der Führungsstange (4023) vorzugsweise ein Druckkopf (4040) der Materialauftragsvorrichtung befestigt ist, der entlang der Führungsstange (4023) in einer Richtung (4041) verschieblich gelagert ist, wobei der Druckkopf (4040) ausgebildet ist, um selektiv einen Materialauftrag vorzunehmen, und/oder
- die Materialauftragsvorrichtung das Material aus einer Materialquelle bezieht und ausgebildet ist, um eine geeignete Abgabeform für das Material zu erzeugen und dann das Material in Form von Streifen oder Raupen abzugeben, und/oder
- die Steuerungsvorrichtung ausgebildet ist, um keine Schichten des aushärtbaren Materials solcherart aufzutragen, dass die Schichtebene parallel zu der Oberfläche der Substratplatte ausgerichtet ist, sondern stattdessen so aufzutragen, dass die Schichtebene schräg, nämlich unter einem Winkel größer 0° und kleiner 90° zu der Oberfläche der Substratplatte ausgerichtet ist, wobei sich die Dicke des aufgetragenen Materialbettes ausgehend von einem Bereich, in dem genau eine Schichtdicke auf der Substratplatte aufliegt, kontinuierlich bis in einen Bereich, in dem die maximal aufgetragenen Schichten oberhalb der Substratplatte aufgelegt sind, vergrößert, und/oder
- die Oberfläche der Substratplatte in dem Bereich, in dem die Schichten aufgetragen werden, horizontal in Bezug auf die Schwerkraftrichtung verläuft.

16. Verwendung einer Vorrichtung nach Anspruch 14 oder 15 in solcher Weise, dass die aufeinanderfolgenden Schichten in Schichtebenen aufgetragen werden, die schräg zu der Oberfläche der Substratplatte ausgerichtet sind.

17. Verwendung nach Anspruch 16, wobei
a) die Relativbewegung zwischen Substratplatte und Materialauftragsvorrichtung mittels einer Fördereinrichtung teilweise oder vollständig erzielt wird, die entlang zumindest einer Achse eine Förderbewegung ausführt und um drei Achsen verschwenkbar ausgeführt ist, oder
b) die Substratplatte zwischen zwei aufeinanderfolgenden Schichtauftragsvorgängen mit einer Richtungskomponente senkrecht zur Ebene, in der die Schicht aufgetragen wird, verfahren wird, indem die Substratplatte in einer Richtung parallel zur Oberfläche der Substratplatte bewegt wird, oder
c) das Material aus einer Materialauftragsvorrichtung aufgetragen wird, die an einem Rahmengestell angeordnet ist, das solcherart auf einer Oberfläche angeordnet ist, dass eine Bewegung des Rahmengestells in einer Achse relativ zur Oberfläche ausgeführt wird.

## Claims

1. Method for manufacturing products having individual geometry, in particular by means of 3D printing, contour crafting, fused deposition modeling (FDM) or multi-jet modeling, comprising the steps:
- manufacturing at least one product at or on the surface of a substrate plate (2010; 4010) by means of selective curing,
- applying a curable material in successive layers,
- selectively curing one or more predetermined areas after each layer application and thereby connecting these areas with one or more areas of the underlying layer,
- wherein the predetermined area(s) is/are predetermined based on a cross-sectional geometry of the product in the respective layer,
wherein
- the material is applied selectively to the predetermined areas of the layer and no homogeneous continuous layer is applied, but the layer is already applied selectively and the applied areas are cured, and
- each of the successive layers is applied in layer planes which are obliquely, namely at an acute angle $(\alpha)$ between 0∘0^\circ0∘ and 90∘90^\circ90∘, oriented to the surface of the substrate plate (2010; 4010).

2. Method according to claim 1,
**characterized in that**
a) the relative movement between the substrate plate (2010; 4010) and the material application device (2030; 4040) is achieved partially or completely by means of a conveying device which performs a conveying movement along at least one axis and is designed to be pivotable about three axes, or
b) the substrate plate is moved between two successive layer application processes with a directional component perpendicular to the plane in which the layer is applied, by moving the substrate plate in a direction (2011; 4011) parallel to the surface of the substrate plate, or
c) the material is applied from a material application device (2030; 4040) which is arranged on a frame that is arranged on a surface in such a way that a movement of the frame is performed in one axis relative to the surface.

3. Method according to one of the preceding claims, **characterized in that** the curing is effected by
- molten application of the material with subsequent solidification,
- chemical reaction of the material with the environment,
- chemical reaction of two or more material components applied simultaneously or at different times with each other, or
- chemical or physical reaction of the material as a result of irradiation, such as photopolymerization.

4. Method according to one of the preceding claims,
**characterized in that** the surface of the substrate plate is divided into a first surface of a first substrate plate segment and at least one further surface of another substrate plate segment.

5. Method according to one of the preceding claims,
**characterized in that** the substrate plate is divided into two or more adjacent substrate plate segments, wherein a substrate plate segment is understood to be a physically separate component and the substrate plate is composed of several substrate plate segments joined together, wherein preferably the substrate plate segments are detachably connected to each other or detachably connected to a base support.
wherein preferably the substrate plate segments are provided side by side in the manufacturing section in which the layers are applied, so that no material can pass between the substrate plate segments.

6. Method according to one of the preceding claims 4-5,
**characterized in that** layers are applied across several substrate plate segments in one operation with a single material application device, and/or that a single product is manufactured on several substrate plate segments, wherein preferably a product is manufactured whose length extends across several substrate plate segments.

7. Method according to one of the preceding claims,
**characterized in that** before each material application the cured areas of the previously applied layer are ground on the surface.

8. Method according to claim 2, designed according to variant c),
**characterized in that** the movement between the material application device and the surface is performed by a combination of a movement of the material application device relative to the frame in one or more axes and a movement of the frame to the surface in the one axis.

9. Method according to claim 2, designed according to variant b),
**characterized in that** the substrate plate is designed as an endless conveying device, in particular as an endless conveyor belt,
wherein preferably the endless conveyor belt runs in a direction (4011) through a frame (4020), wherein the frame (4020) is preferably designed as a triangular profile structure in cross-section, whose base surface is arranged parallel to the surface of the endless conveyor belt.

10. Method according to claim 9,
**characterized in that** on two, preferably arranged inclined to this base surface, frame struts (4021, 4022) a guide rod (4023) is mounted so as to be displaceable along a direction (4024), wherein the guide rod, when displaced along the frame struts (4021, 4022), sweeps a surface which is inclined to the surface of the endless conveyor belt (4010), on which products can be built up generatively,
wherein the inclination of this surface can preferably be adjusted,
wherein a print head (4040) of the material application device is preferably attached to the guide rod (4023), which is mounted so as to be displaceable along the guide rod (4023) in a direction (4041), wherein the print head (4040) is designed to selectively perform a material application.

11. Method according to one of the preceding claims,
**characterized in that** the material application device obtains the material from a material source, generates a suitable dispensing form for the material and then dispenses the material in the form of strips or beads.

12. Method according to one of the preceding claims,
**characterized in that** the successive layers are applied parallel to each other.

13. Method according to one of the preceding claims,
**characterized in that**
- the layers of the curable material are not applied such that the layer plane is oriented parallel to the surface of the substrate plate, but instead are applied such that the layer plane is oriented obliquely, namely at an angle greater than 0° and less than 90° to the surface of the substrate plate, wherein the thickness of the applied material bed increases continuously from an area in which exactly one layer thickness lies on the substrate plate to an area in which the maximum applied layers are placed above the substrate plate, and/or
- the acute angle has a lower limit of 10° and an upper limit of 80°, preferably a lower limit of 30° and an upper limit of 60°, and/or
- the layers of the curable material are applied such that the overall material bed thickness arranged above a location of the substrate plate is not the same at every point, but is different, namely the thickness of the applied material bed increases continuously from an area in which exactly one layer thickness lies on the substrate plate to an area in which the maximum applied layers are placed above the substrate plate, and/or
- the surface of the substrate plate in the area in which the layers are applied runs horizontally with respect to the direction of gravity.

14. Device for manufacturing products having individual geometry, in particular by means of 3D printing, contour crafting, fused deposition modeling (FDM) or multi-jet modeling, comprising
- a substrate plate (2010; 4010),
- a material application device (2030; 4040) movable relative to the substrate plate for applying material to the substrate plate, preferably above the substrate plate,
- a control device which is signal-technically coupled to the material application device and/or a conveying device for conveying the substrate plate,
- wherein the control device is configured to control the material application device such that it selectively dispenses the material onto predetermined areas corresponding to the cross-section of a product in the respective layer, and to not apply a homogeneous continuous layer, but to already apply the layer selectively and to cure the applied areas,
**characterized in that**
- the material application device (2030; 4040) is designed to apply the material in a plane which is obliquely, namely at an acute angle (α) between 0° and 90°, oriented to the surface of the substrate plate (2010; 4010) onto which the material is applied, and that
a) a conveying device is provided which achieves the relative movement between the substrate plate and the material application device partially or completely and which performs a conveying movement along at least one axis and is designed to be pivotable about three axes, or
b) the substrate plate is designed to be moved between two successive layer application processes with a directional component perpendicular to the plane in which the layer is applied, by moving the substrate plate in a direction parallel to the surface of the substrate plate, or
c) the material application device is arranged on a frame that is arranged on a surface in such a way that a movement of the frame is performed in one axis relative to the surface.

15. Device according to claim 14,
**characterized in that**
- the material application device (2030; 4040) is designed to apply a material in which the curing is effected by molten application of the material with subsequent solidification, and/or
- the substrate plate is divided into two or more adjacent substrate plate segments, wherein a substrate plate segment is understood to be a physically separate component and the substrate plate is composed of several substrate plate segments joined together, wherein preferably the substrate plate segments are detachably connected to each other or detachably connected to a base support, and wherein preferably the material application device is designed to apply layers across several substrate plate segments in one operation, and/or
- the movement between the material application device and the surface according to variant c) is performed by a combination of a movement of the material application device relative to the frame in one or more axes and a movement of the frame to the surface in the one axis, and/or
- the substrate plate according to variant b) is designed as an endless conveying device, in particular as an endless conveyor belt, wherein preferably the endless conveyor belt runs in a direction (4011) through a frame (4020), wherein the frame (4020) is preferably designed as a triangular profile structure in cross-section, whose base surface is arranged parallel to the surface of the endless conveyor belt, and/or
- on two, preferably arranged inclined to this base surface, frame struts (4021, 4022) a guide rod (4023) is mounted so as to be displaceable along a direction (4024), wherein the guide rod, when displaced along the frame struts (4021, 4022), sweeps a surface which is inclined to the surface of the endless conveyor belt (4010), on which products can be built up generatively, wherein the inclination of this surface can preferably be adjusted, wherein a print head (4040) of the material application device is preferably attached to the guide rod (4023), which is mounted so as to be displaceable along the guide rod (4023) in a direction (4041), wherein the print head (4040) is designed to selectively perform a material application, and/or
- the material application device obtains the material from a material source and is designed to generate a suitable dispensing form for the material and then dispense the material in the form of strips or beads, and/or
- the control device is configured not to apply layers of the curable material such that the layer plane is oriented parallel to the surface of the substrate plate, but instead to apply the layer such that the layer plane is oriented obliquely, namely at an angle greater than 0° and less than 90° to the surface of the substrate plate, wherein the thickness of the applied material bed increases continuously from an area in which exactly one layer thickness lies on the substrate plate to an area in which the maximum applied layers are placed above the substrate plate, and/or
- the surface of the substrate plate in the area in which the layers are applied runs horizontally with respect to the direction of gravity.

16. Use of a device according to claim 14 or 15 in such a way that the successive layers are applied in layer planes which are obliquely oriented to the surface of the substrate plate.

17. Use according to claim 16, wherein
a) the relative movement between the substrate plate and the material application device is achieved partially or completely by means of a conveying device which performs a conveying movement along at least one axis and is designed to be pivotable about three axes, or
b) the substrate plate is moved between two successive layer application processes with a directional component perpendicular to the plane in which the layer is applied, by moving the substrate plate in a direction parallel to the surface of the substrate plate, or
c) the material is applied from a material application device which is arranged on a frame that is arranged on a surface in such a way that a movement of the frame is performed in one axis relative to the surface.

## Revendications

1. Procédé de fabrication de produits avec une géométrie individuelle, en particulier au moyen de l'impression 3D, du contour crafting, du fused deposition modeling (FDM) ou du multi-jet modeling, comprenant les étapes :
- fabrication d'au moins un produit sur ou à la surface d'une plaque de substrat (2010 ; 4010) par durcissement sélectif,
- application d'un matériau durcissable en couches successives,
- durcissement sélectif d'une ou plusieurs zones prédéterminées après chaque application de couche et connexion de ces zones avec une ou plusieurs zones de la couche sous-jacente,
- la ou les zones prédéterminées étant déterminées sur la base d'une géométrie de section transversale du produit dans la couche respective,
dans lequel
- le matériau est appliqué sélectivement sur les zones prédéterminées de la couche et aucune couche homogène continue n'est appliquée, mais la couche est déjà appliquée de manière sélective et les zones appliquées sont durcies, et
- chacune des couches successives est appliquée dans des plans de couche qui sont inclinés, à savoir sous un angle aigu $(\alpha)$ entre 0∘0^\circ0∘ et 90∘90^\circ90∘, par rapport à la surface de la plaque de substrat (2010 ; 4010).

2. Procédé selon la revendication 1,
**caractérisé en ce que**
a) le mouvement relatif entre la plaque de substrat (2010 ; 4010) et le dispositif d'application de matériau (2030 ; 4040) est réalisé partiellement ou totalement au moyen d'un dispositif de transport qui effectue un mouvement de transport le long d'au moins un axe et est conçu pour être pivotant autour de trois axes, ou
b) la plaque de substrat est déplacée entre deux processus successifs d'application de couche avec une composante de direction perpendiculaire au plan dans lequel la couche est appliquée, en déplaçant la plaque de substrat dans une direction (2011 ; 4011) parallèle à la surface de la plaque de substrat, ou
c) le matériau est appliqué à partir d'un dispositif d'application de matériau (2030 ; 4040) qui est disposé sur un cadre qui est disposé sur une surface de telle manière qu'un mouvement du cadre est effectué dans un axe par rapport à la surface.

3. Procédé selon l'une des revendications précédentes, **caractérisé en ce que** le durcissement est réalisé par
- application en fusion du matériau avec solidification ultérieure,
- réaction chimique du matériau avec l'environnement,
- réaction chimique de deux ou plusieurs composants de matériau appliqués simultanément ou à des moments différents entre eux, ou
- réaction chimique ou physique du matériau à la suite d'une exposition à un rayonnement, telle qu'une photopolymérisation.

4. Procédé selon l'une des revendications précédentes,
**caractérisé en ce que** la surface de la plaque de substrat est divisée en une première surface d'un premier segment de plaque de substrat et au moins une autre surface d'un autre segment de plaque de substrat.

5. Procédé selon l'une des revendications précédentes,
**caractérisé en ce que** la plaque de substrat est divisée en deux ou plusieurs segments de plaque de substrat adjacents, un segment de plaque de substrat étant compris comme un composant physiquement séparé et la plaque de substrat étant composée de plusieurs segments de plaque de substrat assemblés, les segments de plaque de substrat étant de préférence reliés de manière détachable entre eux ou de manière détachable à un support de base.
les segments de plaque de substrat étant de préférence disposés côte à côte dans la section de fabrication dans laquelle les couches sont appliquées, de sorte qu'aucun matériau ne puisse passer entre les segments de plaque de substrat.

6. Procédé selon l'une des revendications 4-5,
**caractérisé en ce que** des couches sont appliquées sur plusieurs segments de plaque de substrat en un seul cycle de travail avec un seul dispositif d'application de matériau, et/ou
qu'un seul produit est fabriqué sur plusieurs segments de plaque de substrat, un produit étant de préférence fabriqué dont la longueur s'étend sur plusieurs segments de plaque de substrat.

7. Procédé selon l'une des revendications précédentes,
**caractérisé en ce qu'**avant chaque application de matériau, les zones durcies de la couche précédemment appliquée sont meulées en surface.

8. Procédé selon la revendication 2, réalisé selon la variante c),
**caractérisé en ce que** le mouvement entre le dispositif d'application de matériau et la surface est réalisé par une combinaison d'un mouvement du dispositif d'application de matériau par rapport au cadre dans un ou plusieurs axes et d'un mouvement du cadre vers la surface dans l'un des axes.

9. Procédé selon la revendication 2, réalisé selon la variante b),
**caractérisé en ce que** la plaque de substrat est conçue comme un dispositif de transport sans fin, en particulier comme une bande de transport sans fin,
la bande de transport sans fin passant de préférence dans une direction (4011) à travers un cadre (4020), le cadre (4020) étant de préférence conçu comme une structure de profil triangulaire en section transversale, dont la surface de base est disposée parallèlement à la surface de la bande de transport sans fin.

10. Procédé selon la revendication 9,
**caractérisé en ce que** sur deux, de préférence disposées inclinées par rapport à cette surface de base, barres de cadre (4021, 4022), une tige de guidage (4023) est montée de manière à pouvoir être déplacée le long d'une direction (4024), la tige de guidage, lorsqu'elle est déplacée le long des barres de cadre (4021, 4022), balayant une surface qui est inclinée par rapport à la surface de la bande de transport sans fin (4010), sur laquelle des produits peuvent être construits de manière générative,
l'inclinaison de cette surface pouvant de préférence être réglée,
une tête d'impression (4040) du dispositif d'application de matériau étant de préférence fixée à la tige de guidage (4023), celle-ci étant montée de manière à pouvoir être déplacée le long de la tige de guidage (4023) dans une direction (4041), la tête d'impression (4040) étant conçue pour effectuer sélectivement une application de matériau.

11. Procédé selon l'une des revendications précédentes,
**caractérisé en ce que** le dispositif d'application de matériau obtient le matériau à partir d'une source de matériau, génère une forme de distribution appropriée pour le matériau et distribue ensuite le matériau sous forme de bandes ou de cordons.

12. Procédé selon l'une des revendications précédentes,
**caractérisé en ce que** les couches successives sont appliquées parallèlement les unes aux autres.

13. Procédé selon l'une des revendications précédentes,
**caractérisé en ce que**
- les couches du matériau durcissable ne sont pas appliquées de telle sorte que le plan de couche soit orienté parallèlement à la surface de la plaque de substrat, mais sont appliquées de telle sorte que le plan de couche soit orienté de manière inclinée, à savoir sous un angle supérieur à 0° et inférieur à 90° par rapport à la surface de la plaque de substrat, l'épaisseur du lit de matériau appliqué augmentant continuellement à partir d'une zone dans laquelle exactement une épaisseur de couche repose sur la plaque de substrat jusqu'à une zone dans laquelle les couches appliquées au maximum sont disposées au-dessus de la plaque de substrat, et/ou
- l'angle aigu présente une limite inférieure de 10° et une limite supérieure de 80°, de préférence une limite inférieure de 30° et une limite supérieure de 60°, et/ou
- les couches du matériau durcissable sont appliquées de telle sorte que l'épaisseur totale du lit de matériau disposée au-dessus d'un endroit de la plaque de substrat n'est pas la même en chaque point, mais est différente, à savoir l'épaisseur du lit de matériau appliqué augmentant continuellement à partir d'une zone dans laquelle exactement une épaisseur de couche repose sur la plaque de substrat jusqu'à une zone dans laquelle les couches appliquées au maximum sont disposées au-dessus de la plaque de substrat, et/ou
- la surface de la plaque de substrat dans la zone dans laquelle les couches sont appliquées est horizontale par rapport à la direction de la gravité.

14. Dispositif de fabrication de produits avec une géométrie individuelle, en particulier au moyen de l'impression 3D, du contour crafting, du fused deposition modeling (FDM) ou du multi-jet modeling, comprenant
- une plaque de substrat (2010 ; 4010),
- un dispositif d'application de matériau (2030 ; 4040) mobile par rapport à la plaque de substrat pour l'application de matériau sur la plaque de substrat, de préférence au-dessus de la plaque de substrat,
- un dispositif de commande qui est couplé en signal au dispositif d'application de matériau et/ou à un dispositif de transport pour le transport de la plaque de substrat,
- le dispositif de commande étant conçu pour commander le dispositif d'application de matériau de telle manière qu'il distribue sélectivement le matériau sur des zones prédéterminées correspondant à la section transversale d'un produit dans la couche respective, et pour ne pas appliquer une couche homogène continue, mais pour appliquer déjà la couche de manière sélective et durcir les zones appliquées,
**caractérisé en ce que**
- le dispositif d'application de matériau (2030 ; 4040) est conçu pour appliquer le matériau dans un plan qui est incliné, à savoir sous un angle aigu (α) entre 0° et 90°, par rapport à la surface de la plaque de substrat (2010 ; 4010) sur laquelle le matériau est appliqué, et que
a) un dispositif de transport est prévu qui réalise le mouvement relatif entre la plaque de substrat et le dispositif d'application de matériau partiellement ou totalement et qui effectue un mouvement de transport le long d'au moins un axe et est conçu pour être pivotant autour de trois axes, ou
b) la plaque de substrat est conçue pour être déplacée entre deux processus successifs d'application de couche avec une composante de direction perpendiculaire au plan dans lequel la couche est appliquée, en déplaçant la plaque de substrat dans une direction parallèle à la surface de la plaque de substrat, ou
c) le dispositif d'application de matériau est disposé sur un cadre qui est disposé sur une surface de telle manière qu'un mouvement du cadre est effectué dans un axe par rapport à la surface.

15. Dispositif selon la revendication 14,
**caractérisé en ce que**
- le dispositif d'application de matériau (2030 ; 4040) est conçu pour appliquer un matériau dans lequel le durcissement est réalisé par application en fusion du matériau avec solidification ultérieure, et/ou
- la plaque de substrat est divisée en deux ou plusieurs segments de plaque de substrat adjacents, un segment de plaque de substrat étant compris comme un composant physiquement séparé et la plaque de substrat étant composée de plusieurs segments de plaque de substrat assemblés, les segments de plaque de substrat étant de préférence reliés de manière détachable entre eux ou de manière détachable à un support de base, et le dispositif d'application de matériau étant de préférence conçu pour appliquer des couches sur plusieurs segments de plaque de substrat en un seul cycle de travail, et/ou
- le mouvement entre le dispositif d'application de matériau et la surface selon la variante c) est réalisé par une combinaison d'un mouvement du dispositif d'application de matériau par rapport au cadre dans un ou plusieurs axes et d'un mouvement du cadre vers la surface dans l'un des axes, et/ou
- la plaque de substrat selon la variante b) est conçue comme un dispositif de transport sans fin, en particulier comme une bande de transport sans fin, la bande de transport sans fin passant de préférence dans une direction (4011) à travers un cadre (4020), le cadre (4020) étant de préférence conçu comme une structure de profil triangulaire en section transversale, dont la surface de base est disposée parallèlement à la surface de la bande de transport sans fin, et/ou
- sur deux, de préférence disposées inclinées par rapport à cette surface de base, barres de cadre (4021, 4022), une tige de guidage (4023) est montée de manière à pouvoir être déplacée le long d'une direction (4024), la tige de guidage, lorsqu'elle est déplacée le long des barres de cadre (4021, 4022), balayant une surface qui est inclinée par rapport à la surface de la bande de transport sans fin (4010), sur laquelle des produits peuvent être construits de manière générative, l'inclinaison de cette surface pouvant de préférence être réglée, une tête d'impression (4040) du dispositif d'application de matériau étant de préférence fixée à la tige de guidage (4023), celle-ci étant montée de manière à pouvoir être déplacée le long de la tige de guidage (4023) dans une direction (4041), la tête d'impression (4040) étant conçue pour effectuer sélectivement une application de matériau, et/ou
- le dispositif d'application de matériau obtient le matériau à partir d'une source de matériau et est conçu pour générer une forme de distribution appropriée pour le matériau et distribuer ensuite le matériau sous forme de bandes ou de cordons, et/ou
- le dispositif de commande est conçu pour ne pas appliquer des couches du matériau durcissable de telle sorte que le plan de couche soit orienté parallèlement à la surface de la plaque de substrat, mais pour appliquer la couche de telle sorte que le plan de couche soit orienté de manière inclinée, à savoir sous un angle supérieur à 0° et inférieur à 90° par rapport à la surface de la plaque de substrat, l'épaisseur du lit de matériau appliqué augmentant continuellement à partir d'une zone dans laquelle exactement une épaisseur de couche repose sur la plaque de substrat jusqu'à une zone dans laquelle les couches appliquées au maximum sont disposées au-dessus de la plaque de substrat, et/ou
- la surface de la plaque de substrat dans la zone dans laquelle les couches sont appliquées est horizontale par rapport à la direction de la gravité.

16. Utilisation d'un dispositif selon la revendication 14 ou 15 de telle manière que les couches successives sont appliquées dans des plans de couche qui sont inclinés par rapport à la surface de la plaque de substrat.

17. Utilisation selon la revendication 16, dans laquelle
a) le mouvement relatif entre la plaque de substrat et le dispositif d'application de matériau est réalisé partiellement ou totalement au moyen d'un dispositif de transport qui effectue un mouvement de transport le long d'au moins un axe et est conçu pour être pivotant autour de trois axes, ou
b) la plaque de substrat est déplacée entre deux processus successifs d'application de couche avec une composante de direction perpendiculaire au plan dans lequel la couche est appliquée, en déplaçant la plaque de substrat dans une direction parallèle à la surface de la plaque de substrat, ou
c) le matériau est appliqué à partir d'un dispositif d'application de matériau qui est disposé sur un cadre qui est disposé sur une surface de telle manière qu'un mouvement du cadre est effectué dans un axe par rapport à la surface.
